# EUROPEAN PATENT SPECIFICATION

(11) **EP 3 270 437 B1**
(45) Date of publication and mention of the grant of the patent: **13.09.2023**
(21) Application number: 16764225.5
(22) Date of filing: 14.03.2016
(51) Int. Cl.: A45C 11/24, H01M 10/42, H01M 10/46, H01M 10/48, H01M 50/256, H01M 50/209, H01M 50/247

(54) **ELECTRICAL ENERGY PROVISION DEVICE**
VORRICHTUNG ZUR BEREITSTELLUNG ELEKTRISCHER ENERGIE
DISPOSITIF DE FOURNITURE D'ÉNERGIE ÉLECTRIQUE

(30) Priority: 13.03.2015 CN 201510111767; 13.03.2015 CN 201510111966; 09.07.2015 CN 201510400765; 31.07.2015 CN 201510465428; 22.10.2015 CN 201510697073; 29.10.2015 CN 201510717601; 15.01.2016 CN 201610028021
(43) Date of publication of application: 17.01.2018
(73) Proprietor: Positec Power Tools (Suzhou) Co., Ltd, Suzhou, Jiangsu 215123 (CN)
(72) Inventor: GAO, Zhendong, Suzhou Jiangsu 215123 (CN); MU, Guoliang, Suzhou Jiangsu 215123 (CN); LIU, Fangshi, Suzhou Jiangsu 215123 (CN)
(74) Representative: Dentons UK and Middle East LLP
(86) International application number: PCT/CN2016/076300
(87) International publication number: WO 2016/146045

(56) References cited:
- WO-A1-2005/058554
- WO-A1-2014/077386
- CN-A- 103 956 441
- CN-U- 204 189 920
- CN-U- 204 541 108
- CN-U- 204 541 109
- US-A1- 2003 090 162
- US-A1- 2005 153 596
- US-A1- 2010 320 969
- US-A1- 2013 025 893
- US-A1- 2014 009 857

## Description

### Technical Field

The present invention relates to an electrical energy supply apparatus.

### Background

Portable power supply emerged many years ago, such as backpack, waist bag, hand buggy etc. comprising batteries and power output lines. But this kind of product is minority and not acceptable by the market.

This kind of product is not popular due to the following three main reasons. First, cost is high. This kind of product usually comprises batteries built-in or is configured with specialized batteries. The user needs to buy an additional suit of batteries except for the batteries for DC tool. Second, poor compatibility. General DC tools usually only comprise one type of battery interface, and do not comprise another type of battery interface to receive the power from portable power supply. So that portable power supply only can be used in minority specialized tools. The existing portable power supply can not meet the requirement that different rated voltage power tools need various power supplies. Third, limited use. General handheld DC tools, such as drill, grass trimmer, etc., are usually configured with 12V to 36V lithium batteries which are light. Using a portable power supply can not improve the user experience significantly, instead brings about some troubles.

Some examples of prior energy supply apparatus are shown in WO2005058554, US2005153596, US2013025893, US2014009857 and WO2014077386.

### Summary

In view of this, an objective of the present invention is to provide an electrical energy supply apparatus having low costs, high compatibility, and high applicability.

The invention is defined in claim 1.

A technical solution used by the present disclosure to resolve the problem in the prior art is an electrical energy supply apparatus. The electrical energy supply apparatus includes: a main body; multiple cells disposed in the main body, where a product of a voltage of the cells and a quantity of the cells is greater than or equal to 80 V; and an electrical energy output device, including a flexible connection apparatus, where an end of the flexible connection apparatus is electrically connected to the cells, an electrical energy output interface is disposed at the other end of the flexible connection apparatus, and the electrical energy output interface is connected to an external power tool, and supplies electrical energy to the external power tool, where an output voltage of the electrical energy output interface is above 80 V.

Preferably, the electrical energy output interface matches a battery pack mounting interface of the external power tool.

Preferably, the electrical energy output interface is detachably connected to the flexible connection apparatus.

Preferably, the electrical energy supply apparatus further includes a wearable component connected to the main body, and the wearable component includes a shoulder belt and/or a waist belt.

Preferably, the electrical energy supply apparatus further includes at least one battery pack housing, the multiple cells are received in the at least one battery pack housing, the battery pack housing has a battery pack interface, and the battery pack interface matches the battery pack mounting interface of the external power tool. At least one battery pack receiving recess is disposed at the main body, the battery pack receiving recess has a receiving interface matching the battery pack interface, and the battery pack housing is detachably mounted at the battery pack receiving recess.

Preferably, the cells received in the battery pack housing form at least two standard battery units, the standard battery unit includes a positive terminal and a negative terminal, and multiple cells electrically connected to each other are disposed between the positive terminal and the negative terminal.

Preferably, the product of the voltage of the cells and the quantity of the cells is approximately 120 V, and the output voltage of the electrical energy output interface is approximately 120 V.

The present invention provides another an electrical energy supply apparatus. The electrical energy supply apparatus includes: a main body; and multiple cells disposed in the main body, where a product of a nominal voltage of each cell and a quantity of the cells is greater than or equal to 60 V; an electrical energy output device, including a flexible connection apparatus, where an input end of the flexible connection apparatus is electrically connected to the cells, an electrical energy output interface is disposed at an output end of the flexible connection apparatus, and the electrical energy output interface is connectable to an external power tool to supply electrical energy to the external power tool; and a conversion circuit, converting a voltage of a cell into an output voltage of the electrical energy output interface, where when the conversion circuit is in a first state, the electrical energy output interface outputs a first voltage, when the conversion circuit is in a second state, the electrical energy output interface outputs a second voltage, and the first voltage is less than the second voltage; wherein the conversion circuit comprising a series-parallel circuit including a switch device, wherein a quantity of the switch devices is less than a quantity of the standard battery units by one, wherein the switch device is disposed between two adjoined standard battery units, each switch device including two relays, separately forming the first subswitch and the second subswitch, wherein the first subswitch and the second subswitch are linked via an optical coupler, wherein when the first subswitch is turned on, the optical coupler is triggered to enable the second subswitch to be turned on.

Preferably, the electrical energy output interface matches a battery pack mounting interface of the external power tool.

Preferably, the electrical energy output interface is detachably connected to the flexible connection apparatus.

Preferably, the electrical energy supply apparatus further includes a wearable component connected to the main body, and the wearable component includes a shoulder belt and/or a waist belt.

Preferably, the electrical energy supply apparatus further includes at least one battery pack housing, the multiple cells are received in the at least one battery pack housing, the battery pack housing has a battery pack interface, and the battery pack interface matches the battery pack mounting interface of the external power tool. At least one battery pack receiving recess is disposed at the main body, the battery pack receiving recess has a receiving interface matching the battery pack interface, and the battery pack housing is detachably mounted at the battery pack receiving recess.

Preferably, the first voltage is no greater than 60 V, and the second voltage is no less than 60 V.

Preferably, the product of the voltage of the cells and the quantity of the cells is 120 V, and the second voltage is 80 V or 120 V.

Preferably, the first voltage is 20 V or 40 V or 60 V.

The cells form at least two standard battery units, preferably the standard battery unit includes a positive terminal and a negative terminal, and multiple cells electrically connected to each other are disposed between the positive terminal and the negative terminal.

Preferably, the conversion circuit includes a first series-parallel circuit and a second series-parallel circuit. When the conversion circuit is in the first state, the standard battery units form a first series and/or parallel relationship via the first series-parallel circuit. When the conversion circuit is in the second state, the standard battery units form a second series and/or parallel relationship via the second series-parallel circuit.

Preferably, the electrical energy output device includes a first electrical energy output device and a second electrical energy output device. The first series-parallel circuit is disposed in the first electrical energy output device. The second series-parallel circuit is disposed in the second electrical energy output device.

Preferably, the electrical energy output device includes a first electrical energy output device and a second electrical energy output device. The first electrical energy output device outputs the first voltage, and the second electrical energy output device outputs the second voltage.

Preferably, the main body further includes a monitoring apparatus. The monitoring apparatus monitors a signal at the electrical energy output interface. The conversion circuit adjusts the output voltage of the electrical energy output interface according to a signal detected by the monitoring apparatus.

Preferably, the electrical energy supply apparatus further includes an output component. The electrical energy output device is detachably connected to the output component. The conversion circuit converts a voltage of the cells and transfers the converted voltage to the electrical energy output interface via the output component. The conversion circuit adjusts a voltage output to the output component according to a type of the electrical energy output device connected to the output component.

Preferably, a switch is disposed between the conversion circuit and the electrical energy output interface. The electrical energy supply apparatus further includes an output voltage detection unit. The output voltage detection unit detects an output voltage of the conversion circuit. When the output voltage detection unit detects that the output voltage of the conversion circuit is the same as a target voltage needed by the electrical energy output interface, the switch is turned on.

The present invention further provides an electrical energy transmission apparatus. The electrical energy transmission apparatus includes: a main body; an input component, disposed on the main body, and connected to multiple cells; an output component, disposed on the main body, and at least including a first DC device interface and a second DC device interface; an adapter component, disposed on the main body, and transferring electrical energy from the input component to the output component.

Preferably, the first DC device interface and the second DC device interface have different structures.

Preferably, an output voltage of the first DC device interface is less than an output voltage of the second DC device interface.

Preferably, the main body further includes an interlock circuit disposed between the first DC device interface and the second DC device interface. When an electrical device is connected to the first DC device interface, the interlock circuit controls the second DC device interface not to output electrical energy.

Preferably, the main body further includes an interlock structure disposed between the first DC device interface and the second DC device interface. When an electrical device is connected to the first DC device interface, the interlock structure prevents the second DC device interface from connecting an electrical device.

Preferably, the output component further includes an AC device interface, and the AC device interface outputs an AC power.

The present disclosure further provides another electrical energy transmission apparatus. The electrical energy transmission apparatus includes: a main body; an input component, disposed on the main body, and connected to multiple cells; an output component, disposed on the main body, and including a DC device interface, where the DC device interface includes a positive terminal, a negative terminal, and a recognition terminal, and the recognition terminal detects a type of an electrical device connected to the output component; and an adapter component, disposed on the main body, and transferring electrical energy from the input component to the output component, where the adapter component receives a signal of the recognition terminal and outputs corresponding electrical energy to the positive terminal and the negative terminal.

The present disclosure further provides another an electrical energy supply apparatus. The electrical energy supply apparatus includes: multiple cells, and an electrical energy transmission apparatus.

In view of this, the present disclosure further provides a battery pack receiving apparatus having low costs, high compatibility, and high applicability and a battery pack system including the battery pack receiving apparatus.

A technical solution used by the present disclosure to resolve the problem in the prior art is: A wearable battery pack receiving apparatus includes: a main body; a wearable component connected to the main body, where the wearable component includes a shoulder belt and/or a waist belt; at least one battery pack receiving recess disposed on the main body and used to receive a battery pack, where the battery pack receiving recess has a receiving interface matching a battery pack interface of the battery pack; and an electrical energy output device electrically connected to the receiving interface, where an electrical energy output interface is disposed on the electrical energy output device, and the electrical energy output interface matches a battery pack mounting interface of an external power tool. The battery pack receiving apparatus further includes: a transformer located between the electrical energy output interface and the receiving interface, where the transformer converts an input voltage at an end of the receiving interface into a rated output voltage at an end of the electrical energy output interface; and a voltage regulator connected to the transformer, where the voltage regulator controls the transformer to adjust a value of the rated output voltage.

Preferably, an adjustment range of the value of the rated output voltage is 20 V to 120 V

Preferably, the voltage regulator is a monitoring apparatus. The monitoring apparatus monitors a signal or parameter at the electrical energy output interface, and adjusts the value of the rated output voltage according to the signal or parameter.

Preferably, the electrical energy output interface has various types. The various types of electrical energy output interfaces are interchangeably mounted on the wearable battery pack receiving apparatus. The monitoring apparatus monitors a signal or parameter representing a type of the electrical energy output interface, and adjusts the value of the rated output voltage according to the type.

Preferably, the monitoring apparatus monitors signal or parameter representing a type of the power tool, and adjusts the value of the rated output voltage according to the type.

Preferably, the voltage regulator is an operation interface for a user to specify the value of the rated output voltage.

Preferably, at least one receiving interface is the same as the battery pack mounting interface of the external power tool.

Preferably, the battery pack receiving apparatus is a back pack, the main body has a bottom for being attached to the back of a user, multiple battery pack receiving recesses are disposed on the main body, and the battery pack receiving recesses are tiled at the bottom.

Preferably, the battery pack receiving apparatus further includes a charger for charging a received battery pack. The charger has a charging interface that can be connected to an external power supply.

Preferably, multiple battery pack receiving recesses are disposed on the main body. A shock absorber structure is disposed between the receiving recesses.

Preferably, a vent hole is provided on the main body.

Preferably, the main body includes a bag body and a cover. The receiving recess is disposed in the bag body. The cover operatively closes and openes the bag body. The cover includes a waterproof layer.

Preferably, the main body and/or the wearable component include/includes an insulation protection layer.

The present disclosure further provides a wearable battery pack system. The wearable battery pack system includes the foregoing wearable battery pack receiving apparatus, and at least one battery pack. The battery pack includes a battery pack interface. The battery pack interface matches at least one of the receiving interfaces.

Preferably, the battery pack is elongated, and the thickness of a thinnest position of a part, receiving a battery, of the battery pack is less than 5 cm.

Preferably, at most two layers of batteries are received in the thickness direction of the battery pack.

Preferably, the battery pack at least includes a first body and a second body that are connected in a mutually displaceable manner. The first body and the second body separately receive several batteries. The battery pack interface is arranged on the first body.

Preferably, a housing of the battery pack is made of a flexible material.

Preferably, a rated voltage of the battery pack is greater than 80 V

Preferably, there are multiple battery packs, and a sum of rated voltages of the battery packs is greater than 80 V.

Compared with the prior art, a beneficial effect of the present disclosure is: the wearable battery pack receiving apparatus has an adjustable output voltage, and can adapt to various different types of power tools.

In view of this, an objective of the present disclosure is to provide a working system in which a DC power supply can drive an AC device, and a corresponding electrical energy transmission apparatus and a corresponding electrical energy supply apparatus.

A technical solution used by the present disclosure to resolve the problem in the prior art is: An electrical energy transmission apparatus includes:
an input component, connected to a DC energy storage component; an output component, including an AC device interface used to connect an AC device; and an adapter component, transferring electrical energy from the input component to the output component, where the AC device interface includes an AC device connection terminal, and the AC device connection terminal can output DC electrical energy.

Preferably, the AC device connection terminal can output AC electrical energy.

Preferably, the AC device connection terminal includes a first port. The first port can selectively output AC electrical energy and DC electrical energy.

Preferably, the AC device connection terminal includes a first port and a second port. The first port outputs DC electrical energy, and the second port outputs AC electrical energy.

Preferably, the AC device connection terminal includes a standard AC socket.

Preferably, a voltage of the DC electrical energy is a standard AC voltage ± 20 V

Preferably, the electrical energy transmission apparatus further includes an AC-DC inverter. The AC electrical energy is provided by the inverter.

Preferably, an output power of the AC working electrical energy is less than 300 W.

Preferably, an output power of the AC working electrical energy is less than 200 W.

Preferably, the electrical energy transmission apparatus further includes an output selection module for selecting a working energy output mode of the AC device connection terminal.

Preferably, the electrical energy transmission apparatus further includes a detection unit for detecting a working parameter related to a characteristic of the AC device.

Preferably, the detection unit controls the AC device connection terminal to output, before outputting working energy, test energy to detect the working parameter.

Preferably, the test energy is less than the working energy.

Preferably, the detection unit monitors the test energy, and when an output power of the test energy is less than a preset value, stops outputting the test energy.

Preferably, the output power of the AC working electrical energy is less than 300 W. The detection unit monitors the test energy, and when output duration of the test energy reaches a preset time, stops outputting the test energy.

Preferably, the working parameter includes a DC working parameter under DC test energy and an AC working parameter under AC test energy.

Preferably, the AC working parameter is measured after a set time.

Preferably, the set time is 2 seconds.

Preferably, the DC working parameter is measured within a set time.

Preferably, the set time is 1 second.

Preferably, when the working parameter meets a DC output condition, the AC device connection terminal outputs DC working electrical energy.

Preferably, the DC output condition is that a DC test current value and an AC test current value meet a preset relationship.

Preferably, the preset relationship is: a DC working current value is less than five times of an AC working current value.

Preferably, the preset relationship is that a DC working current is greater than the preset value, and is less than five times of the AC working current value.

Preferably, when the working parameter meets an AC output condition, the AC device connection terminal outputs an AC working electrical energy.

Preferably, the AC output condition is: a power of the AC device less than the preset value.

Preferably, the preset value is less than 300 W.

Preferably, the AC output condition is that a test current is less than the preset value.

Preferably, when the working parameter meets a turn-off condition, the AC device connection terminal does not output electrical energy.

Preferably, the turn-off condition is: the DC working current value and the AC working current value meet a preset relationship.

Preferably, the preset relationship is: the DC working current value is greater than five times of the AC working current value, or the DC working current value is greater than the AC working current value by more than 10 A.

Preferably, the preset relationship is that an AC working current is greater than the preset value.

Preferably, the DC energy storage component is a battery pack. The input component includes a battery pack interface for connecting the battery pack.

Preferably, the input component has multiple battery pack interfaces.

Preferably, at least two battery pack interfaces are not the same as each other.

Preferably, at least two battery pack interfaces are the same.

Preferably, the electrical energy transmission apparatus further includes a DC device interface.

Preferably, the DC device interface can output multiple different voltages.

Preferably, the DC device interface includes multiple DC device connection terminals, where at least two DC device connection terminals output different voltages.

Preferably, the DC device interface includes one DC device connection terminal. The DC device connection terminal selectively outputs one of multiple different voltages.

Preferably, at least one of the multiple output voltages is between 20 V and 120 V

Preferably, the output voltages include at least two of 20 V, 40 V, 60 V, 80 V, 100 V, and 120 V

Preferably, at least one of the output voltages is greater than or equal to 60 V

Preferably, the electrical energy transmission apparatus further includes an adapter for connecting a DC device to the DC device interface.

Preferably, an output interface of the adapter matches a battery pack interface of a specific power tool.

Preferably, there are multiple adapters. Output interfaces of at least two adapters are different to connect different power tools.

Preferably, a DC output interface recognizes types of the adapters to output different voltages.

Preferably, the electrical energy transmission apparatus may be a wearable device.

The present disclosure further provides another an electrical energy supply apparatus, including any electrical energy transmission apparatus in the foregoing, and further including an energy storage component. The energy storage component includes a primary energy storage module, a secondary energy storage module, and a tertiary energy storage module. The primary energy storage module is a battery pack detachably mounted on the electrical energy transmission apparatus. The secondary energy storage module is a standard battery unit located in the battery pack and has an independent output terminal. The energy storage component includes multiple secondary energy storage modules. The secondary energy storage modules have a same voltage, and each secondary energy storage module includes multiple tertiary energy storage modules. The tertiary energy storage module is a cell located in the secondary energy storage module.

Preferably, the output terminal of the secondary energy storage module is arranged on a housing of the battery pack.

Preferably, the electrical energy transmission apparatus externally outputs different voltages by changing a series and/or parallel relationship between the secondary energy storage modules.

Preferably, the energy storage apparatus includes multiple primary energy storage modules.

Preferably, at least one primary energy storage module includes multiple secondary energy storage modules.

Preferably, at least two primary energy storage modules have different quantities of secondary energy storage modules.

Preferably, at least one primary energy storage module only includes one secondary energy storage module.

Preferably, a voltage of the secondary energy storage module is a divisor of a standard AC voltage.

Preferably, a voltage of the primary energy storage module is a divisor of a standard AC voltage.

Preferably, a voltage of the secondary energy storage module is 20 V

Preferably, the energy storage apparatus includes 6 secondary energy storage modules.

Preferably, at least one primary energy storage module includes 1 secondary energy storage module.

Preferably, at least one primary energy storage module includes 3 secondary energy storage modules.

Preferably, the secondary energy storage module includes an independent control circuit.

The present disclosure further provides a working system, including any electrical energy supply apparatus in the foregoing, and further including a power tool.

Preferably, the power tool is an AC power tool.

Preferably, the power tool is a DC power tool.

Preferably, a battery pack interface of the DC power tool is the same as one of battery pack interfaces of an electrical energy transmission apparatus.

The present disclosure further provides an electrical energy transmission method. The electrical energy transmission method includes the following steps: S1. connecting a DC power supply for DC electrical energy; S2. detecting a parameter of a connected AC device; S3. determining whether the parameter meets a DC power output condition; and S4. if a determining result in step S3 is yes, transmitting the DC electrical energy to the AC device.

Preferably, step S2 includes: S21. outputting detection energy to the AC device; and S22. detecting a working parameter of the AC device under the detection energy.

Preferably, the detection energy includes DC detection energy and AC detection energy. The working parameter correspondingly includes a DC working parameter and an AC working parameter.

Preferably, the DC working parameter is a working current value under the DC detection energy. The AC working parameter is a working current value under the AC detection energy. Step S3 includes: comparing a DC working current value with an AC working current value to determine a relationship therebetween, and if the relationship meets a preset relationship, determining that the working parameter meets a DC output condition.

Preferably, the electrical energy transmission method further includes the following steps: S5. determining whether the connected AC device meets an AC power output condition; and S6. if a determining result in step S4 is yes, transmitting AC electrical energy to the AC device.

Preferably, step S5 includes: determining, according to the AC working parameter, whether a power of the AC device is less than a preset value, and if yes, determining that the working parameter meets the AC power output condition.

Preferably, the electrical energy transmission method further includes the following steps: S7. determining whether the connected AC device meets a turn-off condition; and S8. if a determining result in S6 is yes, turning off electrical energy transmission for the AC device.

Preferably, the DC working parameter is a DC current value. The AC working parameter is an AC current value. Step S7 includes: comparing the DC current value with the AC current value to determine a relationship therebetween, and if the relationship meets a preset relationship, determining that the working parameter meets the turn-off condition.

Preferably, the AC value is measured after a preset time after the AC detection energy is output.

Preferably, the DC value is measured within a preset time after the DC detection energy is output.

The present disclosure further provides another electrical energy transmission method for an electrical energy transmission apparatus, including the following steps: S1. connecting a DC power supply for DC electrical energy; S2. detecting a parameter of a connected AC device; S3. determining whether the parameter meets an AC power output condition; and S4. if a determining result in step S3 is yes, transmitting AC electrical energy to the AC device.

Preferably, step S2 includes: sending AC detection energy to the AC device; and detecting a working parameter related to the AC device under the AC detection energy.

Preferably, step S3 includes: determining, according to the working parameter, whether a power of the AC device is less than a preset value, and if yes, determining that the AC power output condition is met.

The present disclosure further provides an electrical energy supply apparatus. The electrical energy supply apparatus includes an electrical energy transmission apparatus and an energy storage component. The energy storage component includes a primary energy storage module. The primary energy storage module includes several secondary energy storage modules. The secondary energy storage modules include several tertiary energy storage modules. The primary energy storage module includes a battery pack. The battery pack is detachably mounted on the electrical energy transmission apparatus. The secondary energy storage module is a standard battery unit located in the battery pack and has an independent output terminal. The energy storage component includes multiple secondary energy storage modules. The secondary energy storage modules have a same voltage, and each secondary energy storage module includes multiple tertiary energy storage modules. The tertiary energy storage module includes a cell.

Preferably, the electrical energy transmission apparatus externally provides multiple output voltages by changing a series and/or parallel relationship between the secondary energy storage modules.

Preferably, an output voltage of the electrical energy supply apparatus is N times as large as a voltage value of a secondary module.

Preferably, N is less than or equal to 15.

Preferably, the output terminal of the secondary energy storage module is arranged on a housing of the battery pack.

Preferably, a voltage of the primary energy storage module is a sum of voltages of the secondary energy storage modules.

Preferably, the energy storage apparatus includes at least one primary energy storage module.

Preferably, the energy storage apparatus includes multiple primary energy storage modules.

Preferably, a total quantity of the primary energy storage modules is an odd number, and a single primary module includes even-numbered secondary modules.

Preferably, a total quantity of the primary energy storage modules is an even number, and a single primary module includes odd-numbered secondary modules or even-numbered secondary modules.

Preferably, at least one primary energy storage module includes multiple secondary energy storage modules.

Preferably, at least two primary energy storage modules have different quantities of secondary energy storage modules.

Preferably, at least one primary energy storage module only includes one secondary energy storage module.

Preferably, a voltage of the secondary energy storage module is a divisor of a standard AC voltage.

Preferably, a voltage of the primary energy storage module is a divisor of a standard AC voltage.

Preferably, a voltage of the secondary energy storage module is one of 20 V, 18 V, 16 V, 14.4 V, 12 V, 19.6 V, 24 V, 36 V or 28 V

Preferably, an energy storage component includes 6 secondary energy storage modules.

Preferably, at least one primary energy storage module includes 1 secondary energy storage module.

Preferably, at least one primary energy storage module includes 3 secondary energy storage modules.

Preferably, the secondary energy storage module includes an independent control circuit.

Preferably, the electrical energy transmission apparatus includes a controller. When the electrical energy supply apparatus is working, the controller monitors a mounting condition of the primary energy storage module, and correspondingly adjusts the series and/or parallel relationship between the secondary energy storage modules to keep the output voltage unchanged.

Preferably, the electrical energy transmission apparatus includes a controller. When the electrical energy supply apparatus is working, the controller monitors failure conditions of the primary energy storage module and/or the secondary energy storage module. If a failure occurs, the controller blocks the primary energy storage module and/or the secondary energy storage module that has a failure, and correspondingly adjusts the series and/or parallel relationship between the secondary energy storage modules to keep the output voltage unchanged.

Preferably, the cell is a lithium cell.

Preferably, the electrical energy transmission apparatus includes an output component. The output component includes a DC output interface. The DC output interface outputs the multiple output voltages.

Preferably, a DC device interface includes multiple DC device connection terminals. At least two DC device connection terminals output different output voltages.

Preferably, a DC device interface includes one DC device connection terminal. The DC device connection terminal selectively outputs one of multiple different output voltages.

Preferably, at least one of the multiple output voltages is between 20 V and 120 V

Preferably, the output voltages include at least two of 20 V, 40 V, 60 V, 80 V, 100 V, and 120 V

Preferably, at least one of the output voltages is greater than 60 V

Preferably, the electrical energy supply apparatus further includes an adapter for connecting a DC device to the DC device interface.

Preferably, an output interface of the adapter matches a battery pack interface of a specific power tool.

Preferably, there are multiple adapters. Output interfaces of at least two adapters are different to connect different power tools.

Preferably, the DC output interface recognizes types of the adapters to output different voltages.

The present disclosure further provides a battery pack. The battery pack includes multiple secondary energy storage modules. The secondary energy storage module is a standard battery unit located in the battery pack and has an independent output terminal. An energy storage component includes multiple secondary energy storage modules. The secondary energy storage modules have a same voltage, and each secondary energy storage module includes multiple tertiary energy storage modules. The tertiary energy storage module is a cell located in the secondary energy storage module.

Preferably, the output terminal of the secondary energy storage module is arranged on a housing of the battery pack.

Preferably, the secondary energy storage module includes an independent control circuit.

Preferably, a voltage of the secondary energy storage module is a divisor of a standard AC voltage.

Preferably, a voltage of a primary energy storage module is a divisor of a standard AC voltage.

Preferably, a voltage of the secondary energy storage module is 20 V

Preferably, at least one primary energy storage module includes 1 secondary energy storage module.

Preferably, at least one primary energy storage module includes 3 secondary energy storage modules.

The present disclosure further provides an electrical energy transmission apparatus. The electrical energy transmission apparatus includes an input component, an output component, and an adapter component. The input component is connected to an energy storage component to receive electrical energy. The output component is connected to an electrical device to output the electrical energy. The adapter component transfers the electrical energy from the input component to the output component. The energy storage component includes a primary energy storage module, a secondary energy storage module, and a tertiary energy storage module. The primary energy storage module is a battery pack detachably mounted on the electrical energy transmission apparatus. The secondary energy storage module is a standard battery unit located in the battery pack and has an independent output terminal. The energy storage component includes multiple secondary energy storage modules. The secondary energy storage modules have a same voltage, and each secondary energy storage module includes multiple tertiary energy storage modules. The tertiary energy storage module is a cell located in the secondary energy storage module. An input port of the input component is connected to an output interface of each secondary energy storage module. The adapter component provides different output voltages to the output component by changing a series and/or parallel relationship between the secondary energy storage modules.

Preferably, the adapter component correspondingly changes, according to a feature of a device connected to the output component, the series and/or parallel relationship between the secondary energy storage modules and outputs a specific output voltage.

Preferably, the output component includes an output port. Multiple determining electrodes are built in the output port. The adapter component provides corresponding specific output voltages to the output component according to connection conditions of the determining electrodes.

Preferably, the electrical energy transmission apparatus further includes an adapter, including an output terminal and an input terminal, the input terminal is connected to the output port of the output component. A feature electrode is disposed on the input terminal. The adapter component determines, according to the feature electrode connected to the determining electrode, an output voltage to be output.

Preferably, the electrical energy transmission apparatus may be a wearable device.

The present disclosure further provides an electrical energy transmission apparatus, which is specifically as follows: The electrical energy transmission apparatus includes: an input interface, used to connect a DC energy storage component and receive electrical energy of the DC energy storage component; and an AC device interface, electrically connected to the input interface, where the AC device interface is used to connect an AC device and supply power to the AC device, and the AC device interface can output DC electrical energy.

Preferably, the electrical energy transmission apparatus further includes a control circuit located between the input interface and the AC device interface. The control circuit controls transfer of electrical energy from the input interface to the AC device interface.

Preferably, the control circuit includes an AC driving unit. The AC driving unit converts DC electrical energy received by the input interface into AC electrical energy and provides the AC electrical energy to the AC device interface.

Preferably, the AC device interface includes an AC device connection terminal. The AC device connection terminal is a single port. The AC device connection terminal can selectively output DC electrical energy and AC electrical energy.

Preferably, the AC device interface includes two AC device connection terminals. The AC device connection terminal is a single port. One of the AC device connection terminals can output DC electrical energy, and the other of the AC device connection terminals can output AC electrical energy.

Preferably, the AC device connection terminal is a standard AC socket.

Preferably, a voltage of the DC electrical energy is between 100 volts and 140 volts or is between 200 V and 260 V.

Preferably, an output power of the AC electrical energy is less than 300 W.

Preferably, an output power of the AC electrical energy is less than 200 W.

Preferably, the control circuit includes a DC driving unit, an AC driving unit, a detection unit, an output selection unit, and a controller. The DC driving unit outputs, in a DC manner, electrical energy that is supplied from the input interface. The AC driving unit outputs, in an AC manner, electrical energy that is supplied from the input interface. The output selection unit alternatively connects the DC driving unit and the AC driving unit to the AC device interface. The detection unit detects a running parameter of the control circuit. The controller connects and controls the DC driving unit, the AC driving unit, the detection unit, and the output selection unit.

Preferably, the controller includes a test control unit, a detection control unit, a safety determining unit, and an output control unit. The test control unit controls the output selection unit to enable the control circuit to output test energy to the AC device interface. The detection control unit receives a test running parameter measured by the detection unit under the test energy. The safety determining unit determines, according to the test running parameter, whether the AC device connected to the AC device interface is suitable for being driven by DC electrical energy or AC electrical energy to work. The output control unit receives a determining result of the safety determining unit, controls the output selection unit to correspondingly connect one of the DC driving unit and the AC driving unit to the AC device interface, or controls the control circuit to turn off electrical energy output to the AC device interface.

Preferably, when the safety determining unit determines that the AC device connected to the AC device interface is suitable for being driven by DC electrical energy, the output control unit controls the output selection unit to connect the DC driving unit to the AC device interface.

Preferably, when the safety determining unit determines that the AC device connected to the AC device interface is suitable for being driven by AC electrical energy, the output control unit controls the output selection unit to connect the AC driving unit to the AC device interface.

Preferably, when the safety determining unit determines that the AC device connected to the AC device interface is neither suitable for being driven by AC electrical energy nor suitable for being driven by DC electrical energy, the output control unit controls the control circuit to turn off electrical energy output to the AC device interface.

Preferably, the test energy includes DC test energy and AC test energy. Output duration and/or output powers of the DC test energy and the AC test energy are restricted by preset parameters.

Preferably, the running parameter includes a DC running parameter under DC test energy and an AC running parameter under AC test energy.

Preferably, the safety determining unit determines, according to a relative relationship between the DC running parameter and the AC running parameter, whether the AC device is suitable for being driven by DC electrical energy or AC electrical energy to work.

Preferably, the controller includes a test control unit, a detection control unit, a safety determining unit, and an output control unit. The test control unit controls the output selection unit to enable the control circuit to output test energy to the AC device interface. The detection control unit receives a test running parameter measured by the detection unit under the test energy. The safety determining unit determines, according to the test running parameter, whether the AC device connected to the AC device interface is suitable for being driven by DC electrical energy to work. The output control unit receives a determining result of the safety determining unit, controls the output selection unit to correspondingly connect the DC driving unit to the AC device interface, or controls the control circuit to turn off electrical energy output to the AC device interface.

Preferably, the controller includes a test control unit, a detection control unit, a safety determining unit, and an output control unit. The test control unit controls the output selection unit to enable the control circuit to output test energy to the AC device interface. The detection control unit receives a test running parameter measured by the detection unit under the test energy. The safety determining unit determines, according to the test running parameter, whether the AC device connected to the AC device interface is suitable for being driven by AC electrical energy to work. The output control unit receives a determining result of the safety determining unit, and controls the output selection unit to correspondingly connect the AC driving unit to the AC device interface, or controls the control circuit to turn off electrical energy output to the AC device interface.

The present disclosure further provides an electrical energy supply apparatus. Specifically, an electrical energy supply apparatus includes any electrical energy transmission apparatus in the foregoing, and further includes a DC energy storage component.

The present disclosure further provides a working system, including any electrical energy supply apparatus in the foregoing, and further including an AC device that is selectively connected to an AC device interface.

The present disclosure further provides an electrical energy transmission system. Specifically, an electrical energy transmission system includes an electrical energy transmission apparatus and an adapter. The electrical energy transmission apparatus includes a DC device interface. Multiple groups of output terminals are arranged on the DC device interface. Each group of terminals includes positive and negative electrodes. The adapter is detachably connected to the DC device interface. An input interface of the adapter matches an output interface of a DC device. An output interface of the adapter includes a group of output terminals. The output terminals include positive and negative electrodes. A series-parallel circuit is disposed between multiple groups of input terminals and one group of output terminals of the adapter. The series-parallel circuit configures a series and/or parallel relationship between the multiple groups of terminals and then transfers electrical energy to the output terminals.

Preferably, the electrical energy transmission system further includes the input interface. The multiple groups of input terminals are arranged on the input interface. Each group of terminals includes positive and negative electrodes.

Preferably, the electrical energy transmission system includes multiple adapters interchangeably connected to the DC device interface. At least two output voltages are not the same as each other.

Preferably, the multiple groups of input terminals of the input interface and multiple groups of output terminals of the DC device interface have the same quantity, and one input terminal is connected to one output terminal.

Preferably, the multiple groups of input terminals of the input interface and multiple groups of output terminals of the DC device interface have the same quantity, and two input terminals are connected to one output terminal.

Preferably, the input interface includes at least one battery pack interface. The battery pack interface includes the multiple groups of input terminals.

Preferably, the input interface includes multiple battery pack interfaces. Each battery pack interface includes at least one group of input terminals.

Preferably, there are 6 groups or 12 groups of input terminals of the input interface. There are 6 groups of output terminals of the DC device interface.

Preferably, the series-parallel circuit of the adapter connects every two input terminals of the 6 groups of input terminals in parallel, and then connects the input terminals to the output terminals of the adapter in series.

Preferably, the series-parallel circuit of the adapter connects every three input terminals of the 6 groups of input terminals in parallel, and then connects the input terminals to the output terminals of the adapter in series.

Preferably, the series-parallel circuit of the adapter connects the 6 groups of input terminals to each other in parallel, and then connects the input terminals to the output terminals of the adapter.

Preferably, the series-parallel circuit of the adapter connects the 6 groups of input terminals to each other in series, and then connects the input terminals to the output terminals of the adapter.

The present disclosure further provides an electrical energy providing system, including any electrical energy transmission system in the foregoing, and further including a DC energy storage component.

Preferably, each battery pack and each interface further include at least one group of signal terminals.

Preferably, the signal terminals include a temperature signal terminal.

Preferably, an adapter connects a DC device to an electrical energy transmission apparatus. Multiple groups of terminals are disposed on an input interface of the adapter. Each group of terminals includes positive and negative electrodes. A series-parallel circuit is built in the adapter.

Preferably, there are 6 groups or 12 groups of input terminals of the input interface. There are 6 groups of output terminals of a DC device interface.

Preferably, the series-parallel circuit of the adapter connects every two input terminals of the 6 groups of input terminals in parallel, and then connects the input terminals to the output terminals of the adapter in series.

Preferably, the series-parallel circuit of the adapter connects every three input terminals of the 6 groups of input terminals in parallel, and then connects the input terminals to the output terminals of the adapter in series.

Preferably, the series-parallel circuit of the adapter connects the 6 groups of input terminals to each other in parallel, and then connects the input terminals to the output terminals of the adapter.

Preferably, the series-parallel circuit of the adapter connects the 6 groups of input terminals to each other in series, and then connects the input terminals to the output terminals of the adapter.

The present disclosure further provides an adapter. Specifically, an adapter connects a DC device to an electrical energy transmission apparatus, and a protection circuit is disposed in the adapter.

Preferably, the protection circuit includes at least one of an overcurrent protection circuit, an undervoltage protection circuit, and an overtemperature protection circuit.

The present disclosure further provides an electrical energy transmission apparatus. Specifically, an electrical energy transmission apparatus includes an output port, used to connect a power supply connector of an electrical device. A start switch is disposed in the output port. The start switch controls the electrical energy transmission apparatus to be turned on or off. When the power supply connector is connected to the output port, the start switch is triggered to be turned on.

Preferably, the start switch is a micro switch.

Preferably, when the power supply connector is detached from the output port, the start switch is triggered to be turned off.

Preferably, the output port is an AC device connection terminal.

The present disclosure further provides an electrical energy transmission apparatus. Specifically, the electrical energy transmission apparatus includes a detection unit, a controller, and a power-off unit. The detection unit detects a load condition of a connected electrical device. The power-off unit selectively makes a turn-off to stop electrical energy output of the electrical energy transmission apparatus to the electrical device. The controller connects the detection unit to the power-off unit. The controller instructs, when the load condition meets a preset condition, the power-off unit to make a turn-off. The preset condition is that the load is less than a preset value and reaches preset duration.

Preferably, the detection unit detects a current in a control point circuit to detect the load condition of the electrical device.

The present disclosure further provides another electrical energy transmission apparatus. Specifically, an electrical energy transmission apparatus includes an input interface, a control circuit, and an output interface. The output interface includes multiple connection terminals for connecting an external device. An interlock mechanism is disposed between multiple connection terminals. The interlock mechanism enables only one of the multiple connection terminals to convey electrical energy to an external electrical device at a same moment. Preferably, the output interface includes a DC device interface and an AC device interface. The DC device interface and the AC device interface separately include at least one connection terminal.

Preferably, the interlock mechanism is a mechanical interlock mechanism.

Preferably, the mechanical interlock mechanism includes locking pieces disposed on the connection terminals and linkage pieces between the locking pieces. The locking piece moves between a locking position and an unlocking position. At the locking position, the locking piece forbids the connection terminals from being electrically connected to a power supply terminal of the electrical device. At the unlocking position, the locking piece allows the connection terminals to be electrically connected to the power supply terminal of the electrical device. When any connection terminal is electrically connected to the power supply terminal, the locking piece of the connection terminal is fixed at the unlocking position, and the locking piece drives the linkage piece to enable all other locking pieces to be fixed at the locking position.

Preferably, the connection terminal is a jack. There are two jacks. The mechanical interlock mechanism is one locking rod. The locking rod is located between the two jacks. Two ends of the locking rod movably extend into the two jacks separately to form two locking pieces. A part between the two ends forms the linkage piece.

Preferably, the interlock mechanism is an electronic interlock mechanism.

The present disclosure further provides a working system. Specifically, a working system includes a battery pack, an electrical energy transmission apparatus, and a DC tool. A working voltage of the DC tool is greater than 60 V The battery pack is supported in the working system via a battery pack support apparatus. The electrical energy transmission apparatus is disposed separately from the DC tool. The electrical energy transmission apparatus outputs electrical energy to the DC tool via a cable electrical energy output part. The battery pack support apparatus is only arranged on the electrical energy transmission apparatus. An electrical energy input interface on the DC tool only includes a port for connecting the cable electrical energy output part.

Preferably, the DC tool is a handheld tool.

The present disclosure further provides a DC tool, powered by an electrical energy transmission apparatus disposed separately from the DC tool. The electrical energy transmission apparatus includes a battery pack support structure for supporting the weight of a battery pack thereon. An electrical energy input interface of the electrical energy transmission apparatus only includes a port for connecting a cable electrical energy output part of the electrical energy transmission apparatus.

Preferably, the DC tool is a handheld tool.

The present disclosure further provides another DC tool, where a battery pack cannot be connected on an electrical energy input interface.

The present disclosure further provides a working system. Specifically, a working system includes a battery pack, an electrical energy transmission apparatus, and a push power tool. The push power tool includes a push handle and a main body. A battery pack interface and a cable electrical energy output part interface are disposed on the push power tool, and are respectively used to connect a battery pack and a cable electrical energy output part.

Preferably, the cable electrical energy output part interface is located on the push handle.

Preferably, the cable electrical energy output part interface is located at an upper portion of the push handle.

Preferably, the battery pack interface located on the main body.

Preferably, there are multiple battery pack interfaces.

Preferably, a working voltage of the push power tool is greater than 50 V

Preferably, a working voltage of the push power tool is 120 V There are two battery pack interfaces. A voltage of the battery pack is 60 V

Preferably, the push power tool can only be powered by one of the battery pack and the cable electrical energy output part.

Preferably, the push power tool can be powered by both the battery pack and the cable electrical energy output part.

Preferably, the battery pack interface and the cable electrical energy output part interface of the push power tool are connected in parallel.

Preferably, the push power tool is a lawn mower.

The present disclosure further provides a push tool, where the push tool is any push tool in the foregoing.

The present disclosure further provides an electrical energy transmission apparatus. The electrical energy transmission apparatus includes an input interface, an AC device interface, and a control circuit. The control circuit includes an AC driving unit. The AC driving unit converts a DC power input from the input interface into an AC power and provides the AC power to the AC device interface. The input interface is used to connect a battery pack. The AC power is a square-wave AC power.

Preferably, the AC driving unit includes a bridge circuit.

Preferably, the control circuit includes a DC driving unit. The DC driving unit provides, in a DC power form, the DC power input from the input interface to the AC device interface.

Preferably, a power of the AC driving unit is less than or equal to 2000 watts.

Preferably, a power of the AC driving unit is less than or equal to 1000 watts.

Preferably, a power of the AC driving unit is greater than or equal to 1000 W, 1500 W or 2000 W.

The present disclosure further provides a charger. Specifically, a charger includes a protection circuit, and specifically has an overcharging protection circuit and an overtemperature protection circuit. The overcharging protection circuit provides separate protection for each secondary energy storage module. The overtemperature protection circuit provides separate protection for each battery pack.

Specifically, the charger is integrated in an electrical energy transmission apparatus.

Specifically, two battery packs can only be charged simultaneously, but cannot be charged separately.

The present invention further provides a power supply system, including: a battery pack. The battery pack includes: multiple standard battery units, having a same voltage; a series-parallel circuit, connected to the multiple standard battery units, where the series-parallel circuit selectively configures a series and/or parallel relationship of the multiple standard battery units, to enable the battery pack to output different output voltages in various series and/or parallel relationships; and an output interface, outputting electrical energy of the battery pack. The series-parallel circuit includes a switch device. A quantity of the switch devices is less than a quantity of standard battery units by one. A switch device is disposed between two adjoined standard battery units. Each switch device includes two subswitches. In a turned-off state, a first subswitch connects positive electrodes of two standard battery units, and in a turned-on state, the first subswitch disconnects the positive electrodes of the two standard battery units. In a turned-off state, a second subswitch connects negative electrodes of two standard battery units, and in a turned-on state, the second subswitch connects the negative electrode of the former standard battery unit and a positive electrode of the latter standard battery unit. Two subswitches in each switch device are linked, to have a first state and a second state. In the first state, the two subswitches are both turned on. In the second state, the two subswitches are both turned off. Each switch device is in different state combinations in a controlled manner, to enable the series-parallel circuit to be in different series and/or parallel relationships.

Specifically, the battery pack includes 6 standard battery units and 5 switch devices.

Specifically, the output interface includes multiple positive electrode output terminals corresponding to multiple output voltages. Each output terminal is connected to a terminal switch. Whether the terminal switches are turned on or turned off is linked to a series and/or parallel relationship of the series-parallel circuit, to enable that in a specific series and/or parallel relationship, only a terminal switch of a positive electrode output terminal corresponding to an output voltage in the relationship is turned on, and other terminal switches are turned off. Specifically, the terminal switch is a relay. The relay is controlled by a controller in the power supply system.

Specifically, the switch device is a micro switch. The power supply system further includes an output voltage selection piece. When the output voltage selection piece is in different positions, the micro switches are triggered to be turned on or turned off in different combinations, to configure different series and/or parallel relationships.

Specifically, the micro switch is a dual normally-open/dual normally-closed micro switch.

Specifically, the series and/or parallel relationship includes at least two of the following: 1. all switch devices are in the second state; 2. a sequentially-arranged third switch device is in the first state, and other switch devices are in the second state; 3. a sequentially-arranged second switch device and a sequentially-arranged fourth switch device are in the first state, and other switch devices are in the second state; or 4. all switch devices are in the first state.

Specifically, the switch device is a relay.

Specifically, the relay is a dual normally-open/dual normally-closed relay.

Each switch device includes two relays, separately forming the first subswitch and the second subswitch.

The first subswitch and the second subswitch are linked via an optical coupler. When the first subswitch is turned on, the optical coupler is triggered to enable the second subswitch to be turned on.

Specifically, the power supply system detects a type of a connected electrical device to automatically control the relays to be turned on or off, so as to implement that the battery pack outputs a voltage value corresponding to the type of the electrical device.

Specifically, a switch is disposed between the battery pack and the output interface. The power supply system further includes an output voltage detection unit of the battery pack. The switch is turned on only when the output voltage detection unit detects that an output voltage of the battery pack is the same as a target voltage that the power supply system needs to output.

The present disclosure further provides a power supply system, including a battery pack and an AC driving circuit, to externally output AC electrical energy. The AC driving circuit can output a square-wave or trapezoidal-wave AC power. The AC driving circuit includes a boost circuit to implement that an output voltage of the AC driving circuit is greater than an output voltage of the battery pack.

Specifically, the power supply system further includes a DC driving circuit, to externally output DC electrical energy.

Specifically, a boost amplitude of the boost circuit does not exceed 20%.

Specifically, the AC driving circuit includes an H-bridge circuit, to output a square-wave or trapezoidal-wave AC power.

The present disclosure further provides another power supply system, including a battery pack and a DC driving circuit, to externally output DC electrical energy, where the DC driving circuit outputs an interruptive DC power.

Specifically, an interruption time of the interruptive DC power is less than 0.5 s.

Compared with the prior art, a beneficial effect of the present disclosure is: The application range is wide, and energy can be supplied to various AC and DC tools; the portability is high; the safety is high, and when a DC is used to drive an AC device, a burnout does not occur; and energy conversion efficiency is high.

In view of this, an objective of the present disclosure is to provide a working system in which a DC power supply can drive an AC electrical device, and a corresponding electrical energy transmission apparatus and a corresponding electrical energy supply apparatus.

The present disclosure provides a power supply system, including: a body; a DC output interface and an AC output interface located on the body; a battery pack support apparatus located on the body; a battery pack detachably mounted on the battery pack support apparatus; several standard battery units located in the battery pack, where the standard battery units have a same voltage and all have independent positive and negative electrodes; an interface circuit, located in the body, and connecting the positive and negative electrodes of the standard battery units, to form multiple pairs of positive and negative electrode leads that are independent from each other; a series-parallel circuit located in the body, where the series-parallel circuit configures a series and/or parallel relationship between the multiple pairs of positive and negative electrode leads to form a preset DC voltage; and a DC-AC inverter apparatus, connecting the series-parallel circuit and converting the DC voltage into an AC voltage and providing the AC voltage to the AC output interface, where the series-parallel circuit further connects the DC output interface.

Preferably, the series-parallel circuit forms a 120V DC voltage.

Preferably, the DC-AC inverter apparatus converts the DC voltage into a square-wave or trapezoidal-wave AC power via an H-bridge circuit.

Preferably, the DC output interface and the AC output interface share a discharging protection circuit.

Preferably, the DC output interface and the AC output interface are a same interface.

Preferably, the power supply system further includes: an interface circuit, located in the body, and connecting the positive and negative electrodes of the standard battery units, to form the multiple pairs of positive and negative electrode leads that are independent from each other; a second DC output interface, located in the body, where the second DC output interface has multiple pairs of output positive and negative electrodes, and correspondingly connected to the multiple pairs of positive and negative electrode leads respectively.

Preferably, the power supply system further includes: multiple adapters, alternatively connected to the second DC output interface, where the adapter includes an input terminal, a transmission cable, and an output terminal, multiple pairs of input positive and negative electrodes are arranged on the input terminal, the multiple pairs of input positive and negative electrodes and the multiple pairs of output positive and negative electrodes match one by one, the input positive and negative electrodes are connected to the series-parallel circuit to configure a series and/or parallel relationship between the standard battery units, a specific output voltage is formed at the output terminal of the adapter, and series-parallel circuits of the multiple adapters are different from each other to form different output voltages; and a control circuit, located in the body, and including a discharging protection circuit, where the discharging protection circuit detects an adapter connected to the second DC output interface and selects a discharging protection program for the discharging protection circuit according to the adapter.

Preferably, the power supply system further includes: an interlock structure disposed among the DC output interface, the AC output interface, and the second DC output interface, where when an electrical device is connected to the DC output interface or the AC output interface, the interlock structure enables the second DC output interface not to output electrical energy.

Preferably, the control circuit selects a discharging protection program according to a voltage value formed by the series-parallel circuit.

Preferably, the adapter outputs, to a power supply circuit, an output voltage formed by the series-parallel circuit. The power supply circuit includes a voltage detection apparatus to receive a voltage value of an output voltage.

Preferably, a rated voltage of the standard battery unit is 20 V There are 6 pairs of power supply leads connecting one or more pairs of standard battery units connected to each other in parallel. Series-parallel circuits of different adapters separately form a 20V, 40V or 60V output voltage.

The present disclosure further provides another power supply system. The power supply system includes: a body; a battery pack support apparatus located on the body; a battery pack detachably mounted on the battery pack support apparatus; several standard battery units located in the battery pack, where the standard battery units have a same voltage and all have independent positive and negative electrodes; an interface circuit, located in the body, and connecting the positive and negative electrodes of the standard battery units, to form multiple pairs of positive and negative electrode leads that are independent from each other; a DC output interface, located on the body, having multiple pairs of output positive and negative electrodes, and correspondingly connected to the multiple pairs of positive and negative electrode leads respectively; multiple adapters, alternatively connected to the DC output interface, where the adapter includes an input terminal, a transmission cable, and an output terminal, multiple pairs of input positive and negative electrodes are arranged on the input terminal, the multiple pairs of input positive and negative electrodes and the multiple pairs of output positive and negative electrodes match one by one, the input positive and negative electrodes are connected to a series-parallel circuit to configure a series and/or parallel relationship between the standard battery units, a specific output voltage is formed at the output terminal of the adapter, and series-parallel circuits of the multiple adapters are different from each other to form different output voltages; and a control circuit, located in the body, and including a discharging protection circuit, where the discharging protection circuit detects an adapter connected to the DC output interface and selects a discharging protection program for the discharging protection circuit according to the adapter.

Preferably, the control circuit selects a discharging protection program according to a voltage value formed by the series-parallel circuit.

Preferably, the adapter outputs, to a power supply circuit, an output voltage formed by the series-parallel circuit. The power supply circuit includes a voltage detection apparatus to receive a voltage value of an output voltage.

Preferably, a rated voltage of the standard battery unit is 20 V There are 6 pairs of power supply leads connecting one or more pairs of standard battery units connected to each other in parallel. Series-parallel circuits of different adapters separately form a 20V, 40V or 60V output voltage.

Preferably, the power supply circuit includes a voltage conversion apparatus. The voltage conversion apparatus converts an output voltage received from an adapter into a specific voltage value to supply power to the control circuit.

Preferably, the discharging protection program includes: performing a battery protection action when a discharging current exceeds a preset threshold; or, performing a battery protection action when a discharging voltage is less than a preset threshold.

Preferably, the battery protection action includes: turning off a discharging circuit.

Preferably, the power supply system further includes: a series-parallel circuit located in the body, where the series-parallel circuit configures a series and/or parallel relationship between the multiple pairs of positive and negative electrode leads to form a preset DC voltage; and a DC-AC inverter apparatus, connected to the series-parallel circuit and converting the DC voltage into an AC voltage and providing the AC voltage to an AC output interface, where the series-parallel circuit is further connected to another DC output interface.

Preferably, the DC-AC inverter apparatus converts the DC voltage into a square-wave or trapezoidal-wave AC power via an H-bridge circuit.

Preferably, the another DC output interface and the AC output interface share the discharging protection circuit.

The present disclosure further provides another power supply system, including: a battery pack support apparatus; a battery pack detachably mounted on the battery pack support apparatus; an AC output interface, outputting AC electrical energy; a DC output component, outputting DC electrical energy; and a control circuit, connecting the battery pack to the DC output component and the AC output interface, transferring electrical energy of the battery pack to the DC output component, and converting the electrical energy of the battery pack into AC electrical energy and providing the AC electrical energy to the AC output interface, where a rated output voltage of the AC output interface is N times as large as a rated output voltage of the DC output component, and N is a positive integer less than 10.

Preferably, the rated output voltage of the AC output interface is 120V

Preferably, the rated output voltage of the DC output component is selectively 20V, 40V or 60V

Preferably, the rated output voltage of the DC output component is 20 V, 40 V or 60 V

Preferably, a rated voltage of the standard battery unit is 20 V The rated output voltage of the AC output interface is 6 times as large as a rated voltage of a standard battery unit. A rated output voltage of a DC output interface is 1 time, 2 times, 3 times or 6 times as large as a rated voltage of a standard battery unit.

Preferably, the power supply system includes several battery packs. The several battery packs include multiple standard battery units in total. The standard battery units are the same and all have independent positive and negative electrodes. The rated output voltage of the AC output interface is integer times as large as a rated voltage of a standard battery unit. The rated output voltage of the DC output component is integer times as large as a rated voltage of a standard battery unit.

Preferably, the DC output component includes a DC output interface and an adapter selectively connected to the DC output interface. A series-parallel circuit is built in the adapter. The series-parallel circuit performs series and/or parallel configuration on the standard battery units to obtain a preset rated voltage.

The present disclosure further provides another power supply system, including: a battery pack support apparatus; a battery pack detachably mounted on the battery pack support apparatus; an AC output interface, outputting AC electrical energy; a DC output interface, outputting DC electrical energy; a control circuit, connecting the battery pack to the DC output interface and the AC output interface, transferring electrical energy of the battery pack to the DC output interface, converting the electrical energy of the battery pack into AC electrical energy and providing the AC electrical energy to the AC output interface; an adapter, including an input terminal and an output terminal, where the input terminal is detachably connected to the DC output interface, and the output terminal is detachably connected to an electrical energy input interface of a power tool.

Preferably, the power supply system includes multiple adapters that may be selectively connected to the DC output interface.

Preferably, the control circuit alternatively transfers electrical energy of the battery pack to the DC output interface or the AC output interface.

Preferably, the battery pack support apparatus includes a wearable structure for a user to wear the battery pack support apparatus.

Preferably, the battery pack support apparatus is a back pack. The wearable structure includes a back belt.

Preferably, a battery pack connection interface is disposed on the battery pack support apparatus.

The present disclosure further provides another power supply system, including: a battery pack support apparatus, where the battery pack support apparatus includes a wearable structure for a user to wear the battery pack support apparatus; a battery pack detachably mounted on the battery pack support apparatus; an AC output interface, outputting AC electrical energy; a DC output interface, outputting DC electrical energy; and a control circuit, connecting the battery pack to the DC output interface and the AC output interface, transferring electrical energy of the battery pack to the DC output interface, and converting the electrical energy of the battery pack into AC electrical energy and providing the AC electrical energy to the AC output interface.

Preferably, the battery pack support apparatus is a back pack. The wearable structure includes a back belt.

Preferably, the power supply system further includes an adapter including an input terminal and an output terminal. The input terminal is detachably connected to the DC output interface. The output terminal is detachably connected to an electrical energy input interface of a power tool.

Preferably, the power supply system further includes multiple adapters that may be selectively connected to the DC output interface. A series-parallel circuit is built in the adapters. The series-parallel circuit performs series and/or parallel configuration on the standard battery units to obtain a preset rated voltage.

Preferably, the control circuit alternatively transfers electrical energy of the battery pack to the DC output interface or the AC output interface.

Preferably, a battery pack connection interface is disposed on the battery pack support apparatus.

The present disclosure further provides a power supply platform, including: a battery pack support apparatus; a battery pack mounted on the battery pack support apparatus; an AC output interface, outputting AC electrical energy; a DC output component, selectively outputting DC electrical energy of one of various voltages; a control circuit, connecting the battery pack to a DC output interface and the AC output interface, transferring electrical energy of the battery pack to the DC output component, and converting the electrical energy of the battery pack into AC electrical energy and providing the AC electrical energy to the AC output interface.

Preferably, the battery pack is detachably mounted on the battery pack support apparatus.

Preferably, the DC output component includes the DC output interface and an adapter. A series-parallel circuit is built in the adapter. The series-parallel circuit performs series and/or parallel configuration on the standard battery units to obtain a preset rated voltage.

Preferably, the adapter is a power tool adapter.

Preferably, several standard battery units are built in the battery pack. The standard battery units are isolated from each other and have a same configuration.

Preferably, a rated voltage of the standard battery unit is 20 V

Preferably, there are multiple adapters. Preset voltages are at least two of 20 V, 40 V, 60 V, and 120 V

The present disclosure further provides a power supply system, including: a battery pack support apparatus; a battery pack mounted on the battery pack support apparatus; an AC output interface, outputting AC electrical energy whose rated output voltage is between 110 V and 130 V; and a control circuit, converting the electrical energy of the battery pack into AC electrical energy and providing the AC electrical energy to the AC output interface.

Preferably, the rated output voltage is 120 V

Preferably, the control circuit includes a transformer part and a DC-AC inverter part. The transformer part is a series-parallel circuit. The series-parallel circuit configures a series and/or parallel relationship of the battery pack, and converts a voltage of the battery pack into a rated output voltage of the AC output interface.

Preferably, the control circuit includes a transformer part and a DC-AC inverter part. The DC-AC inverter part converts a DC power into a square-wave AC power or trapezoidal-wave AC power via an H-bridge circuit.

Preferably, the battery pack support apparatus may be a wearable apparatus.

Preferably, the power supply system further includes a DC output interface for outputting DC electrical energy. The control circuit transfers electrical energy of the battery pack to the DC output interface.

The present disclosure further provides another power supply system, including: a battery pack support apparatus; a battery pack mounted on the battery pack support apparatus; an AC output interface, outputting square-wave or trapezoidal-wave AC electrical energy; and a control circuit, converting the electrical energy of the battery pack into AC electrical energy and providing the AC electrical energy to the AC output interface.

Preferably, a rated output voltage of the AC output interface is AC electrical energy between 110 V and 130 V

Preferably, the control circuit includes a transformer part and a DC-AC inverter part. The transformer part is a series-parallel circuit. The series-parallel circuit configures a series and/or parallel relationship of the battery pack, and converts a voltage of the battery pack into a rated output voltage of the AC output interface.

Preferably, the control circuit includes a transformer part and a DC-AC inverter part. The DC-AC inverter part converts a DC power into a square-wave AC power or trapezoidal-wave AC power via an H-bridge circuit.

Preferably, the battery pack support apparatus may be a wearable apparatus.

Preferably, the power supply system further includes a DC output interface for outputting DC electrical energy. The control circuit transfers electrical energy of the battery pack to the DC output interface.

Preferably, the rated output voltage is 120 V

The present disclosure further provides another power supply system, including: a battery pack support apparatus; several battery packs mounted on the battery pack support apparatus, where the several battery packs include multiple standard battery units, and the multiple standard battery units have a same rated voltage; a DC output interface, outputting DC electrical energy; a control circuit, transferring electrical energy of the battery pack to the DC output interface; and an adapter, detachably connected between the DC output interface and an electrical device, where a series-parallel circuit is disposed inside the adapter, and the series-parallel circuit configures a series and/or parallel relationship of the multiple standard battery units to form DC electrical energy having a preset voltage.

Preferably, the power supply system includes multiple adapters, where at least two series-parallel circuits are not the same as each other.

Preferably, the multiple adapters are alternatively connected to the DC output interface.

Preferably, the control circuit includes a lead wire. The lead wire leads out positive and negative electrodes of the standard battery units to the DC output interface. Multiple pairs of output positive and negative electrodes are formed on the DC output interface.

Preferably, there are multiple groups of lead wires. Each group of lead wires includes several pairs of input positive and negative electrodes and a pair of output positive and negative electrodes. The input positive and negative electrodes are joined to the positive and negative electrodes of the standard battery units. The several pairs of input positive and negative electrodes are connected in series or parallel and are then connected to the output positive and negative electrodes.

Preferably, the several pairs of input positive and negative electrodes are connected to each other in parallel and are then connected to the output positive and negative electrodes.

Preferably, circuit configurations of the groups of lead wires are the same as each other.

The present disclosure further provides another power supply system, including: several battery packs, where the several battery packs include multiple standard battery units, and the standard battery units are consistent with each other and all include multiple single batteries; a series-parallel circuit, where the series-parallel circuit by configuring a series and/or parallel relationship between multiple standard battery units to form DC electrical energy having a preset voltage, and the preset voltage is minimally a rated voltage of the standard battery unit.

Preferably, the power supply system further includes a battery pack support apparatus, where the several battery packs are mounted on the battery pack support apparatus; a DC output interface, outputting DC electrical energy; a control circuit, transferring electrical energy of the battery pack to the DC output interface; an adapter, detachably connected between the DC output interface and an electrical device; and a series-parallel circuit, disposed in the adapter, where the series-parallel circuit configures the series and/or parallel relationship between the multiple standard battery units to form DC electrical energy having a preset voltage.

Preferably, the power supply system includes multiple adapters. At least two series-parallel circuits are not the same as each other.

Preferably, the multiple adapters are alternatively connected to the DC output interface.

Preferably, the control circuit includes a lead wire. The lead wire leads out positive and negative electrodes of the standard battery units to the DC output interface. Multiple pairs of output positive and negative electrodes are formed on the DC output interface.

Preferably, there are multiple groups of lead wires. Each group of lead wires includes several pairs of input positive and negative electrodes and a pair of output positive and negative electrodes. The input positive and negative electrodes are joined to the positive and negative electrodes of the standard battery units. The several pairs of input positive and negative electrodes are connected in series or parallel and are then connected to the output positive and negative electrodes.

Preferably, the several pairs of input positive and negative electrodes are connected to each other in parallel and are then connected to the output positive and negative electrodes.

Preferably, circuit configurations of the groups of lead wires are the same as each other.

The present disclosure further provides another power supply system, including: a battery pack support apparatus; a battery pack mounted on the battery pack support apparatus; an AC output interface, outputting AC electrical energy; a DC output interface, outputting DC electrical energy; and a control circuit, connecting the battery pack to the DC output interface and the AC output interface, transferring electrical energy of the battery pack to the DC output interface, and converting the electrical energy of the battery pack into AC electrical energy and providing the AC electrical energy to the AC output interface, where the DC output interface and the AC output interface alternatively output electrical energy externally.

Preferably, an interlock structure is disposed between the DC output interface and the AC output interface. When an external device is connected to one of the DC output interface and the AC output interface, the interlock structure forbids the other to output electrical energy externally.

Preferably, the control circuit includes a DC power supply circuit, an AC power supply circuit, and an electrical energy switch mechanism. When one of the DC power supply circuit and the AC power supply circuit supplies power externally, the electrical energy switch mechanism forbids the other to supply power externally.

Preferably, a distance between the DC output interface and the AC output interface is less than 15 cm.

The present disclosure further provides a power supply system, including: a battery pack support apparatus; a battery pack mounted on the battery pack support apparatus; an electrical energy output interface, outputting electrical energy externally in a discharging mode; a control circuit, transferring electrical energy of the battery pack to the electrical energy output interface; and a charging interface, receiving external electrical energy in a charging mode and transferring the external electrical energy to the battery pack, where the power supply system is alternatively in the charging mode or the discharging mode.

Preferably, the battery pack includes a standard battery unit having a preset rated voltage. The power supply system includes multiple standard battery units.

Preferably, in the charging mode and in the discharging mode, the multiple standard battery units have different series and/or parallel relationships.

Preferably, the electrical energy output interface includes a DC output interface and an AC output interface. The charging interface and the DC output interface are a same interface.

The present disclosure further provides a power supply platform, including: a battery pack support apparatus, where a battery pack is detachably mounted on the battery pack support apparatus; an AC output interface, outputting AC electrical energy; a DC output interface, outputting DC electrical energy; a control circuit, connecting the battery pack to the DC output interface and the AC output interface, transferring electrical energy of the battery pack to the DC output interface, and converting the electrical energy of the battery pack into AC electrical energy and providing the AC electrical energy to the AC output interface, where the power supply platform can work in a first working mode or a second working mode, and a quantity of battery packs mounted on the battery pack support apparatus in the first working mode is N times as large as a quantity of battery packs mounted in the second working mode.

Preferably, the battery pack support apparatus includes multiple battery pack interfaces. The battery pack interfaces are grouped into multiple groups. Each group includes N battery pack interfaces.

Preferably, in the first working mode, each group of battery pack interfaces connects 1 battery pack. In the second working mode, each group of battery pack interfaces connects N battery pack.

Preferably, N is equal to 2.

Preferably, battery pack interfaces in each group of battery pack interfaces are connected to each other in parallel.

The present disclosure further provides a power supply system, including any power supply platform in the foregoing and battery packs safely disposed on the power supply platform, where the battery packs are consistent with each other, and rated voltages of the battery packs are greater than 50 V

Preferably, the rated voltages of the battery packs are greater than 60 V

The present disclosure further provides a power supply system, including: a battery pack support apparatus; a battery pack detachably mounted on the battery pack support apparatus; a DC output interface, outputting DC electrical energy; a control circuit, transferring electrical energy of the battery pack to the DC output interface; and an adapter, detachably connected between the DC output interface and an electrical device, where the control circuit includes a battery pack detection circuit, a battery pack protection circuit is disposed in the adapter, the battery pack detection circuit detects battery pack information and sends the battery pack information to the battery pack protection circuit, and the battery pack protection circuit sends a corresponding control instruction according to the battery pack information.

Preferably, the battery pack detection circuit includes at least one of a temperature detection component, a current detection component, and a voltage detection component. A preset condition is built in the battery pack protection circuit. When received temperature information and/or current information and/or voltage information does not meet the preset condition, a control instruction used to make the battery pack stop working is sent, or a control instruction used to make the power supply system to externally send an alarm signal is sent.

Preferably, several battery pack interfaces are disposed on the battery pack support apparatus. The battery pack detection circuit includes a detection component. The detection component detects whether a battery pack is mounted on the battery pack interfaces.

Preferably, the battery pack includes a standard battery unit. The power supply system includes multiple standard battery units. The adapter includes a voltage selection circuit that configures a series and/or parallel relationship between the standard battery units to form a preset voltage.

The power supply system includes at least two adapters that may be alternatively connected to the DC output interface. Series-parallel circuits of the at least two adapters are different, and the preset conditions are different.

The present disclosure further provides a power supply platform, including: a body, including a base, where the base supports the body on a working surface; a battery pack support apparatus, located on the body, used to receive a battery pack; a wearable component, where the wearable component is suitable for being worn by a user; and a DC output interface, externally outputting a DC power, where the power supply platform has a base mode and a wearable mode, the base supports the body on the working surface in the base mode, and the body is supported on the user via the wearable component in the wearable mode.

Preferably, the wearable component is detached from the body in the base mode, and the wearable component is connected to the body in the wearable mode.

Preferably, the power supply platform further includes an AC output interface that outputs an AC power externally.

Preferably, the body includes a holding portion to be held by the user.

Preferably, the wearable component includes a back belt. When the wearable component is connected to the body, the power supply platform forms a back pack.

Preferably, the body includes a motherboard protection component at least mostly surrounding a motherboard. The motherboard protection component is rigid.

Preferably, when the power supply platform is worn on the user via the wearable component, a lengthwise axis of the battery pack basically extends vertically relative to the ground. When the power supply platform is placed on a support surface via the base of the body, the lengthwise axis of the battery pack is basically parallel or perpendicular to the support surface.

Preferably, the base and the wearable component are located on different sides of the body.

The present disclosure further provides a battery pack, including multiple secondary energy storage modules, where the secondary energy storage modules is a standard battery unit located in the battery pack and has an independent output terminal. An energy storage component includes multiple secondary energy storage modules. The secondary energy storage modules have a same voltage, and include multiple tertiary energy storage modules. The tertiary energy storage module is a cell located in the secondary energy storage module.

Preferably, the output terminal of the secondary energy storage module is arranged on a housing of the battery pack.

Preferably, the secondary energy storage module includes an independent control circuit.

Preferably, a voltage of the secondary energy storage module is a divisor of a standard AC voltage.

Preferably, a voltage of a primary energy storage module is a divisor of a standard AC voltage.

Preferably, a voltage of the secondary energy storage module is 20 V

Preferably, at least one primary energy storage module includes 1 secondary energy storage module.

Preferably, at least one primary energy storage module includes 3 secondary energy storage modules.

The present disclosure further provides an electrical energy supply apparatus, including any electrical energy transmission apparatus in the foregoing, and further including an energy storage component. The energy storage component includes a primary energy storage module, a secondary energy storage module, and a tertiary energy storage module. The primary energy storage module is a battery pack detachably mounted on the electrical energy transmission apparatus. The secondary energy storage module is a standard battery unit located in the battery pack and has an independent output terminal. The energy storage component includes multiple secondary energy storage modules. The secondary energy storage modules have a same voltage, and include multiple tertiary energy storage modules. The tertiary energy storage module is a cell located in the secondary energy storage module.

Preferably, the output terminal of the secondary energy storage module is arranged on a housing of the battery pack.

Preferably, the electrical energy transmission apparatus externally outputs different voltages by changing a series and/or parallel relationship between the secondary energy storage modules.

Preferably, the energy storage apparatus includes multiple primary energy storage modules.

Preferably, at least one primary energy storage module includes multiple secondary energy storage modules.

Preferably, at least two primary energy storage modules have different quantities of secondary energy storage modules.

Preferably, at least one primary energy storage module only includes one secondary energy storage module.

Preferably, a voltage of the secondary energy storage module is a divisor of a standard AC voltage.

Preferably, a voltage of the primary energy storage module is a divisor of a standard AC voltage.

Preferably, a voltage of the secondary energy storage module is 20 V

Preferably, an energy storage system includes 6 secondary energy storage modules.

Preferably, at least one primary energy storage module includes 1 secondary energy storage module.

Preferably, at least one primary energy storage module includes 3 secondary energy storage modules.

Preferably, the secondary energy storage module includes an independent control circuit.

The present disclosure further provides a working system, including any electrical energy supply apparatus in the foregoing, where the working system further includes a power tool.

Preferably, the power tool is an AC power tool.

Preferably, the power tool is a DC power tool.

Preferably, a battery pack interface of the DC power tool is the same as one of battery pack interfaces of the electrical energy transmission apparatus.

The present disclosure further provides a battery pack, including multiple standard battery units electrically isolated from each other, and a sum of rated voltages of the multiple standard battery units is greater than 50 V

Preferably, a sum of voltages of the multiple standard battery units is 60 V or 120 V

Preferably, a rated voltage of the standard battery unit is 20 V

The present disclosure further provides a battery pack, including a battery pack interface. Multiple groups of positive and negative electrodes are arranged on the battery pack interface. The groups of positive and negative electrodes are separately connected to standard battery units that are consistent with each other and are independent from each other. The standard battery unit includes several cells.

Preferably, the battery pack interface has 3 pairs or 6 pairs of positive and negative electrodes.

Preferably, a rated voltage of the standard battery unit is 20 V

Preferably, the battery pack interface further includes a signal electrode.

Preferably, the signal electrode is a temperature electrode, a voltage electrode or a type recognition electrode.

The present disclosure further provides a power supply system, including: a battery pack support apparatus; a battery pack detachably mounted on the battery pack support apparatus; an AC output interface, outputting AC electrical energy; a DC output interface, outputting DC electrical energy; a control circuit, connecting the battery pack to the DC output interface and the AC output interface, transferring electrical energy of the battery pack to the DC output interface, and converting the electrical energy of the battery pack into AC electrical energy and providing the AC electrical energy to the AC output interface; and a heat dissipation apparatus, for performing heat dissipation for the battery pack.

Preferably, the heat dissipation apparatus is a fan. The fan generates an air flow that flows through the battery pack.

The present disclosure further provides a power supply platform, including: a body; a battery pack support apparatus located on the body, where a battery pack interface is arranged on the battery pack support apparatus; an electrical energy output interface, outputting electrical energy of the battery pack; and a motherboard, where a control circuit is arranged on the motherboard, and the control circuit transfers electrical energy of the battery pack to the electrical energy output interface, where multiple groups of positive and negative electrodes are arranged on the battery pack interface, the groups of positive and negative electrodes are separately connected to standard battery units that are consistent with each other and are independent from each others, and the standard battery unit includes several cells.

Preferably, the battery pack interface has 3 pairs or 6 pairs of positive and negative electrodes.

Preferably, the battery pack interface further includes a signal electrode.

Preferably, the signal electrode is a temperature signal electrode.

The present disclosure further provides a power supply platform, including: a body; a battery pack support apparatus located on the body, where a battery pack interface is arranged on the battery pack support apparatus; an electrical energy output interface, outputting electrical energy of the battery pack; and a motherboard, where a control circuit is arranged on the motherboard, and the control circuit transfers electrical energy of the battery pack to the electrical energy output interface, where the battery pack support apparatus includes multiple battery pack interfaces, the battery pack interfaces are grouped into multiple groups, each group includes multiple battery pack interfaces, positive and negative electrodes in each group of battery pack interfaces are electrically isolated from each other, and corresponding positive and negative electrodes in different groups are connected to each other in parallel.

Preferably, there are 2 groups of battery pack interfaces.

Preferably, each group includes 2 battery pack interfaces.

Preferably, the electrical energy output interface includes an AC output interface. The control circuit includes a series-parallel circuit and a DC-AC inverter. The series-parallel circuit connects the groups of battery pack interfaces to each other in series, and then connects the battery pack interfaces to the DC-AC inverter. The DC-AC inverter converts received DC electrical energy into AC electrical energy, and provides the AC electrical energy to the AC output interface.

Preferably, the power supply platform includes a battery pack mounting instruction apparatus. The battery pack mounting instruction apparatus instructs a user to mount battery packs in the battery pack support apparatus in a manner in which each group of battery pack interfaces is filled with battery packs or is empty.

Preferably, each battery pack interface includes multiple pairs of positive and negative electrodes.

Preferably, the electrical energy output interface includes a DC output interface. The control circuit leads out positive and negative electrodes of each group of battery pack interfaces to the DC output interface. Multiple pairs of positive and negative electrodes that correspond to the groups of battery pack interfaces one by one are formed on the DC output interface.

The present disclosure further provides a power supply system, including any power supply platform in the foregoing. The power supply system further includes a battery pack detachably mounted on a battery pack support apparatus.

Preferably, the battery pack includes several standard battery units.

The present disclosure further provides a power supply platform, including: a body; a battery pack support apparatus located on the body, where multiple battery pack interfaces are arranged on the battery pack support apparatus; an electrical energy output interface, outputting electrical energy of the battery pack; and a motherboard, where a control circuit is arranged on the motherboard, and the control circuit transfers electrical energy of the battery pack to the electrical energy output interface, where the power supply platform further includes a protection apparatus that covers the battery pack interfaces when the battery pack is mounted.

The present disclosure further provides a power supply platform, including: a body; a battery pack support apparatus located on the body, where several battery pack interfaces are arranged on the battery pack support apparatus; a DC output interface, outputting electrical energy of the battery pack; a motherboard, where a control circuit is arranged on the motherboard, and the control circuit transfers electrical energy of the battery pack to an electrical energy output interface, where multiple pairs of positive and negative electrodes are arranged on each battery pack interface, the control circuit includes a power supply lead, the power supply lead directly leads out positive and negative electrodes on the battery pack interface, or leads out, after series and/or parallel configuration is performed according to groups, the positive and negative electrodes to the DC output interface, and multiple pairs of positive and negative electrodes are formed on the DC output interface.

The power supply lead of the power supply system connects the pairs of positive and negative electrodes in each group in parallel and then leads out the pairs of positive and negative electrodes to the DC output interface.

The present disclosure further provides a power supply platform, including a DC output interface. Multiple groups of positive and negative electrodes are arranged on the DC output interface. The groups of positive and negative electrodes are separately connected to standard battery units that are consistent with each other and are independent from each others. The standard battery unit includes several cells.

Preferably, the DC output interface has 3 pairs or 6 pairs of positive and negative electrodes.

Preferably, a rated voltage of the standard battery unit is 20 V

Preferably, the DC output interface further includes a signal electrode.

Preferably, the signal electrode is a temperature signal electrode.

The present disclosure further provides a power supply system, including: a battery pack support apparatus; a battery pack mounted on the battery pack support apparatus; a DC output interface, outputting DC electrical energy; and a control circuit, transferring electrical energy of the battery pack to the DC output interface, where a locking structure is disposed on the DC output interface to lock a device connected to the DC output interface.

Preferably, the power supply system further includes an adapter. The adapter has an input terminal to connect the DC output interface, and has an output terminal to connect an electrical device. The input terminal has a fastening structure. The fastening structure of the input terminal matches a fastening structure of the DC output interface.

The present disclosure further provides an adapter, including an input terminal and an output terminal. The input terminal has an input interface. The input interface has multiple pairs of positive and negative electrodes. The adapter further includes a series-parallel circuit. The series-parallel circuit configures a series and/or parallel relationship of the multiple pairs of positive and negative electrodes and then connects the multiple pairs of positive and negative electrodes to a pair of output positive and negative electrodes of the output terminal.

Preferably, the input interface has 6 pairs of positive and negative electrodes.

Preferably, the series-parallel circuit connects the 6 pairs of positive and negative electrodes to each other in parallel and then connects the 6 pairs of positive and negative electrodes to the output positive and negative electrodes.

Preferably, the series-parallel circuit connects every 2 pairs of positive and negative electrodes in series as one group, then connects the groups to each other in parallel, and then connects the groups to the output positive and negative electrodes.

Preferably, the series-parallel circuit connects every 3 pairs of positive and negative electrodes in series as one group, then connects the groups to each other in parallel, and then connects the groups to the output positive and negative electrodes.

Preferably, the series-parallel circuit connects the 6 pairs of positive and negative electrodes to each other in series, and then connects the 6 pairs of positive and negative electrodes to the output positive and negative electrodes.

The present disclsoure further provides an adapter, including an input terminal and an output terminal, where the input terminal has an input interface, and the input interface has multiple pairs of positive and negative electrodes.

Preferably, the input interface has 3 pairs or 6 pairs of positive and negative electrodes.

Preferably, the input interface further includes a signal electrode.

Preferably, the signal electrode is a temperature signal electrode.

The present disclosure further provides an adapter, including an input terminal, an output terminal, and a transmission cable located between the input terminal and the output terminal. The input terminal is connected to a power supply system, and the output terminal is connected to an electrical device. The transmission cable includes a pair of device transmission cables and several signal lines. The device transmission cables transfer electrical energy from the input terminal to the output terminal. The signal lines transfer signals between the input terminal and the output terminal.

Preferably, the transmission cable further includes a pair of PCB transmission cables. The PCB transmission cables transfer electrical energy from the output terminal to the input terminal.

Preferably, the adapter includes a battery pack control circuit. The signal lines include a signal line for transmitting a signal from the input terminal to the output terminal and a signal line for transmitting a signal from the output terminal to the input terminal.

Preferably, the signal line transmits at least one of a temperature signal, a voltage signal, and a current signal.

The present disclosure further provides another adapter, including an input terminal, an output terminal, and a transmission cable located between the input terminal and the output terminal. The input terminal is connected to a power supply system, and the output terminal is connected to an electrical device.

A battery pack protection circuit is further disposed inside the adapter. The battery pack protection circuit includes a signal input terminal and a signal output terminal. The signal input terminal receives a signal representing a battery pack parameter. According to the signal received by the signal input terminal, the signal output terminal sends a control signal for a battery pack.

Preferably, the signal input terminal receives at least one of a temperature signal, a current signal, and a voltage signal. A preset condition is built in the battery pack protection circuit. When the received temperature signal and/or current signal and/or voltage signal does not meet the preset condition, a control signal used to make the battery pack stop working is sent, or a control instruction used to make the power supply system to externally send an alarm signal is sent.

The present disclosure further provides another adapter, including an input terminal for connecting a power supply system, an output terminal for connecting an electrical device, and a transmission cable located between the input terminal and the output terminal. The adapter includes a general part and an adaptive part detachably connected to the general part. The input terminal is located at the general part, and the output terminal is located at the adaptive part.

Preferably, at least a large part of the transmission cable is located at the adapter part.

Preferably, the adapter includes multiple adaptive parts. The multiple adaptive parts are alternatively connected to the general part.

Preferably, the output terminal has a battery pack shape.

Preferably, the general part has a first interface, the adaptive part has a second interface, and the first interface and the second interface match to be connected to or detached from each other.

Preferably, the first interface is a cable connector.

The present disclosure further provides an adapter, including a cylindrical body, an input terminal, an output terminal, and a transmission cable located between the input terminal and the output terminal. A circuit board is built in the body. The shape of the circuit board matches the shape of the cross section of a main body.

Preferably, the circuit board is arranged perpendicular to the central axis of the main body.

Preferably, the main body is located between the input terminal and the transmission cable.

Preferably, a series-parallel circuit is arranged on the circuit board. The input terminal includes multiple pairs of positive and negative electrodes. The series-parallel circuit configures a series and/or parallel relationship of the multiple pairs of positive and negative electrodes and then connects the multiple pairs of positive and negative electrodes to the output terminal.

Preferably, a battery pack protection circuit is arranged on the circuit board. A signal electrode is arranged on the input terminal. The battery pack protection circuit correspondingly outputs a control signal according to a received signal, to control a connected battery pack.

The present disclosure further provides an adapter, including a body, an input terminal, an output terminal, and a transmission cable located between the input terminal and the output terminal. The body includes a control circuit. The output terminal includes a device check element. When detecting that an electrical device is connected to a device, the device check element triggers the control circuit to start.

Preferably, the device check element is a micro switch.

The present disclosure further provides an adapter, including a body, an input terminal for connecting a power supply system, an output terminal for connecting a power tool, and a transmission cable located between the input terminal and the output terminal. The output terminal is a cable connector. The cable connector has a diameter less than 3 cm and a weight less than 200 grams.

Preferably, the body includes a series-parallel circuit. The input terminal includes multiple pairs of positive and negative electrodes. The series-parallel circuit performs series and/or parallel configuration on the multiple pairs of positive and negative electrodes and then connects the multiple pairs of positive and negative electrodes to positive and negative electrodes of the output terminal. The series-parallel circuit connects at least two pairs of positive and negative electrodes in series.

The present disclosure further provides a power supply platform, including: a battery pack support apparatus, where a battery pack is detachably mounted on the battery pack support apparatus; an AC output interface, outputting AC electrical energy; and a control circuit, converting DC electrical energy into AC electrical energy, and transferring the AC electrical energy to the AC output interface, where the control circuit further includes a load detection mechanism, the load detection mechanism detects a load condition of an electrical device connected to the AC output interface, and when the load is less than a preset value, the control circuit turns off electrical energy output to the AC output interface.

Preferably, the load detection mechanism is a current detection unit.

Preferably, the control circuit includes a DC-AC inverter. The control circuit turns off the inverter when the load is less than the preset value.

The present disclosure further provides a power supply platform, including: a battery pack support apparatus, where a battery pack is detachably mounted on the battery pack support apparatus; an AC output interface, outputting AC electrical energy; and a control circuit, converting DC electrical energy into AC electrical energy, and transferring the AC electrical energy to the AC output interface, where the AC output interface includes a device check element, and when detecting that an electrical device is connected to the AC output interface, the device check element triggers the control circuit to start.

Preferably, the device check element is a micro switch.

The present disclosure further provides an electrical energy transmission apparatus, including an output port, used to connect a power supply connector of an electrical device, where a start switch is disposed in the output port, the start switch controls the electrical energy transmission apparatus to be turned on or off, and when the power supply connector is connected to the output port, the start switch is triggered to be turned on.

Preferably, the start switch is a micro switch.

Preferably, when the power supply connector is detached from the output port, the start switch is triggered to be turned off.

Preferably, the output port is a connection terminal for an AC electrical device.

The present disclosure further provides a push DC tool, including a push handle, a body, and a movable component for supporting the body on the ground, and further including: a battery pack interface, used to connect a battery pack, and including an electrical connection part and a battery pack support part; and a transmission cable interface, used to connect a cable connector, and including an electrical connection part and a mechanical joint part.

Preferably, the battery pack interface is connected to the transmission cable interface in parallel.

Preferably, the transmission cable interface is located on the push handle.

Preferably, the transmission cable interface is disposed on or near a part to be held by a user of the push handle.

The present disclosure further provides a working system, including a battery pack, an electrical energy transmission apparatus, and a push power tool. The push power tool includes a push handle and a main body. A battery pack interface and a cable electrical energy output part interface are disposed on the push power tool, and are respectively used to connect a battery pack and a cable electrical energy output part.

Preferably, the cable electrical energy output part interface is located on the push handle.

Preferably, the cable electrical energy output part interface is located at an upper portion of the push handle.

Preferably, the battery pack interface is located on the body.

Preferably, there are multiple battery pack interfaces.

Preferably, a working voltage of the push power tool is greater than 50 V

Preferably, a working voltage of the push power tool is 120 V, there are two battery pack interfaces, and a voltage of the battery pack is 60 V

Preferably, the push power tool can only be powered by one of the battery pack and the cable electrical energy output part.

Preferably, the push power tool can be powered by both the battery pack and the cable electrical energy output part.

Preferably, the battery pack interface and the cable electrical energy output part interface of the push power tool are connected in parallel.

Preferably, the push power tool is a lawn mower.

The present disclosure further provides a push tool, where the push tool is any push tool in the foregoing.

The present disclosure further provides a push DC tool, including a push handle, a body, and a movable component for supporting the body on the ground, further including: a transmission cable interface, used to connect a cable connector, and including an electrical connection part and a mechanical joint part, the transmission cable interface is disposed on the push handle.

Preferably, the transmission cable interface is disposed on or near a part to be held by a user of the push handle.

The present disclosure further provides a handheld DC tool, including an electrical energy input interface, where the electrical energy input interface is a transmission cable interface, used to connect a transmission cable connector.

Preferably, a rated input voltage of the electrical energy input interface is greater than 50 V

Preferably, a rated input voltage of the electrical energy input interface is between 100 V and 140 V, or is between 50 V and 70 V

Preferably, the electrical energy input interface includes a locking structure, used to lock the transmission cable connector in the electrical energy input interface.

The present disclosure further provides a working system, including a battery pack, an electrical energy transmission apparatus, and a DC tool. A working voltage of the DC tool is greater than 60 V The battery pack is supported in the working system via a battery pack support apparatus. The electrical energy transmission apparatus is disposed separately from the DC tool. The electrical energy transmission apparatus outputs electrical energy to the DC tool via a cable electrical energy output part. The battery pack support apparatus is only arranged on the electrical energy transmission apparatus. An electrical energy input interface on the DC tool only includes a port for connecting the cable electrical energy output part.

Preferably, the DC tool is a handheld tool.

The present disclosure further provides a DC tool, powered by an electrical energy transmission apparatus disposed separately from the DC tool. The electrical energy transmission apparatus includes a battery pack support structure for supporting the weight of a battery pack thereon. An electrical energy input interface of the electrical energy transmission apparatus only includes a port for connecting a cable electrical energy output part of the electrical energy transmission apparatus.

Preferably, the DC tool is a handheld tool.

The present disclosure further provides a DC tool, including an electrical energy input interface which is incompatible with a battery pack.

The present disclosure further provides a charger, including an output terminal, a main body, and an AC plug that are sequentially connected. An electrical energy output interface is disposed on the output terminal. Multiple pairs of positive and negative electrodes are disposed on the electrical energy output interface. The charger includes a series-parallel circuit. The series-parallel circuit is connected to the multiple pairs of positive and negative electrodes.

Compared with the prior art, a beneficial effect of the present disclosure is: the application range is wide, and energy can be supplied to various AC and DC tools; the portability is high; the safety is high, and when a DC is used to drive an AC electrical device, a burnout does not occur; and energy conversion efficiency is high.

### BRIEF DESCRIPTION OF THE DRAWINGS

The foregoing objectives, technical solutions, and beneficial effects of the present invention may be described below in detail via the following specific embodiments by means of which the present invention can be implemented.

The same reference numerals and symbols in the accompanying drawings and the specification are used to represent the same or equivalent elements.
FIG. 1-I is a schematic diagram of a battery pack receiving apparatus and a battery pack received in the battery pack receiving apparatus according to an implementation of the present disclosure.
FIG. 2-I is a schematic diagram of the battery pack receiving apparatus shown in FIG. 1-I being assembled with a battery pack.
FIG. 3-I is a schematic diagram of the electrical energy output interface of the battery pack receiving apparatus shown in FIG. 2-I being connected to a power tool.
FIG. 4-I is a schematic diagram of an unfolded state of a foldable battery pack according to an implementation of the present disclosure.
FIG. 5-I is a schematic diagram of a folded state of the foldable battery pack shown in FIG. 4-I.
FIG. 6-I is a schematic diagram of the foldable battery pack shown in FIG. 5-I being mounted on a power tool.
FIG. 7-I is a schematic diagram of an unfolded state of a flexible battery pack according to an implementation of the present disclosure.
FIG. 8-I is a schematic diagram of a rolled state of the flexible battery pack shown in FIG. 7-I.
FIG. 9-I is a schematic diagram of the flexible battery pack shown in FIG. 8-I being mounted on a power tool.
FIG. 10-I is a schematic diagram of a battery pack receiving apparatus according to an implementation of the present disclosure.
FIG. 11-I is a schematic diagram of a battery pack receiving apparatus according to an implementation of the present disclosure.

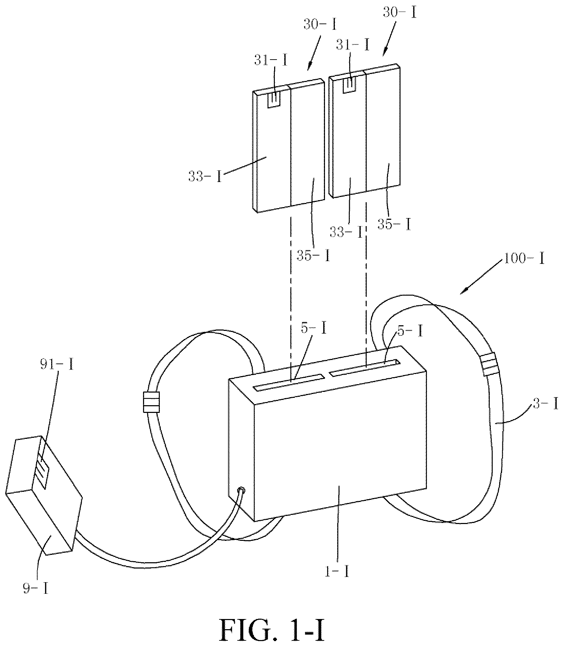

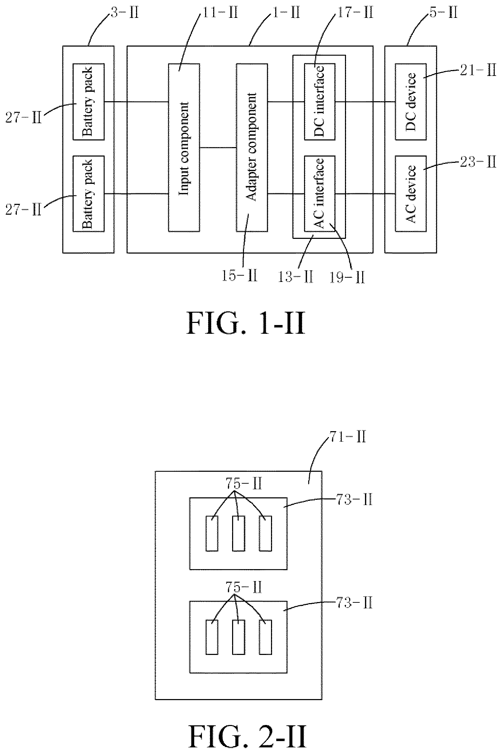

FIG. 1-II is a diagram of modules of an electrical energy working system according to an embodiment of the present disclosure.

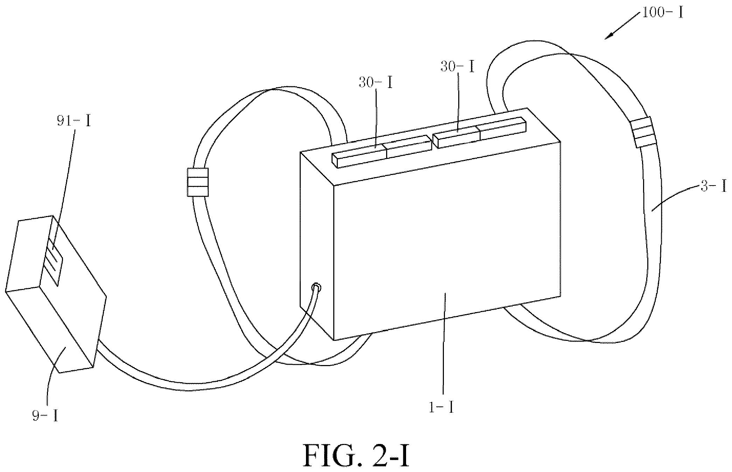

FIG. 2-II is a diagram of modules of energy storage components in FIG. 1-II.

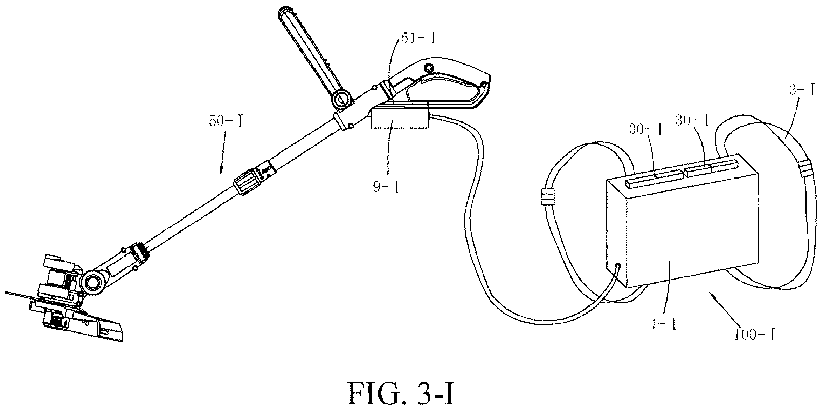

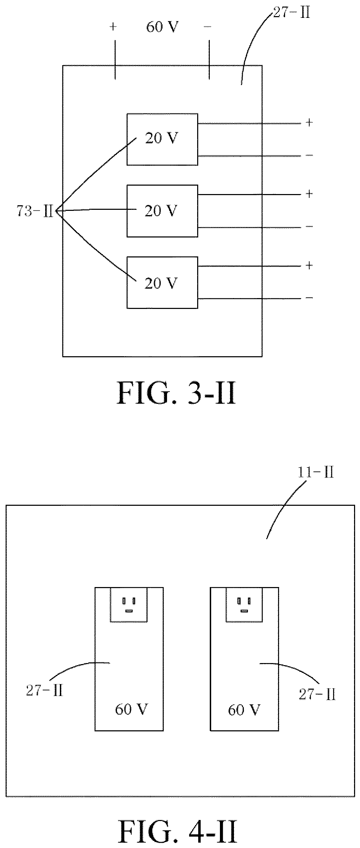

FIG. 3-II is a structural diagram of a secondary energy storage module in FIG. 2-II.

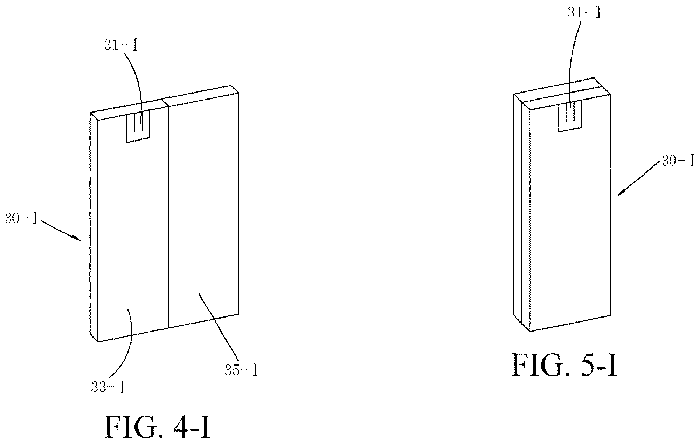

FIG. 4-II is a schematic diagram of an energy storage component formed of the secondary energy storage module in FIG. 3-II.

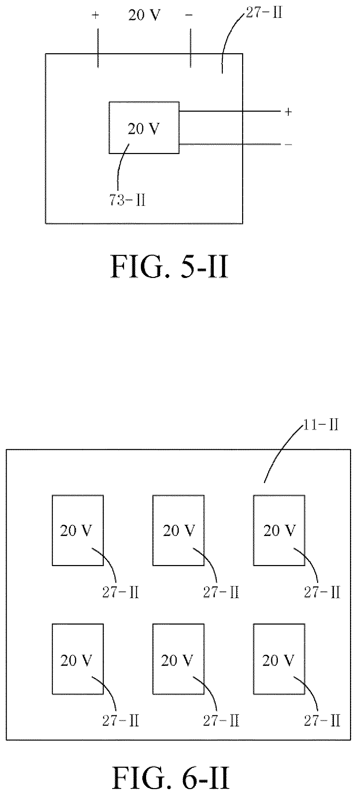

FIG. 5-II is a structural diagram of the secondary energy storage module in FIG. 2-II.

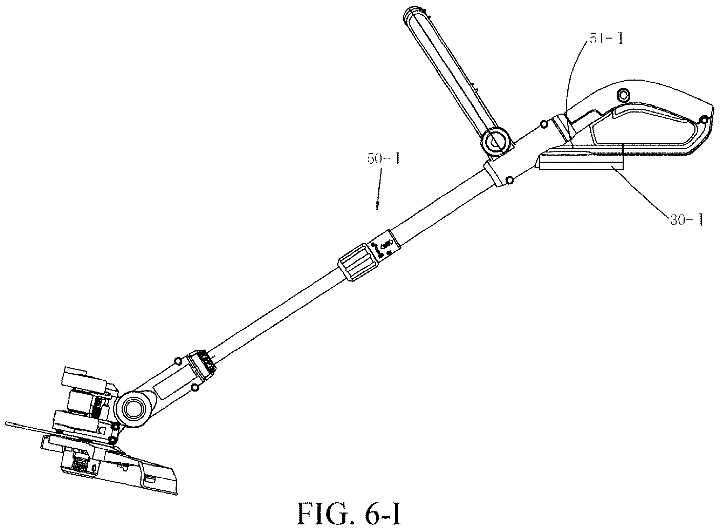

FIG. 6-II is a schematic diagram of an energy storage component formed of the secondary energy storage module in FIG. 5-II.

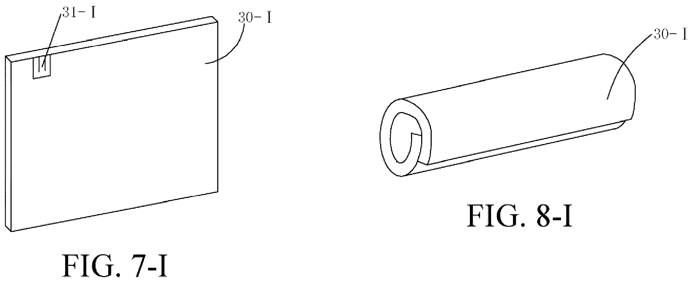

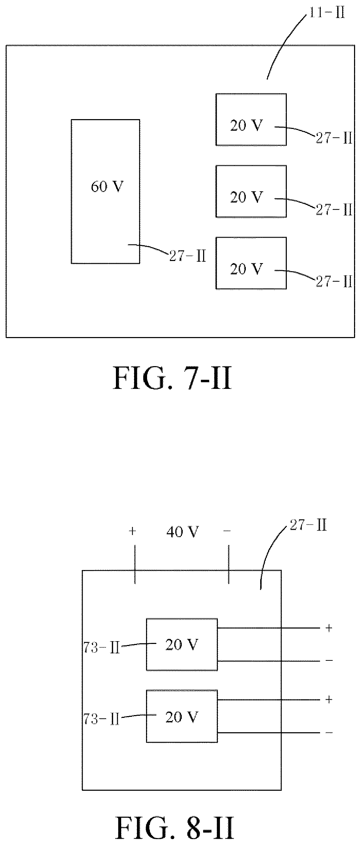

FIG. 7-II is a schematic diagram of an energy storage component formed of the secondary energy storage module in FIG. 3-II and the secondary energy storage module in FIG. 5-II.
FIG. 8-II is a structural diagram of the secondary energy storage module in FIG. 2-II.

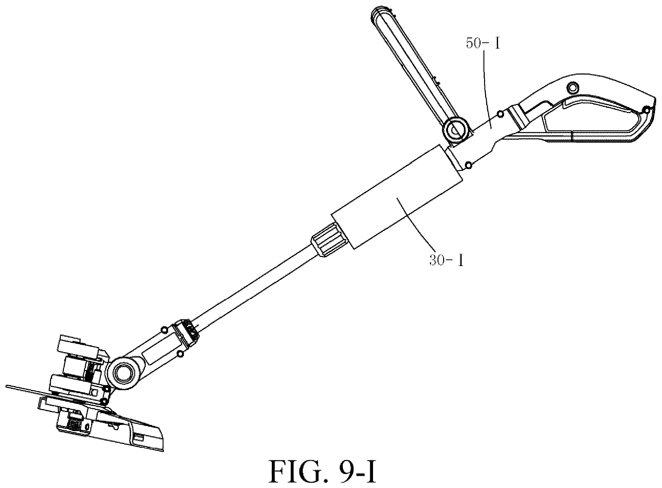

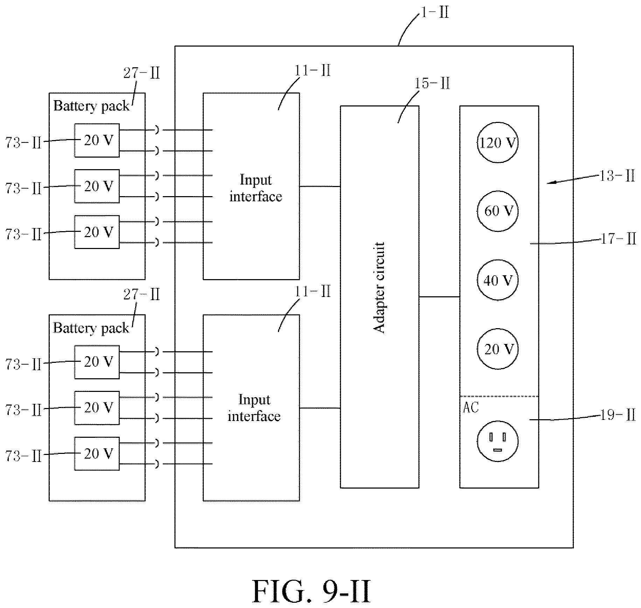

FIG. 9-II is a schematic diagram of the connection between the energy storage component and an electrical energy transmission apparatus in FIG. 4-II.

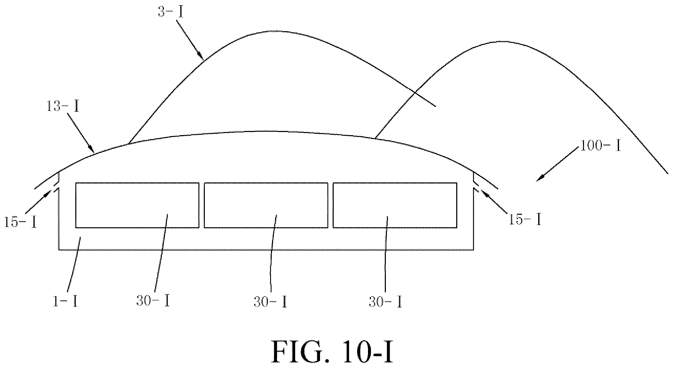

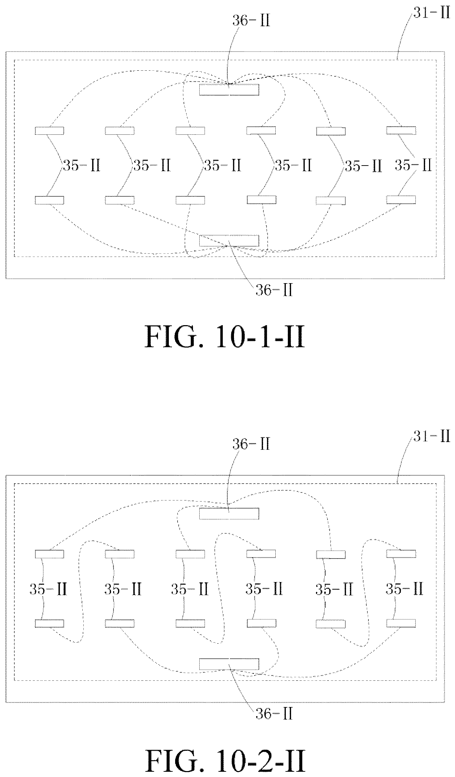

FIG. 10-1-II is a schematic diagram according to this embodiment.
FIG. 10-2-II is a schematic diagram of a second series-parallel circuit according to this embodiment.

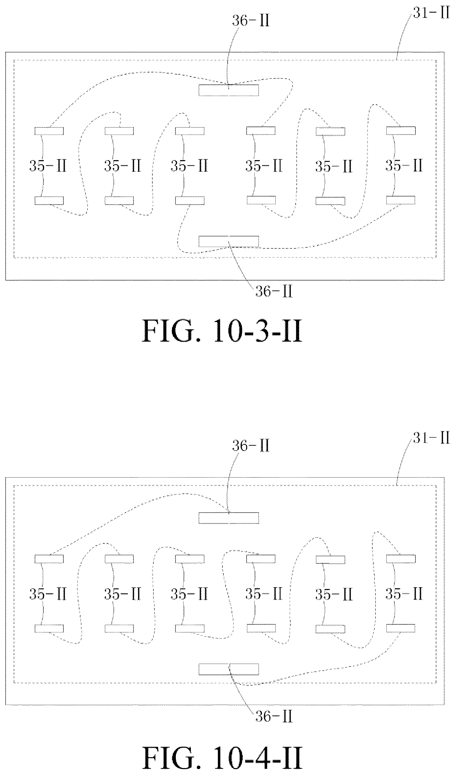

FIG. 10-3-II is a schematic diagram of a third series-parallel circuit according to this embodiment.
FIG. 10-4-II is a schematic diagram of a fourth series-parallel circuit according to this embodiment.

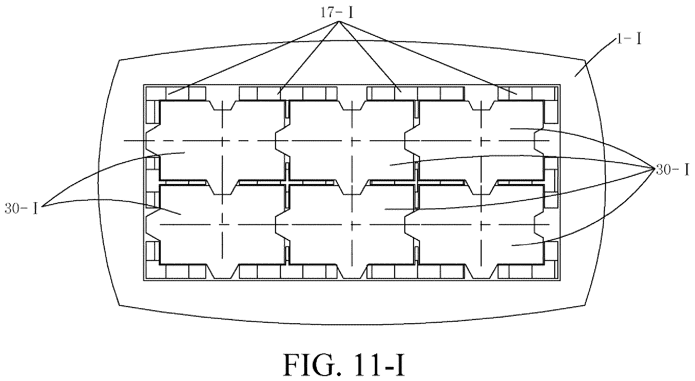

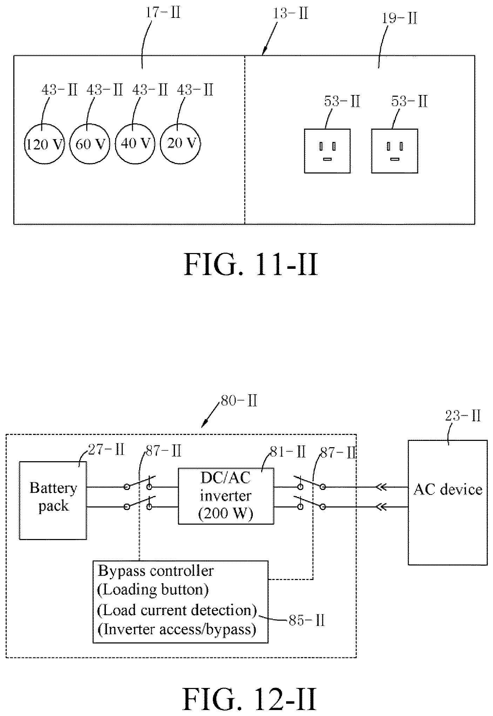

FIG. 11-II is a schematic diagram of an output component according to this embodiment.
FIG. 12-II is a schematic diagram of a first state of an output selection module according to this embodiment.

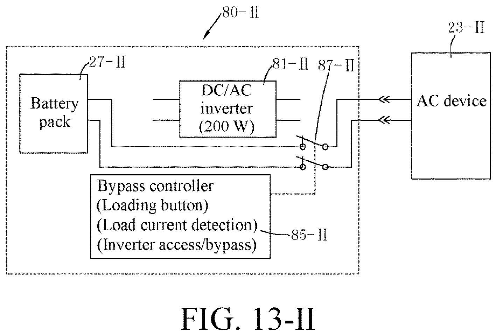

FIG. 13-II is a schematic diagram of a second state of the output selection module in FIG. 12-II.

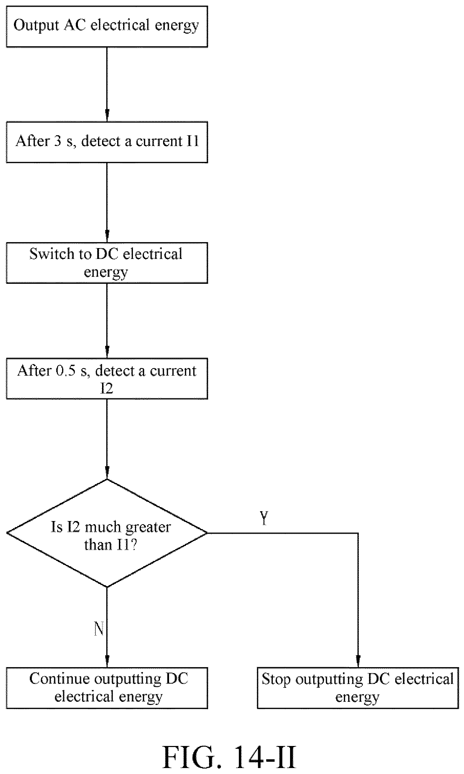

FIG. 14-II is a working flowchart when a first port in FIG. 11-II is connected to an AC device.

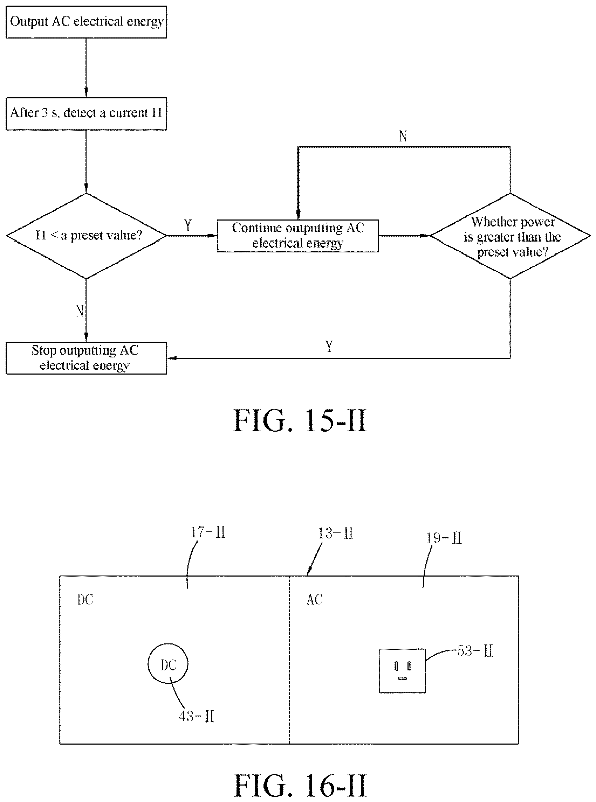

FIG. 15-II is a working flowchart when a second port in FIG. 11-II is connected to an AC device.
FIG. 16-II is a schematic diagram of an input component according to another embodiment of the present disclosure.

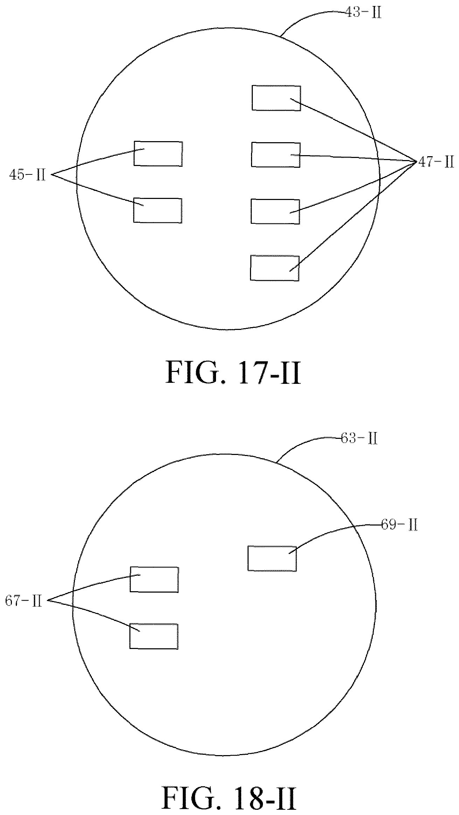

FIG. 17-II is a schematic diagram of a DC device connection terminal in FIG. 16-II.
FIG. 18-II is a schematic diagram of an input terminal of an adapter matching the DC device connection terminal in FIG. 17-II.

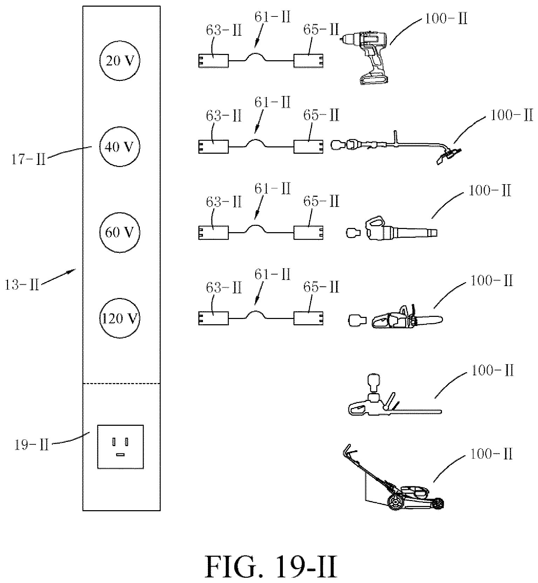

FIG. 19-II is a schematic diagram of the connection between a DC output interface and a DC device according to an embodiment of the present disclosure.

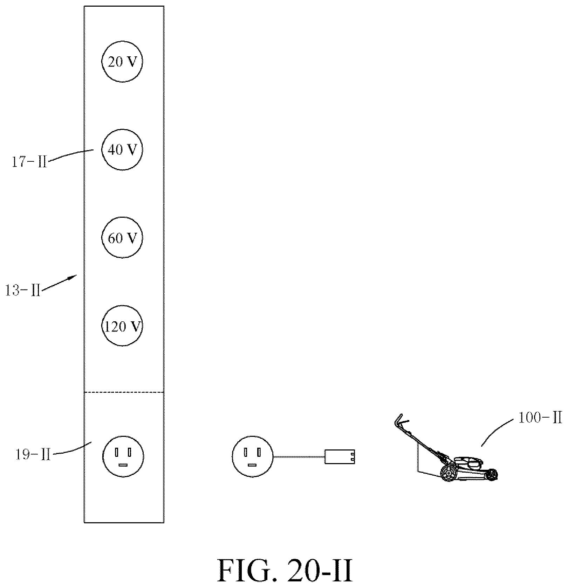

FIG. 20-II is a schematic diagram of the connection between an AC output interface and an AC device according to an embodiment of the present disclosure.

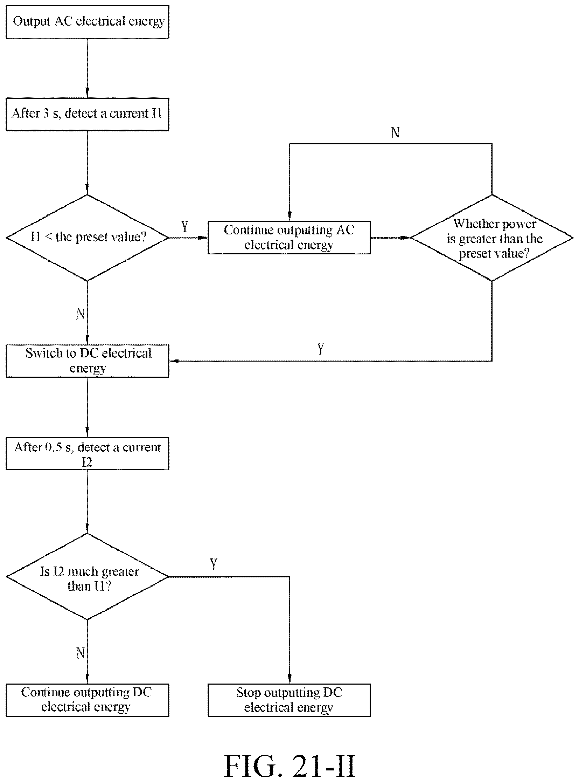

FIG. 21-II is a working flowchart when an AC device connection terminal in FIG. 16-II is connected to an AC device.

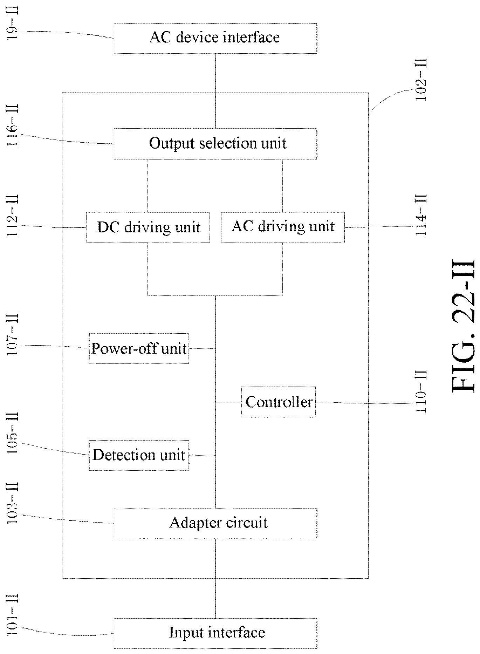

FIG. 22-II is a schematic diagram of an electrical energy transmission apparatus according to an embodiment of the present disclosure.

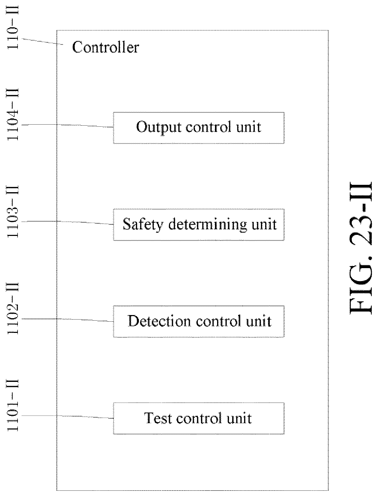

FIG. 23-II is a diagram of modules of a controller in FIG. 22-II.

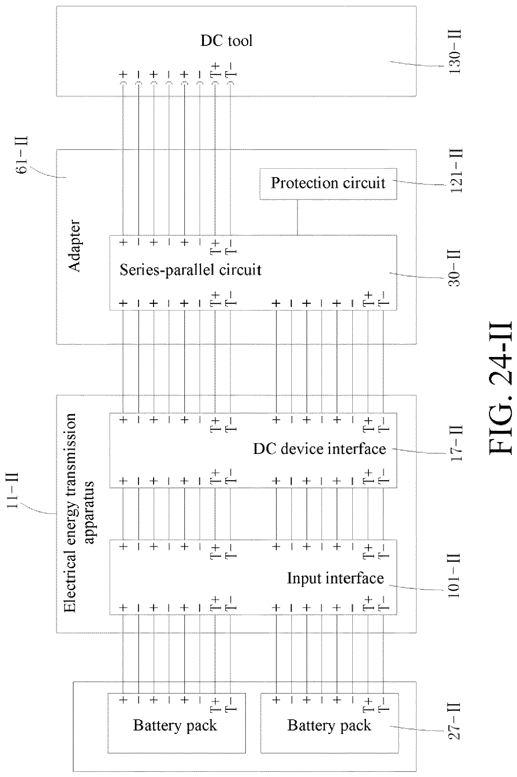

FIG. 24-II is a schematic diagram of a working system according to an embodiment of the present disclosure.

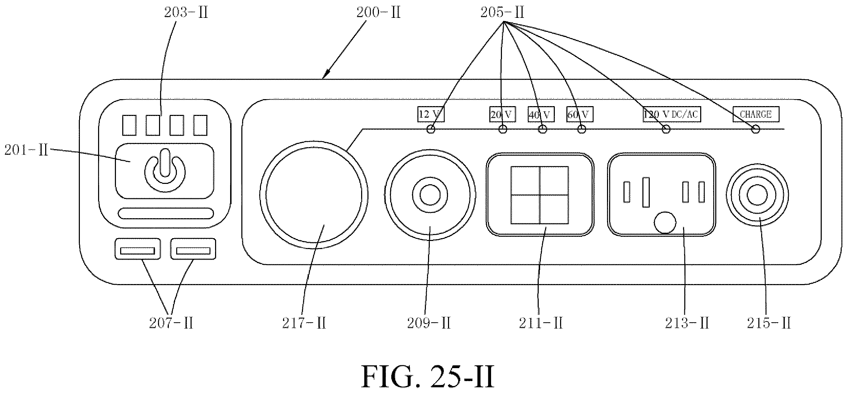

FIG. 25-II is a schematic diagram of an operation panel according to an embodiment of the present disclosure.

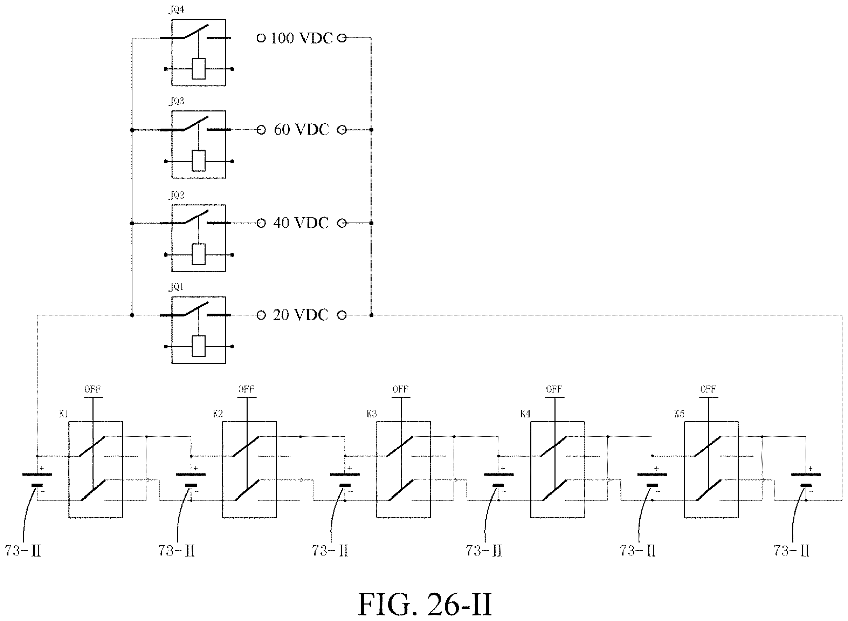

FIG. 26-II is a schematic diagram of a series-parallel conversion circuit according to the embodiment in FIG. 25-II.

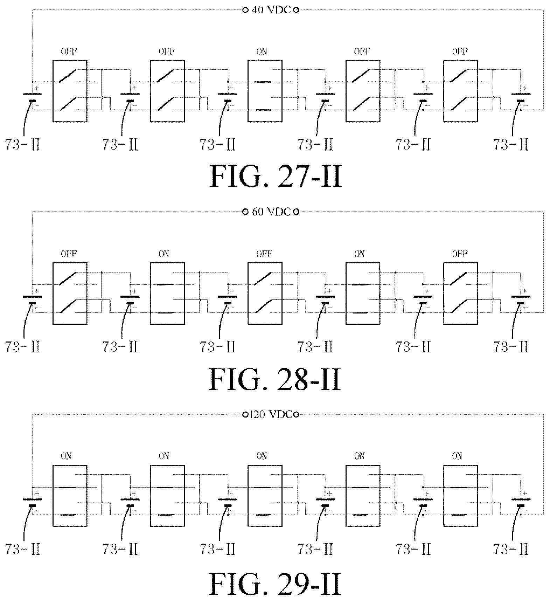

FIG. 27-II is a schematic diagram of another state of the series-parallel conversion circuit in FIG. 26-II.
FIG. 28-II is a schematic diagram of another state of the series-parallel conversion circuit in FIG. 26-II.
FIG. 29-II is a schematic diagram of another state of the series-parallel conversion circuit in FIG. 26-II.

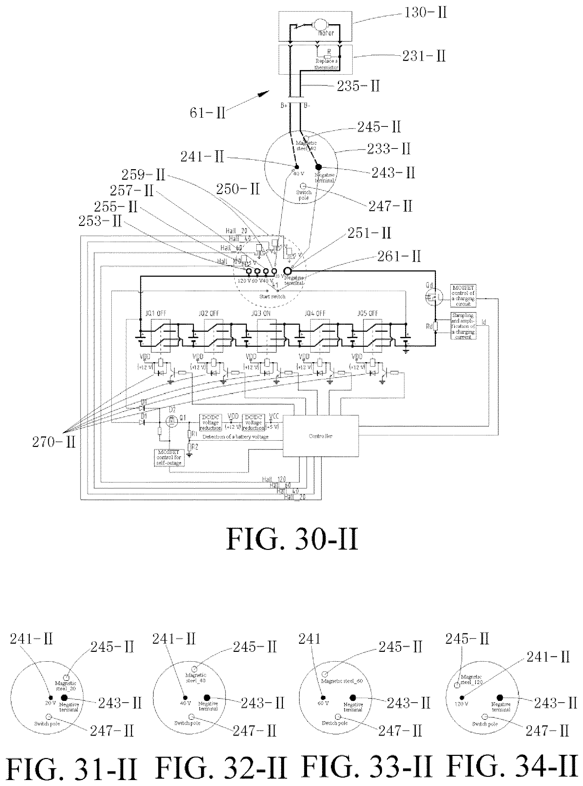

FIG. 30-II is a diagram of circuit connections of an energy storage system and an electrical device according to another embodiment of the present disclosure.
FIG. 31-II is a schematic diagram of an electrical energy input terminal of a 20V adapter in the embodiment shown in FIG. 30-II.
FIG. 32-II is a schematic diagram of an electrical energy input terminal of a 40V adapter in the embodiment shown in FIG. 30-II.
FIG. 33-II is a schematic diagram of an electrical energy input terminal of a 60V adapter in the embodiment shown in FIG. 30-II.
FIG. 34-II is a schematic diagram of an electrical energy input terminal of a 120V adapter in the embodiment shown in FIG. 30-II.

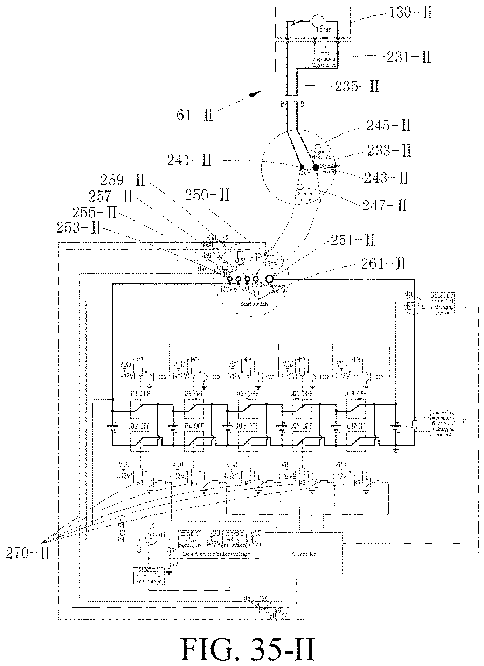

FIG. 35-II is a diagram of circuit connections of an energy storage system and an electrical device according to another embodiment of the present disclosure.

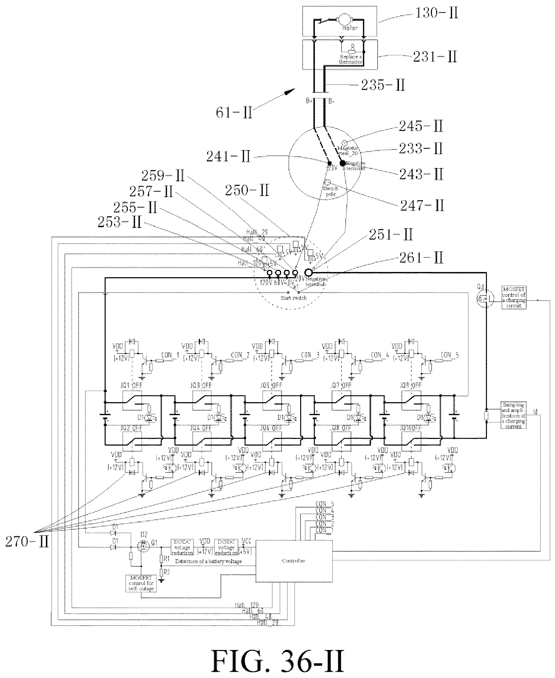

FIG. 36-II is a diagram of circuit connections of an energy storage system and an electrical device according to another embodiment of the present disclosure.

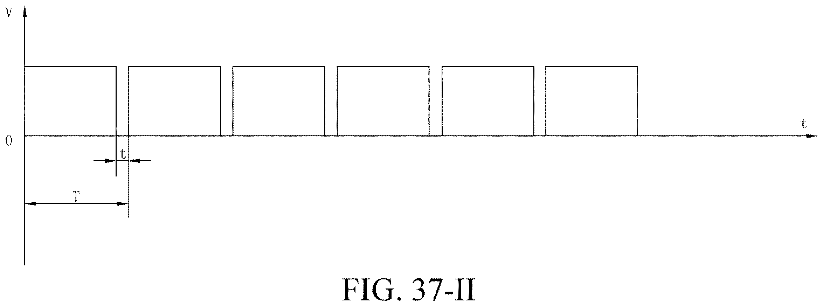

FIG. 37-II is an output waveform diagram of a DC power according to another embodiment of the present disclosure.

| | | |
|---|---|---|
| 100-I. Battery pack receiving apparatus | 1-I. Main body | 3-I. Wearable component |
| 5-I. Battery pack receiving recess | 9-I. Electrical energy output device | 11-I. Cover |
| 13-I. Bag body | 15-I. Vent hole | 17-I. Airbag |
| 30-I. Battery pack | 31-I. Battery pack interface | 33-I. First body |
| 35-I. Second body | 50-I. Power tool | 51-I. Battery pack mounting interface |
| 91-I. Electrical energy output interface | | |
| 1-II. Electrical energy transmission apparatus | 3-II. Energy storage component | 5-II. Electrical device |
| 11-II. Input component | 13-II. Output component | 15-II. Adapter component |
| 17-II. DC device interface | 19-II. AC device interface | 21-II. DC device |
| 23-II. AC device | 27-II. Battery pack | 31-II. First series-parallel circuit |
| 32-II. Second series-parallel circuit | 33-II. Third series-parallel circuit | 34-II. Fourth series-parallel circuit |
| 35-II. Input terminal | 36-II. Output terminal | 43-II. DC device connection terminal |
| 45-II. Power supply terminal | 47-II. Recognition terminal | 53-II. First port |
| 55-II. Second port | 61-II. Adapter | 63-II. Input terminal |
| 65-II. Output terminal | 67-II. Power supply terminal | 69-II. Feature terminal |
| 71-II. Primary energy storage module | 73-II. Secondary energy storage module | 75-II. Tertiary energy storage module |
| 80-II. Output selection module | 81-II. Inverter | 85-II. Bypass controller |
| 87-II. Switch | 100-II. Power tool | 28-II. Battery pack interface |
| 30-II. Series-parallel circuit | 102-II. Control circuit | |
| 101-II. Input interface | 103-II. Conversion circuit | 105-II. Detection unit |
| 107-II. Power-off unit | 110-II. Controller | 112-II. DC driving unit |
| 114-II. AC driving unit | 116-II. Output selection unit | 121-II. Protection circuit |
| 130-II. DC tool | | |
| 1101-II. Test control unit | 1102-II. Detection control unit | 1103-II. Safety determining unit |
| 1104-II. Output control unit | | |
| 200-II. Operation panel | 201-II. Switch | 203-II. Mode indicator lamp |
| 205-II. Mode indicator lamp | 207-II. USB output interface | 209-II. 12V output interface |
| 211-II. Low voltage DC output interface | 213-II. High voltage output interface | 215-II. Charging interface |
| 217-II. Mode selection operation piece | | |
| 231-II. Tool end | 233-II. Electrical energy input terminal | 235-II. Transmission cable |
| 241-II. Positive terminal | 243-II. Negative terminal | 245-II. Trigger piece |
| 247-II. Switch pole | 250-II. DC output interface | 251-II. Negative terminal |
| 253-II. 20V positive terminal | 255-II. 40V positive terminal | 257-II. 60V positive terminal |
| 259-II. 120V positive terminal | 261-II. Start switch | 270-II. Driving circuit |
| 271-II. Optical coupler | | |

### DETAILED DESCRIPTION

The present disclosure includes two inventive concepts. The first inventive concept is described with reference to FIG. 1-I to FIG. 11-I. The second inventive concept is described with reference to FIG. 1-II to FIG. 37-II. The two inventive concepts support each other and together form the inventive essence of the present invention.

First, specific implementations under the guidance of the first inventive concept are described with reference to FIG. 1-I to FIG. 11-I.

As shown in FIG. 1-I, this embodiment provides a wearable battery pack receiving apparatus 100-I and a wearable battery pack receiving system.

The wearable battery pack receiving apparatus 100-I is used to output electrical energy to a power tool 50-I. The battery pack receiving apparatus 100-I includes a main body 1-I and a wearable component 3-I connected to the main body 1-I, and further includes an electrical energy output device 9-I that outputs electrical energy to the external power tool 50-I. Preferably, the electrical energy output device 9-I is a flexible apparatus, typically, an electric cable.

A wearable battery pack system further includes, in addition to the battery pack receiving apparatus 100-I, a battery pack 30-I received in the battery pack receiving apparatus 100-I.

At least one battery pack receiving recess 5-I used to receive the battery pack 30-I is disposed on the main body 1-I. A receiving interface (not shown) matching a battery pack interface 31-I of the battery pack 30-I is disposed on the battery pack receiving recess 5-I. With reference to FIG. 1-I and FIG. 2-I, the battery pack interface 31-I and the receiving interface that match each other are disposed, and the battery pack 30-I and the battery pack receiving recess 5-I are electrically connected to each other in a detachable manner and have matching shapes. Alternatively, the battery pack 30-I received in the battery pack receiving recess 5-I is suitable for being directly mounted on the power tool 50-I.

The wearable component 3-I includes a shoulder belt and/or a waist belt. In this embodiment, the battery pack receiving apparatus 100-I is a back pack, and the wearable component 3-I is a shoulder belt suitable for a user to carry. In another embodiment, the wearable component may further include a waist belt that facilitates carrying. If the battery pack receiving apparatus 100-I is specifically a fanny pack, the wearable component 3-I correspondingly includes a waist belt. If the battery pack receiving apparatus 100-I is specifically a shoulder bag, the wearable component 3-I correspondingly includes a shoulder belt suitable for a user to wear over the shoulder.

The electrical energy output device 9-I is connected to the main body 1-I, and is electrically connected to the receiving interface, so as to output electrical energy of the battery pack 30-I received in the battery pack receiving apparatus 100-I to the power tool 50-I. As shown in FIG. 3-I, an electrical energy output interface 91-I is provided on the electrical energy output device 9-I. Preferably, the electrical energy output interface 91-I matches a battery pack mounting interface 51-I of an external the power tool 50-I, so that the electrical energy output device 9-I can be mounted on the power tool 50-I like a common battery pack 30-I and output electrical energy to the power tool 50-I. That is, another set of electrical energy input interfaces does not need to be additionally disposed on the power tool 50-I, and electrical energy provided by the battery pack receiving apparatus 100-I can be directly received via the battery pack mounting interface 51-I. In this embodiment, a rated output voltage of the electrical energy output interface 91-I is greater than 80 V For example, the rated output voltage is 80 V, 100 V, 108 V, 112 Vor 120 V

As discussed above, the battery pack receiving apparatus 100-I receives one or more battery packs 30-I via the battery pack receiving recess 5-I, and is then connected to the battery pack mounting interface 51-I of the power tool 50-I via the electrical energy output device 9-I, to transfer electrical energy from the battery pack 30-I to the power tool 50-I. The battery pack receiving apparatus 100-I is similar to a docking station. The battery capacity is increased and/or the weight bearing position of a user is changed without changing the interfaces of the original battery pack 30-I and power tool 50-I.

In some different implementations, the quantity and circuit connection relationships of the battery pack receiving recesses 5-I have various optional configuration forms. However, in each implementation, the battery pack receiving apparatus 100-I is configured correspondingly. For example, circuit connection relationships of the each battery pack receiving recess 5-I are properly set, or a transformer is disposed, or a transformer and a power supply regulator are disposed, to control a rated output voltage of the electrical energy output device 9-I.

For example, continuing to refer to FIG. 1-I to FIG. 3-I, in this embodiment, the battery pack receiving apparatus 100-I has multiple battery pack receiving recesses 5-I. In this embodiment, by configuring a series and/or parallel relationship between the battery pack receiving recesses 5-I, it is implemented that the rated output voltage of the electrical energy output interface is greater than 80 V In some embodiments, a rated voltage of the battery pack 30-I is greater than 80 V In other embodiments, there are multiple battery packs, and a sum of rated voltages of the battery packs is greater than 80 V

It should be noted that, the rated output voltage here is a voltage externally output by the battery pack receiving apparatus after battery packs meeting a particular condition are mounted in the battery pack receiving apparatus. The particular condition here may be that the battery pack receiving recesses 5-I all receive the battery packs 30-I, or some specific battery pack receiving recess 5-I all receive the battery packs 30-I.

For example, the battery pack receiving recesses 5-I may have a same specification, and are suitable for receiving same battery packs 30-I. If the rated output voltage of the electrical energy output interface 91-I is 108 V, the battery pack receiving recesses 5-I may be two or more 108V battery pack receiving recesses 5-I that are connected to each other in parallel, or may be two 54V battery pack receiving recesses 5-I that are connected to each other in series, or may be several groups of battery pack receiving recesses 5-I that are connected to each other in parallel. Each group of battery pack receiving recesses 5-I include two 54V battery pack receiving recesses 5-I that are connected to each other in series. There may further be many other similar combination manners, which are no longer enumerated.

As discussed above, specifically, in this embodiment, receiving interfaces of at least two battery pack receiving recesses 5-I match a battery pack interface 31-I of a battery pack 30-I whose rated voltage is less than 60 V For example, the battery pack receiving apparatus 100-I has two battery pack receiving recesses 5-I. Receiving interfaces of the two battery pack receiving recesses 5-I both match a battery pack interface 31-I of a battery pack 30-I whose rated voltage is 54 V For another example, the battery pack receiving apparatus 100-I has 4 battery pack receiving recesses 5-I. Receiving interfaces of the 4 battery pack receiving recesses 5-I all match a battery pack interface 31-I of a battery pack 30-I whose rated voltage is 27 V

In this embodiment, the receiving interfaces are the same as each other, and the receiving interfaces is also the same as the matching battery pack mounting interface 51-I of the external power tool 50-I. That is, a same battery pack 30-I can be mounted on both the power tool 50-I and the battery pack receiving apparatus 100-I. However, because a rated output voltage of a single battery pack is different from a rated output voltage of a battery pack receiving apparatus, the external power tool 50-I needs to have voltage adaptability. A same battery pack mounting interface can receive both a low voltage input and a high voltage input. Certainly, in another optional embodiment, the receiving interface may alternatively be different from the matching battery pack mounting interface 51-I of the external power tool 50-I.

In another embodiment, the battery pack receiving recesses 5-I has various specifications, that is, may receive battery packs 30-I of various specifications, and a fixed rated output voltage of the electrical energy output interface 91-I is implemented by configuring a suitable series-parallel circuit relationship between the battery pack receiving recesses 5-I. For example, the rated voltage of the electrical energy output interface 91-I is 108 V, and the battery pack receiving recesses 5-I may include one 54V battery pack receiving recess 5-I and two 27V battery pack receiving recesses 5-I. The battery pack receiving recesses 5-I are connected to each other in series. The battery pack receiving recesses 5-I may alternatively include several groups of battery pack receiving recesses 5-I that are connected to each other in parallel, and an output voltage of each group of battery pack receiving recesses 5-I is 108 V. However, the battery pack receiving recesses 5-I in each group are connected in series. For example, one group of battery pack receiving recesses 5-I includes three 36V battery pack receiving recesses that are connected in series; another group of battery pack receiving recesses 5-I includes two 54V battery pack receiving recesses 5-I that are connected in series, and still another group of battery pack receiving recesses 5-I includes one 54V battery pack receiving recess 5-I and two 27V battery pack receiving recesses 5-I; and the like. There may further be many other similar combination manners, which are no longer enumerated.

In this embodiment, receiving interfaces of the battery pack receiving recesses 5-I have various specifications, that is, the battery pack receiving apparatus 100-I may receive battery packs 30-I of various specifications. Moreover, at least one receiving interface is the same as the external the battery pack mounting interface 51-I of the power tool 50-I, and the electrical energy output interface 91-I matches the battery pack mounting interface 51-I of the power tool 50-I. However, another receiving interface of the battery pack receiving apparatus 100-I may be the same as or may be different from the battery pack mounting interface of the power tool 50-I, and may match or may not match the electrical energy output interface 91-I. Certainly, in another optional implementation of this embodiment, none of the receiving interfaces may be the same as the external the battery pack mounting interface 51-I of the power tool 50-I, and it is only ensured that the electrical energy output interface 91-I matches the battery pack mounting interface 51-I of the power tool 50-I.

In another embodiment of the present disclosure, the battery pack receiving apparatus further includes a transformer located between the electrical energy output interface 91-I and the receiving interface. The transformer converts an input voltage at an end of the receiving interface into a rated output voltage at an end of the electrical energy output interface. In this way, the battery pack receiving apparatus may have more flexible configuration manners for battery pack receiving recesses, and a series and/or parallel relationship between the receiving interfaces does not need to be used to provide a particular rated output voltage. In this embodiment, when battery packs received in the battery pack receiving apparatus meet a minimal quantity and/or a voltage requirement, the transformer controls the battery pack receiving apparatus to output a predetermined rated output voltage, for example, 80 V, 100 V, 108 V or 120 V

As discussed above, in several embodiments of the present disclosure, the rated output voltage of the electrical energy output interface 91-I is above 80 V. For a relatively high rated output voltage, the advantage of the wearable battery pack receiving apparatus 100-I can particularly be fully utilized. A high voltage usually means a relatively large output power and battery capacity, that is, a relatively large weight. Therefore, user experience is significantly improved when the wearable battery pack receiving apparatus 100-I is carried. Correspondingly, the battery pack receiving apparatus 100-I of the present disclosure is particularly suitable for use in a power tool that needs a high output power and/or high battery capacity. The power tool is, for example, a chainsaw, a lawn mower or pruning shears.

In another embodiment of the present disclosure, the rated output voltage of the electrical energy output interface 91-I is adjustable. In this way, the battery pack receiving apparatus may provide energy to various power tools having different input voltages, thereby improving the application scope of the product.

Specifically, the battery pack receiving apparatus 100-I further includes a transformer and a voltage regulator connected to the transformer. The transformer is located between the electrical energy output interface and the receiving interface, and converts an input voltage at an end of the receiving interface into a rated output voltage at an end of the electrical energy output interface. The voltage regulator adjust a value of the rated output voltage.

To adapt to power tools of various types, in this embodiment, an adjustment range the value of the rated output voltage is between 20 V and 120 V

The voltage regulator may be an operation interface for a user to directly specify a rated output voltage, or may adaptively adjust a monitoring apparatus for a rated output voltage according to a working condition.

For example, the operation interface may be one voltage adjustment knob. The voltage adjustment knob is located on the main body 1-I or on the electrical energy output device, and has multiple shifts, for example, 20 V, 28 V, 40 V, 56 V, 80 V, 100 V, 108 V, 112 V, and 120 V. Certainly, the voltage adjustment knob may alternatively be steplessly adjustable. In another implementation, the operation interface may alternatively be another suitable form such as a push button and a touch panel, and details are no longer described herein.

The monitoring apparatus monitors a signal or parameter at the electrical energy output interface 91-I, and adjusts the value of the rated output voltage according to the signal or parameter.

In an implementation, there are various types of electrical energy output interface 91-I that are separately suitable for being mounted on various different power tools. For example, an electrical energy output interface is suitable for being mounted on a small electric drill, and an electrical energy output interface is suitable for being mounted on a large lawn mower. These different power tools have different input voltages. Various types of electrical energy output interfaces 91-I are interchangeably mounted on the wearable battery pack receiving apparatus 100-I. In an implementation, the electrical energy output interface 91-I itself is separately replaced as one component. In another implementation, the electrical energy output interface 91-I and the electrical energy output device are replaced as a whole. The monitoring apparatus monitors a signal or parameter representing a type of the electrical energy output interface 91-I, and adjusts the value of the rated output voltage according to the type. For example, when the type of the electrical energy output interface 91-I adapts to an electrical energy output interface of a 20V electric drill, the monitoring apparatus enables, according to the type, the transformer to adjust the rated output voltage of the battery pack receiving apparatus 100-I to 20 V. When the type of the electrical energy output interface 91-I adapts to an electrical energy output interface of a 56V lawn mower, the monitoring apparatus enables, according to the type, the transformer to adjust the rated output voltage of the battery pack receiving apparatus 100-I to 56 V In an implementation, the electrical energy output interface 91-I may send a recognition signal to the battery pack receiving apparatus 100-I, where the recognition signal indicates the type of the electrical energy output interface 91-I. In another implementation, an electronic component such as a recognition resistor is built in the electrical energy output interface 91-I. The monitoring apparatus correspondingly selects a suitable rated output voltage according to an interface type output by a parameter driving circuit of the recognition resistor.

In an implementation, the electrical energy output interface 91-I has a standard specification, but can be mounted on various power tools 50-I on a same interface platform. The power tools on the platform have different input voltages. The monitoring apparatus monitors a signal or parameter representing a type of a power tool, and adjusts the value of the rated output voltage according to the type. For example, when recognizing that the power tool is a 20V electric drill, the monitoring apparatus enables, according to the type, the transformer to adjust the rated output voltage of the battery pack receiving apparatus 100-I to 20 V When recognizing that the power tool is a 56V lawn mower, the monitoring apparatus enables, according to the type, the transformer to adjust the rated output voltage of the battery pack receiving apparatus 100-I to 56 V In an implementation, the power tool 50-I may send a recognition signal to the battery pack receiving apparatus 100-I, where the recognition signal indicates the type of the power tool 50-I. In another implementation, an electronic component such as a recognition resistor is built in the power tool 50-I. The monitoring apparatus correspondingly selects a suitable rated output voltage according to an interface type output by a parameter driving circuit of the recognition resistor.

In another embodiment of the present disclosure, the battery pack receiving apparatus further includes a charger for charging a received battery pack. The charger has a charging interface that can be connected to an external power supply. In this way, the battery pack receiving apparatus 100-I may be connected to an external power supply such as mains electricity, and charges a battery pack in the battery pack receiving apparatus 100-I.

In another embodiment of the present disclosure, parts that may contact human body, for example, the main body, the wearable component, and/or the like of the battery pack receiving apparatus, includes an insulation protection layer, so as to prevent human body from injury when a battery pack has electricity leakage, a short circuit, or the like. In some embodiments of the present disclosure, the overall rated output voltage of the battery pack receiving apparatus is already greater than 80 V The voltage of a single pack may be up to 50 V or even higher. An insulation layer may be provided to prevent severe accidental injury.

In some embodiments of the present disclosure, a rated output voltage of a single battery pack 30-I is already relatively large, for example, is above 50 V or even above 100 V In this way, the battery pack 30-I is usually relatively thick and heavy, and the thickness of the battery pack 30-I is usually greater than 10 CM. The weight of the battery pack 30-I is also considerable. After multiple battery packs are combined, the total weight may be up to 10 kilograms or higher. It may be seen that after the multiple battery packs 30-I are filled in the battery pack receiving apparatus 100-I, the entire battery pack receiving apparatus 100-I is heavy. In addition, because the battery packs have large thickness, the overall center of gravity is in the back. When a user carries the battery pack receiving apparatus 100-I on the back, the body of the user easily tilt backward, resulting in poor experience and a particular risk of falling. To resolve this problem, as shown in FIG. 1-I, in some embodiments of the present disclosure, a single battery pack 30-I is designed to be relatively thin and is generally elongated, for example, has a strip shape or an L shape. The thickness of a thinnest position of a part, receiving a battery, of the battery pack 30-I is less than 5 cm. At most two layers of batteries are received in the thickness direction of the battery pack 30-I. In this way, after the battery pack receiving apparatus 100-I is filled in the battery pack 30-I, the overall center of gravity is close to the user, so that it is relatively not easy for the user to tilt backward, so as to achieve comfort and safety.

However, because the volume of a battery pack with particular capacity has a lower limit, after the battery pack 30-I is made relatively thin, the length and width of the battery pack 30-I correspondingly increase. In this case, it is relatively not easy to mount the battery pack 30-I on the power tool 50-I. For this reason, as shown in FIG. 4-I to FIG. 6-I, in an implementation of the present disclosure, the battery pack 30-I is foldable, and at least includes a first body 33-I and a second body 35-I. The first body 33-I and the second body 35-I separately receive several batteries. A battery in the first body 33-I and a battery in the second body 35-I are electrically connected to each other. Moreover, the first body 33-I and the second body 35-I are connected in a mutually displaceable manner. The battery pack interface 31-I is arranged on the first body 33-I. In this embodiment, the first body 33-I and the second body 35-I are connected in a foldable manner, and have an unfolded state shown in FIG. 4-I and a folded state shown in FIG. 5-I. In an unfolded state, the overall length of the battery pack 30-I is large and the overall thickness of the battery pack 30-I is small, and the battery pack 30-I is suitable for being mounted in the battery pack receiving apparatus 100-I. In the folded state, the overall length of the battery pack 30-I is small and the overall thickness of the battery pack 30-I is large, and the battery pack 30-I is suitable for being mounted on the power tool 50-I. In another optional embodiment, the first body 33-I and the second body 35-I may alternatively be disposed to be connected to each other in a slideable manner.

To enable the center of gravity of the battery pack receiving apparatus 100-I in the form of a back pack to be as near as possible to the back of a user, in this embodiment, the main body 1-I has a bottom for being attached to the back of a user, and multiple battery pack receiving recesses 5-I are disposed on the main body 1-I. The battery pack receiving recesses 5-I are tiled at the bottom, and are not overlapped with each other to become thick.

In another embodiment of the present disclosure, a housing of the battery pack 30-I is made of a flexible material. The shape of the battery pack 30-I may change within a particular range. For example, the battery pack 30-I may have an unfolded state shown in FIG. 7-I and a rolled state shown in FIG. 8-I. In the unfolded state, the battery pack 30-I is relatively thin and is used to be suitable for being mounted in the battery pack receiving apparatus 100-I, so that the center of gravity is near the front. In the rolled state, as shown in FIG. 9-I, the battery pack 30-I may be sleeved over a rod of the power tool 50-1 or another elongated portion suitable for rolled mounting.

Because the overall rated output voltage of the battery pack receiving apparatus 100-I is relatively large, a possible heat generation problem is relatively severe during working. Therefore, in an implementation of the present disclosure, as shown in FIG. 10-I, a vent hole 15-I is provided on the battery pack receiving apparatus 100-I, facilitating timely elimination of the heat dissipated from the battery pack 30-I. Specifically, the vent hole 15-I is arranged on a lateral surface of the battery pack receiving apparatus 100-I.

Because a user probably wears the battery pack receiving apparatus 100-I to work in a severe outdoor working condition, the battery pack receiving apparatus 100-I is consequently susceptible to rain or exposed to a high humidity environment. Therefore, in an implementation of the present disclosure, as shown in FIG. 10-I, the main body 1-I of the battery pack receiving apparatus 100-I includes a bag body 13-I and a cover 11-I. The battery pack receiving recesses 5-I is disposed in the bag body 13-I. The cover 11-I operatively closes and opens the bag body 13-I.The cover 11-I includes a waterproof layer. Preferably, as shown in FIG. 10-I, the edge of the cover 11-I covers but does not seal the vent hole 15-I for both waterproofing and heat dissipation.

During working and transportation, the battery pack receiving apparatus 100-I may be susceptible to relatively intense vibration, and intense vibration leads to risks such as burning and explosion of a battery pack. Therefore, as shown in FIG. 11-I, in an implementation of the present disclosure, a shock absorber structure is disposed between the battery pack receiving recesses 5-I, for example, a safety airbag 17-I or soft rubber. In this embodiment, the battery pack 30-I matching the battery pack receiving recesses is preferably a battery pack having a relatively low voltage, for example, a battery pack having a voltage less than 60 V or even less than 40 V or 30 V. Because a relatively low voltage has a relatively low risk of burning or explosion or relatively minor damage, the standard for the shock absorber structure may also be relatively low, so that the costs of production and transportation can be reduced.

Second, specific implementations under the guidance of the second inventive concept are described with reference to FIG. 1-II to FIG. 37-II.

As shown in FIG. 1-II, a working system in this embodiment is formed of an electrical energy transmission apparatus 1-II, an energy storage component 3-II, and an electrical device 5-11. The electrical energy transmission apparatus 1-II and the energy storage component 3-II form an electrical energy supply apparatus. The electrical energy transmission apparatus 1-II is electrically connected between the energy storage component 3-II and the electrical device 5-II, and transfers electrical energy stored in the energy storage component 3-II to the electrical device for the electrical device to work. The energy storage component 3-II is a DC power supply, and specifically includes one or more battery packs. The electrical device 5-II is a DC device 21-II and/or an AC device 23-II, for example, a DC appliance, a DC power tool, an AC appliance or an AC power tool.

The electrical energy transmission apparatus 1-II includes an input component 11-II, an adapter component 15-II, and an output component 13-II. The input component 11-II is connected to the energy storage component 3-II to receive an electrical energy input. The output component 13-II is connected to the electrical device to output electrical energy to the electrical device. The adapter component 15-II is connected between the input component 11-II and the output component 13-II, converts electrical energy received by the input component 11-I1 into electrical energy suitable for use by the electrical device, and transmits the electrical energy to the output component 13-II.

Continuing to refer to FIG. 1-II, the output component 13-II includes a DC device interface 17-II and an AC device interface 19-II. ADC output interface 17-II is connected to the DC device 21-II to output electrical energy to the DC device 21-II. An AC output interface 19-II is connected to the AC device 23-II to output electrical energy to the AC device 23-II.

Referring to FIG. 2-II, the energy storage component includes a primary energy storage module 71-II, the primary energy storage module 71-II includes several secondary energy storage modules 73-II, and the secondary energy storage modules 73-II includes several tertiary energy storage modules 75-II.

The primary energy storage module 71-II is a battery pack 27-II. The battery pack 27-II can work independently to supply power to a matching electrical device 5-II. The battery pack 27-II has an independent housing, a control circuit, and an electrical energy output terminal. The electrical energy output terminal is located on the housing of the battery pack 27-II. The electrical energy output terminal of the battery pack 27-II includes a positive electrode and a negative electrode, and in some embodiments, further includes several signal electrodes. The secondary energy storage modules 73-11 have a same specification and consistent rated voltages. The secondary energy storage module 73 has an independent electrical energy output terminal, but is fixedly mounted inside a battery pack housing and cannot be detached from the battery pack 27-II for separate use. The electrical energy output terminal of the secondary energy storage module 73-II is also located on the housing of the battery pack 27-II. The electrical energy output terminal of the secondary energy storage module 73-II includes a positive electrode and a negative electrode, and in some embodiments, further includes several signal electrodes. In an embodiment, the secondary energy storage module 73-II also has an independent control circuit. The tertiary energy storage module 75-II is a cell itself and does not have an independent housing and an independent control circuit.

In this embodiment, the energy storage component 3-II includes multiple primary energy storage modules 71-II. However, in an optional alternative solution, the energy storage component 3-II only includes one primary energy storage module 71-II.

In this embodiment, at least one primary energy storage module 71-II includes multiple secondary energy storage modules 73-II. However, in an optional alternative solution, each primary energy storage module 71-II only includes one secondary energy storage module 73-II.

In this embodiment, the secondary energy storage module 73-II includes multiple tertiary energy storage modules 75-II.

Multiple specific configuration solutions of energy storage components are described below. In an embodiment, at least one primary energy storage module 71-II includes multiple secondary energy storage modules 73-II. For example, as shown in FIG. 3-II and FIG. 4-II, the rated voltage of the secondary energy storage module 73-II is 20 V, and the secondary energy storage module 73-II is formed of 5 tertiary energy storage modules 75-II whose rated voltage is 4 V connected in series. The energy storage component 3-II includes 6 secondary energy storage modules 73-II in total. Every three secondary energy storage modules 73-II form one battery pack 27-II. That is, the energy storage component 3-II includes two battery packs 27-II whose rated voltages are 60 V In this embodiment, the rated voltage of the secondary energy storage module 73-II is a divisor of an AC standard 120V voltage in US regions. In this way, a sum of rated voltages of several secondary energy storage modules 73-II is just equal to the AC standard voltage in US regions. For example, the sum of rated voltages of the 6 secondary energy storage modules 73-II in this embodiment is 120 V In such a concept, the rated voltage of the secondary energy storage module 73-II may alternatively be 10 V, 40 V or 60 V. Similarly, the rated voltage of the secondary energy storage module 73-II may alternatively be a divisor of an AC standard voltage in another district, for example, a divisor of an AC standard voltage 220 V in China, a divisor of an AC standard voltage 230 V in the UK, a divisor of an AC standard voltage 110 V in some other districts. Details are not described.

In another embodiment, at least one primary energy storage module 71-II only includes one secondary energy storage module 73-II. For example, the energy storage component 3-II also includes 6 secondary energy storage modules 73-II whose rated voltage is 20 V As shown in FIG. 5-II and FIG. 6-II, a difference lies in that every secondary energy storage module 73-II forms one battery pack 27-II. That is, the energy storage component includes 6 battery packs whose rated voltages are 20 V In another embodiment, at least two primary energy storage modules 71-II have different quantities of secondary energy storage modules 73-II. For example, the energy storage component 3-II also includes 6 secondary energy storage modules 73-II whose rated voltages are 20 V In FIG. 7-II, a difference lies in that three secondary energy storage modules 73-II together form one battery pack 27-II, and additionally the three secondary energy storage modules 73-II separately form one battery pack 27-II. That is, the energy storage component 3-II includes one battery pack 27-II whose rated voltage is 60 V, and further includes three battery packs 27-II whose rated voltages are 20 V In another embodiment, as shown in FIG. 8-II, the energy storage component 3-II also includes 6 secondary energy storage modules 73-II whose rated voltage is 20 V A difference lies in that every two secondary energy storage modules 73-II together form one battery pack 27-II. That is, the energy storage component 3-II includes three battery packs 27-II whose rated voltage is 40 V

The foregoing configuration solutions are only examples. A person skilled in the art can understand that the foregoing configuration solutions do not constitute any limitation on the present disclosure, and another configuration solution is also feasible. For example, the sum of rated voltages of multiple secondary energy storage modules 73-II in the foregoing solution is 120 V However, in another optional solution, the sum may be 160 V, 200 V, 240 V, or the like. Details are not described.

A standard secondary energy storage modules 73-II is provided and a series and/or parallel relationship between the secondary energy storage modules 73-II is configured in the electrical energy transmission apparatus 1-II to implement multiple voltage outputs. In this embodiment, a DC-DC voltage converter does not need to be disposed, so that the costs are reduced and the energy utilization efficiency is improved.

The following describes a manner of connection between the energy storage component and the input component.

As shown in FIG. 9-II, the input component 11-II includes a battery pack interface 28-II connected to the battery pack 27-II. The quantity of battery pack interfaces 28-II and a connection structure and a port arrangement of a single battery pack interface 28-II match the quantity of battery packs 27-II of the energy storage module 3 and a connection structure and a port arrangement of a single battery pack 27-II. In this embodiment, there are two battery pack interfaces 28-II used to receive two 60V battery packs 27-II.

As discussed above, the housing of the battery pack 27-11 has an electrical energy output terminal of the entire battery pack, and further has electrical energy output terminals of the secondary energy storage modules 73-II. However, the battery pack interface 28-II only has input terminals matching the electrical energy output terminals of the secondary energy storage modules 73-II, but does not have an input terminal matching the electrical energy output terminal of the battery pack 27-II. That is, from the perspective of a circuit, the input component directly connects the secondary energy storage modules to the electrical energy transmission apparatus, but does not have the level of a battery pack. In another optional embodiment, the battery pack interface further includes an input terminal connected to an electrical energy output terminal of a battery pack itself.

In the design, the battery pack interface 28-II of the input component 11-II can be connected to all the battery packs 27-II of the energy storage component 3-II. However, during use, the battery pack interface 28-II of the input component 11-II is not necessarily always connected to all the battery pack 27-II.

The energy storage component 3-II including two 60V battery packs 27-II is used as an example. The battery pack interface 28-II correspondingly includes two 60V battery pack interfaces. However, according to actual use, one or two 60V battery packs 27-II may be connected to the input component 11-II.

The energy storage component 3-II including six 20V battery packs 27-II is used as an example. The battery pack interface 28-II correspondingly includes six 20V battery pack interfaces. However, according to actual use case, the input component 11-II may be connected to 1 battery pack 27-II to 6 battery packs 27-II.

The energy storage component 3-II including one 60V battery pack and three 20V battery packs is used as an example. The battery pack interface 28-II correspondingly includes one 60V the battery pack interface and three 20V battery pack interfaces. However, according to actual use case, the input component 11-II may be connected to one 60V battery pack 27-II, or may be connected to three 20V battery packs 27-II, or may be connected to another quantity of battery packs 27-II and another type of battery packs 27-II.

The energy storage component 3-II including three 40V battery packs 27-II is used as an example. The battery pack interface 28-II correspondingly includes three 40V battery pack interfaces. However, according to actual use, the input component may be connected to one 40V battery pack 27-II to three 40V battery packs 27-II.

The following describes the adapter component 15-II.

The adapter component 15-II is located between the input component 11-11 and the output component 13-II of the electrical energy transmission apparatus 1-II, and converts electrical energy received by the input component 11-II into a suitable form and provides the electrical energy in the suitable form to the output component 13-II.For example, via series and/or parallel configuration, the connected secondary energy storage modules 73-II output different voltages to the output component 13-II in different scenarios. In this embodiment, the adapter component 15-II enables the six 20V secondary energy storage modules 73-IIvia series and/or parallel configuration to output voltages such as 20 V, 40 V, 60 V, 80 V, 100 V, and 120 V.

FIG. 10-1-II is used as an example. A first series-parallel circuit 31-II includes an input terminal 35-II and an output terminal 36-II. There are 6 pairs of input terminals, which are separately connected to positive and negative electrodes of six 20V secondary energy storage modules 73-II. A pair of output terminals is connected to the output component to supply electric energy to the output component. The 6 pairs of input terminals are connected to each other in parallel and are then connected to the output terminals, so that the output terminals outputs 20V DC electrical energy to the output component.

FIG. 10-2-II is used as an example. Similarly, positive and negative electrodes of six 20V secondary energy storage modules 73-II are all connected to a second series-parallel circuit 32-II. Every two pairs of input terminals are connected in series to form one group. Three groups of input terminals are connected to each other in parallel and are then connected to the output terminal, so that the output terminal outputs 40V DC electrical energy to the output component.

FIG. 10-3-II is used as an example. Similarly, positive and negative electrodes of six 20V secondary energy storage modules 73-II are all connected to a third series-parallel circuit 33-II. Every three pairs of input terminals are connected in series to form one group. Two groups of input terminals are connected to each other in parallel and are then connected to the output terminal, so that the output terminal outputs 60V DC electrical energy to the output component.

FIG. 10-4-II is used as an example. Similarly, positive and negative electrodes of six 20V secondary energy storage modules 73-II are all connected to a fourth series-parallel circuit 34-II. The 6 pairs of input terminals are connected to each other in series and are then connected to the output terminal, so that the output terminal outputs 120V DC electrical energy to the output component.

An adapter component 3 further includes a control module. The control module selectively connects one of the series-parallel circuits to the output component according to a voltage that the output component needs to output, so as to output a suitable voltage externally. In an optional embodiment, the adapter component may select a series-parallel circuit by directly using a structural cooperation instead of an electronic control form. For example, four series-parallel circuits are arranged in the adapter component in a manner of being isolated from each other. When a specific adapter or another terminal is inserted in a DC device connection terminal, one specific series-parallel circuit is connected to the circuit.

In this embodiment, the adapter component 3 further includes an inverter, configured to convert a DC power provided by a battery pack into an AC power and provide the AC power to the output component.

The following describes the output component 13-II in this embodiment.

As shown in FIG. 11-II, the output component 13-II includes a DC device interface 41 and an AC device interface 51.

The DC device interface 41 is used to connect a DC device and supply power to the DC device. The AC device interface 51 is connected to the AC device and supply power to the AC device. In this embodiment, the DC device interface includes 4 DC device connection terminals 43-II, separately outputting DC powers whose rated voltages are 120 V, 60 V, 40 V, and 20 V As discussed above, the DC voltages are obtained by the multiple standard secondary energy storage modules 73-II via suitable series and/or parallel configurations, and are then output to the DC device connection terminals 43-II. After a specific DC device connection terminal 43-II is connected to the DC device 21-II, the adapter component 15-II controls a corresponding series-parallel circuit to be connected to each secondary energy storage module 73-II of the input component 11-II, and the series-parallel circuit forms a needed specific voltage, and provides the specific voltage to the specific DC device connection terminal 43-II in the output component 13-II. For example, when a 60V DC device connection terminal 43-II is connected to the DC device 21-II, the adapter component 15-II is triggered to connect a third series-parallel circuit 33 to the secondary energy storage module 73-II, so as to obtain a 60V voltage and output the 60V voltage to the 60V DC device connection terminal 43-II. In this way, the electrical energy supply apparatus does not need a DC-DC transformer circuit to perform boosting or voltage reduction, so as to reduce energy loss during voltage conversion.

As shown in FIG. 19-II, the DC device connection terminal 43-II is connected to the DC device 21-II via an adapter 61-II. A case in which the DC device is a power tool 100-II is used as an example. The DC device connection terminal 43-II can be connected to different power tools 100-II via different adapters. For example, a 20V DC device connection terminal is connected to a power tool 100-II via one adapter 61-II, where the power tool 100-II is an electric drill. The adapter 61-II has an input terminal 63-II and an output terminal 65-II. The input terminal 63-II matches the 20V DC device connection terminal, and an electrical energy interface of the output terminal matches a battery pack interface of the electric drill. That is, the electrical energy interface is the same as an electrical energy interface of an original battery pack on the electric drill. Similarly, 40V, 60V, and 120V DC device connection terminals are separately equipped with corresponding adapters 61-II, so as to output energy to 40V, 60V, and 120V power tools 100-II. The power tools 100-II may be chainsaws, lawn mowers, or the like.

The AC device interface 51 includes an AC device connection terminal. The AC device connection terminal has a standard AC socket form. However, according to different use districts, the AC device connection terminal may be a European Standard socket, an American Standard socket, a Chinese Standard socket or a socket of another standard. The AC device connection terminal can output DC electrical energy. Specifically, in this embodiment, the AC device connection terminal includes a first port 53-II and a second port 55-II. The first port 53-II outputs a DC power to the AC device. The second port 55-II outputs an AC power to the AC device 23-II.

In this embodiment, the first port 53-II can externally output DC electrical energy whose rated voltage is 120 V As discussed above, the rated voltage is obtained via a series-parallel connection of multiple secondary energy storage modules 73-II. Because the rated voltage value of each secondary energy storage module 73-II is a divisor of an AC standard a 120V voltage, a 120V voltage may be obtained by connecting multiple secondary energy storage modules 73-II in series. In this way, the rated voltage of the DC electrical energy is basically equivalent to an AC standard voltage in a specific district, so as to obtain the capability of driving an AC device 23-II in the district.

The second port 55-II can externally output AC electrical energy whose rated voltage is 120V An inverter 81-II performs AC-DC conversion to obtain the rated voltage. Specifically, an adapter part 15 first obtains a 120V DC power via the series-parallel circuit, then converts the 120V DC power via the inverter 81-II into a 120V AC power, and outputs the 120V AC power to the second port 55-II. To control the volume and power consumption of an inverter, the maximum power of the inverter in this embodiment is 300 W. According to a specific orientation and application scenario of a product, the maximum power of the inverter may change within a relatively large range, for example, 100 W, 200 W, 500 W, 1 KW or even 2 KW.

Even if rated voltage values match each other, the conduction of a DC power to the AC device 23-II still has a particular risk. The reason of this is mainly that some electric elements inside some AC devices 23-II cannot work normally at a DC power. A burnout may occur or an AC device may not work. For example, if the AC device 23-II includes an inductive motor or another inductive element, when a DC power is conducted, the inductive motor may burn out. If the AC device 23-II includes a speed adjustment apparatus or a speed stabilization apparatus, when a DC power is conducted, the AC device 23-II may not work. Moreover, because the AC power output by the AC device connection terminal is restricted by the maximum power of the inverter 81-II, even if when an AC power is output, the AC device connection terminal is not suitable for supplying power to some high-power AC devices. To resolve one or more of these problems, as shown in FIG. 12-II and FIG. 13-II, the electrical energy transmission apparatus 1-II further includes an output selection module 80-II. The output selection module 80-II selects a working energy output manner of the AC device connection terminal according to a characteristic of the AC device 23-II connected to the AC device connection terminal. For example, the output selection module 80-II detects whether the AC device 23-II on the AC device connection terminal is suitable for being driven by a DC power to work. For example, if yes, the AC device connection terminal outputs a DC power. Otherwise, the AC device connection terminal does not to output a DC power. For another example, the output selection module 80-II detects whether the AC device on the AC device connection terminal is a device whose power is less than a specific value. If yes, the AC device connection terminal outputs a low-power AC power. Otherwise, the AC device connection terminal does not output an AC power. Refer to the following description for details.

After the AC device connection terminal detects that an AC device 23-II is connected on the AC device connection terminal, before outputting working energy, the AC device connection terminal first outputs test energy used to test a characteristic of the AC device 23-II. The characteristic represents a working parameter of the AC device under the test energy. Then the output selection module 80-II selects a working energy output mode according to the working parameter. For example, the output selection module 80-II selects to output DC electrical energy, to output AC electrical energy or not to output working energy. The magnitude of the test energy is controlled to be less than the working energy, so as to prevent the AC device from being damaged. In this embodiment, the test energy is restricted via a preset manner, for example, an output power and/or an output time of the test energy is restricted.

After the working parameter of the AC device is obtained via the test energy, the output selection module determines whether the working parameter meets a preset condition, so as to correspondingly select a working energy output mode. For example, if the working parameter meets a turn-off condition, the output selection module selects not to output working energy. If the working parameter meets a DC output condition, the output selection module selects to output DC working energy. If the working parameter meets an AC output condition, the output selection module selects to output AC working energy.

A circuit principle used by the output selection module 80-II to implement switching between the output of DC electrical energy and the output of AC electrical energy is described below with reference to FIG. 12-II and FIG. 13-II.

As shown in FIG. 12-II, the output selection module 80-II includes the battery pack 27-II and the inverter 81-II, further includes one a bypass controller 85-II. The bypass controller 85-II can selectively control whether to connect the inverter 81-II to an electrical energy transmission path. In the state in FIG. 12-II, the bypass controller 85-II close two switches 87-II at two ends of the inverter 81-II in FIG. 12-II to control the inverter 81-II to be connected to the electrical energy transmission path. The inverter converts the DC electrical energy output by the battery pack into AC electrical energy, and transfers the AC electrical energy to the AC device connection terminal in the output component 13-II. The AC device connection terminal transfers the AC electrical energy to the AC device. In this embodiment, the voltage provided at the battery pack is 120 V, and an AC voltage output after conversion by the inverter is also 120 V It should be noted that the battery pack shown here is only exemplary. In practice, multiple battery packs may be connected in series to form a 120V voltage.

In FIG. 13-II, the bypass controller 85-II enables the circuit transmission path to bypass the inverter. The switches 27 at two ends of the inverter are opened, and the switch 87-II between the battery pack and the AC device connection terminal is closed, so as to directly provide electrical energy at the battery pack 27-II to the AC device 23-II.

In this embodiment, the test energy includes DC test energy and AC test energy. Correspondingly, the working parameter also includes a DC working parameter and an AC working parameter. The following describes in detail how to select a working energy output manner according to the DC working parameter, the AC working parameter, and a preset determining condition.

FIG. 14-II is a working flowchart of the system when a first port of the output DC working energy is connected to the AC device.

As shown in FIG. 14-II, first, the first port outputs AC test energy. The AC test energy is provided by the inverter. That is, the AC test energy is a 120V AC power. A rated power of the AC test energy means the rated power of the inverter is small, for example, less than 300 W. A relatively small inverter can reduce the volume and costs of the system.

Then, a test current I1 under the AC test energy is detected. Because the operation is still unstable at the initial stage after the AC device is powered on, the current fluctuates relatively widely. In this embodiment, the current value of the test current I1 is detected after a preset time after the AC device is powered on, where the preset time is specifically 3 seconds. In addition, because the detection of the value of a DC power is simpler and more reliable than the detection of the value of an AC power, the test current I1 is a DC power before inversion.

In the step of applying the AC test energy to the AC device, the system restricts the test energy via a manner of restricting the output power of the AC test energy, and moreover, also restricts the test energy via a manner of restricting the output duration of the AC test energy. For example, after the value of the test current I1 is measured, the system stops outputting the AC test energy, that is, restricts the output duration to 3 seconds.

After the test current I1 is measured, the first port stops outputting the AC test energy, and switches to output DC test energy to the AC device. The DC test energy is a 120V DC power.

Then, a test current I2 under the DC test energy is detected. In addition, because the operation is still unstable at the initial stage when the AC device is powered on, in this embodiment, the current value of the test current I2 is detected after a preset time after the AC device is powered on. However, at the same time, because a risk exists when a DC power is conducted to the AC device, during the test, the power-on time of the DC power also cannot be excessively long. In this embodiment, the DC power is further turned off within a preset power-on time. Specifically, in this embodiment, the test current I2 is detected after the AC device is powered on for 0.5 second, and the output of the DC power is cut off instantly after the detection is completed. Similarly, because the detection of the value of a DC power is simpler and more reliable than the detection of the value of an AC power, the test current I2 is a DC power before inversion, and a sampling position of the test current I2 is the same as a sampling position of the test current I1.

In the step of applying the DC test energy to the AC device, the system restricts the test energy via a manner of restricting the output duration of the DC test energy. That is, after the value of the test current I2 is measured, the system stops outputting the DC test energy.

After the value of the test current I1 and the value of the test current I2 are obtained, the output selection module 80-II compares the values of the test current I1 with the test current I2. If the relationship between the values of the test current I1 and the test current I2 meets a DC output condition, the first port outputs DC working energy. If the relationship does not meet the DC output condition or meets a turn-off condition, the first port does not output working energy.

This procedure mainly detects whether a risk of a burnout exists when a DC power is connected to the AC device 23-II. As discussed above, the risk of a burnout mainly involves an inductive load such as an inductive motor in the AC device 23-II. The inductive load works normally at an AC power. However, at a DC power, after the current becomes stable, there is basically no resistance. As a result, the AC device 23-II is short circuited or the resistance is much less than that during normally working, and further the current becomes excessively large to cause a burnout. Based on this characteristic of an inductive load, this procedure mainly determines whether the test current I2 under DC test energy is much greater than the test current I1 under AC test energy. If I2 is much greater than I1, it indicates that the impedance that exists when an AC power is connected to the AC device 23-II is much greater than the impedance that exists when a DC power is connected. That is, it indicates that it is a large-probability event that an inductive load exists in the AC device. In this case, the output selection module 80-II selects not to output working energy. If a value difference between I2 and I1 is within a proper range, for example, I2 and I1 are basically equivalent, or a proportional relationship or difference between I2 and I1 is within a preset range, or even I2 is less than I1, it indicates that it is a large probability event that no inductive load exists in the AC device. In this case, the output selection module 80-II selects to output DC working energy.

Based on the foregoing determining principle, the DC output condition in this embodiment is I2 < 10^{∗}I1, and correspondingly, the turn-off condition is I2 ≥ 10^{∗}I1. In another embodiment, the DC output condition is I2 < 5^{∗}I1, and correspondingly, the turn-off condition is I2 ≥ 5^{∗}I1. In another embodiment, the DC output condition is I2 < I1 + 10A, and correspondingly, the turn-off condition is I2 ≥ I1 + 10A. Specific determining conditions are different according to different application scenarios, and are no longer enumerated herein.

FIG. 15-II is a working flowchart of the system when the AC device 23-II is connected to the second port 55-II. The second port 55-II outputs DC working energy.

As shown in FIG. 15-II, first, the second port 55-II outputs AC test energy. The AC test energy is provided by the inverter 81-II. That is, the AC test energy is a 120V AC power. A rated power of the AC test energy is the rated power of the inverter 81-II, and is, for example, less than 300 W.

Then, a test current I1 under the AC test energy is detected. Because the operation is still unstable at the initial stage when the AC device 23-II is powered on, the current fluctuates relatively widely. In this embodiment, the current value of the test current I1 is detected after a preset time after the AC device 23-II is powered on, where the preset time is specifically 3 seconds. Similarly, the test current I1 is a DC power before inversion.

In the step of applying the AC test energy to the AC device 23-II, the system restricts the test energy via a manner of restricting the output power of the AC test energy, and moreover, also restricts the test energy via a manner of restricting the output duration of the AC test energy. For example, after the value of the test current I1 is measured, if it is determined not to output AC working energy, the system stops outputting the AC test energy, that is, restricts the output duration to 3 seconds.

After the test current I1 is measured, the output selection module 80-II compares the test current I1 with a preset current value. If a value relationship between the test current I1 and the preset current value meets the AC output condition, the second port outputs AC working energy. If the value relationship does not meet the AC output condition, or meets the turn-off condition, the second port does not output AC working energy.

In this embodiment, the AC output condition is that the test current I1 is less than the preset current value, for example, is less than the preset current value 2.5 A. The turn-off condition is that the test current I2 is greater than the preset current value, for example, is greater than the preset current value 2.5 A.

After the AC working energy is output, the system still continues detecting the output power of the second port 55-II. If the output power is less than a preset value, the second port 55-II keeps outputting AC working energy. If the output power is greater than the preset value, the second port 55-II is turned off and stops outputting AC working energy.

This procedure mainly detects whether the load of the connected AC appliance 23 is within the bearing range of the electrical energy supply apparatus. More specifically, it is detected whether the power of the connected AC device is below a rated power of a DC-AC inverter 81-II. For example, if the rated power of the inverter is 300 W and the AC output voltage is 120 V, the test current I1 should be less than 2.5 A. If it is measured during detection that the test current is greater than 2.5 A, the output selection module determines that the load of the AC device is excessively large and exceeds the bearing range of the inverter 81-II, the output selection module selects not to output AC working energy. Similarly, when it is measured during working that the working current greater is than 2.5 A, the output selection module also selects to be turned off, and stops the output of AC working energy.

In this embodiment, the output power of the DC working energy of the first port is greater than the output power of the AC working energy of the second port. For example, the output power of the first port may be above 2 KW or even reach 5 KW. However, the output power of the second port is only between 200 W and 500 W.

The configurations of the AC device interface 19-II in this embodiment are to optimize the comprehensive performance of the electrical energy transmission efficiency, costs, volume, and adaptive surface of the system. This electrical energy supply apparatus uses a battery pack as a DC power supply to achieve exemplary portability, so that a user can carry the electrical energy supply apparatus to various occasions in which no electrical energy is supplied and use the electrical energy supply apparatus as a power supply. The occasions are, for example, picnics or outdoor work.

However, many electrical devices, for example, various chargers, microwave ovens or AC power tools, are AC devices. Usually, a DC source electrical energy supply apparatus cannot supply power to these AC devices. The reason of this is mainly that if the electrical energy supply apparatus is to provide an AC power output, an inverter needs to be equipped to perform AC-DC conversion. The AC-DC conversion has two major disadvantages: 1. The electrical energy consumption is large in and conversion process, and is usually above 25%. In consideration of that a DC source such as a battery pack has a limited storage capability, this degree of consumption greatly reduces a working time, affecting the usability of the product. 2. An inverter has high costs, a large volume, and a heavy weight, and the costs, volume, and weight of an inverter increase as the rated output power of the inverter increases. As a result, the electrical energy supply apparatus is expensive and bulky, which suppresses clients' desire to purchase and use the electrical energy supply apparatus. If a DC power is directly supplied to the AC device, the potential dangers described above may exist.

To resolve the foregoing problem, the AC device interface in this embodiment provides a DC voltage output that is basically equivalent to an AC voltage, that is, an AC voltage output with low power consumption. In this way, an AC device such as a microwave oven and an AC tool with relatively high power consumption is powered via DC electrical energy. Therefore, the efficiency loss is low, and the working time is long. Moreover, an output selection circuit is used to avoid supply of power to an AC device that is not suitable for being driven by a DC, thereby ensuring safety. Moreover, low-power AC appliances such as various chargers and lamps are powered via AC electrical energy. Although there is still a loss in conversion efficiency, because power consumption is low, the total energy loss is small. Moreover, because an inverter has low power consumption, the costs and volume of the electrical energy supply apparatus are not significantly increased. In conclusion, the AC device interface in this embodiment meets the power supply requirements of most of the AC devices, the costs and volume are not significantly increased, and the total energy loss is small.

FIG. 16-II is a schematic diagram of an output component according to another embodiment of the present disclosure. Similarly, the output component includes a DC device interface 41-II and an AC device interface 51-II. Different from the foregoing embodiment, the DC device interface 41-II and the AC device interface 51-II in this embodiment both include only one output terminal. The DC device connection terminal 43-II of the DC device interface 41-II can output multiple voltages. The AC device connection terminal 53-II of the AC device interface 51-II can output DC electrical energy and AC electrical energy.

The DC device connection terminal 41-II selects different output voltages according to connected devices. As shown in FIG. 11-II, in this embodiment, the DC device connection terminal supplies power to a DC device via the adapter 61-II. The DC device connection terminal recognizes different adapters to select different output voltages. Specifically, the shape of the DC device connection terminal 43-II is basically one jack. The adapter has an input terminal 63-II and an output terminal 65-II. The input terminal 63-II is a plug matching the jack. The output terminal 65-II matches a power supply input terminal of the DC device. For example, the DC device is a power tool 100-II equipped with a detachable battery pack, and the output terminal of the adapter is consistent with an interface part of a battery pack of the power tool, so that the output terminal of the adapter can be connected to the power tool 100-II to supply power to the power tool 100-II.

As shown in FIG. 17-II, multiple terminals are arranged in the jack-shaped DC device connection terminal 43-II, and further include, in addition to positive and negative power supply terminals 45-II, multiple recognition terminals 47-II. Multiple terminals are also arranged on an input terminal of the adapter shown in FIG. 18-II, and further include, in addition to positive and negative power supply terminals 67-II, one feature terminal 69-II. Matching guide structures are disposed on a jack and a plug, so that the plug can be inserted in the jack at only a specific angle, and when the plug is inserted, positive and negative terminals of the plug and the jack are joined to each other, and the feature terminal 69-II is connected to a specific recognition terminal 47-II. In this way, the DC device interface 17-II of the output component 13-II can determine, via a feature terminal 69-II connected to the recognition terminal 47-II, a model of the connected adapter 61-II, and correspondingly output a specific voltage.

In this embodiment, four adapters 61-II are provided. After input terminals 63-II of the four adapters 61-II are connected to the DC device connection terminals 43-II, the DC device connection terminals 43-II are separately triggered to provide 20V, 40V, 60V, and 120V DC working energy. Output terminals 65-II of the four adapters 61-II are separately suitable for being connected to 20V, 40V, 60V, and 120V power tools 100-II.

Similar to the previous embodiment, as shown in FIG. 20-II, for the AC device connection terminal, specifically, a first port 53-II is also a standard AC jack, and a plug of an AC device may be inserted in the standard AC jack. A difference lies in that the output selection module determines a type of the AC device via test energy, and selects to output DC working energy, to output AC working energy or not to output working energy.

FIG. 21-II is a working flowchart of the system when the AC device connection terminal in this embodiment is connected to the AC device 23-II.

As shown in FIG. 21-II, first, the AC device connection terminal outputs AC test energy. The AC test energy is provided by the inverter. That is, the AC test energy is a 120V AC power. A rated power of the AC test energy, that is, a rated power of the inverter, is less than a specific value, for example, less than 300 W.

Then, a test current I1 under the AC test energy is detected. Because the operation is still unstable at the initial stage when the AC device is powered on, in this embodiment, the current value of the test current I1 is detected after a preset time after the AC device is powered on, where the preset time is specifically 3 seconds. Similar to the previous embodiment, the test current I1 is a DC power before inversion.

In the step of applying the AC test energy to the AC device, the system restricts the test energy via a manner of restricting the output power of the AC test energy, and moreover, also restricts the test energy via a manner of restricting the output duration of the AC test energy. For example, after the value of the test current I1 is measured, if it is determined not to output AC working energy, the system stops outputting the AC test energy, that is, restricts the output duration to 3 seconds.

After the test current I1 is measured, the output selection module 80-II compares the test current I1 with the preset current value. If a value relationship between the test current I1 and the preset current value meets an AC output condition, the AC device connection terminal outputs AC working energy. In this embodiment, the AC output condition is that the test current I1 is less than the preset current value, for example, is less than the preset current value 2.5 A.

After outputting the AC working energy, the system still continues detecting the output power of the AC device connection terminal. If the output power is less than the preset value, the AC device connection terminal keeps outputting AC working energy. If the output power is greater than the preset value, the AC device connection terminal is turned off and stops outputting AC working energy.

The step mainly detects whether the load of the connected AC device 23-II is within the bearing range of the electrical energy supply apparatus. If the output selection module 80-II determines that the load of the AC device is excessively large and exceeds the bearing range of the inverter 81-II, the output selection module 80-II selects not to output AC working energy. Similarly, if it is measured during the output of working energy that the test current is greater than 2.5 A, the output selection module also selects to be turned off and stops outputting AC working energy.

When the output selection module 80-II compares the test current I1 with the preset current value, if a value relationship between the test current I1 and the preset current value does not meet the AC output condition, the output selection module 80-II continues detecting whether the AC device 23-II is suitable for being connected to DC working energy. Specifically, the AC device connection terminal stops outputting the AC test energy, and switches to output DC test energy to the AC device 23-II. The DC test energy is a 120V DC power.

Then, the test current I2 under the DC test energy is detected. Similarly, because the operation is still unstable at the initial stage when the AC device 23-II is powered on, in this embodiment, the current value of the test current I2 is detected after a preset time after the AC device 23-II is powered on. However, moreover, because a risk exists when a DC power is connected to the AC device, during the test, the power-on time of the DC power also cannot be excessively long. In this embodiment, the DC power is further turned off within a preset power-on time. Moreover, in this embodiment, the test current I2 is detected after the AC device 23-II is powered on for 0.5 second, and the output of the DC power is cut off instantly after the detection is completed. Moreover, because the detection of the value of a DC power is simpler and more reliable than the detection of the value of an AC power, the test current I2 is a DC power before inversion, and a sampling position of the test current I2 is the same as a sampling position of the test current I1.

In the step of applying the DC test energy to the AC device 23-II, the system restricts the test energy via a manner of restricting the output duration of the DC test energy. That is, after the value of the test current I2 is measured, the system stops outputting the DC test energy.

After the value of the test current I1 and the value of the test current I2 are obtained, the output selection module 80-II compares the test current I1 with the test current I2. If a value relationship between the test current I1 and the test current I2 meets the DC output condition, the connection terminal of the AC device 23-II outputs DC working energy. If the relationship does not meet the DC output condition or meets the turn-off condition, the connection terminal does not output working energy.

Same as the previous embodiment, the DC output condition in this embodiment is I2 < 10^{∗}11, and correspondingly, the turn-off condition is I2 ≥ 10^{∗}I1.

In this embodiment, the DC device interface 17-II only has one DC device connection terminal 43-II, and multiple voltages are output via one port. A user does not need to select an interface and only needs to connect the DC device 21-II to the DC device connection terminal 43-II to enable the DC device connection terminal 43-I1 to output a corresponding voltage, so that the operation is relatively simple and direct. The AC device 23-II also has only one AC device connection terminal. A user only needs to connect the AC device 23-II to the AC device connection terminal to enable the AC device connection terminal to automatically detect a characteristic of the AC device, and correspondingly outputs DC working energy or AC working energy or does not output working energy. The operation is simple and direct.

The following describes another embodiment of the present disclosure with reference to FIG. 22-II.

As shown in FIG. 22-II, an electrical energy transmission apparatus 1-II includes an input interface 101-II, a control circuit 102-II, and an AC device interface 19-II. Similar to the foregoing embodiment, the input interface 101-II is connected to one or more battery packs 27-II, to receive a DC electrical energy input of the battery pack 27-II. The AC device interface 19-II is connected to an AC device, and transfers electrical energy received from the foregoing the battery pack 27-II to the AC device.

The control circuit 102-II is located between the input interface 101-II and the AC device interface 19-II, and is configured to control an electrical energy output manner of the AC device.

The control circuit 102-II includes a controller 110-II, a conversion circuit 103-II, a detection unit 105-II, a power-off unit 107-II, a DC driving unit 112, an AC driving unit 114-II, and an output selection unit 116-II. The control circuit 102-II further includes another specific element needed to implement various functions. Details are not described.

The conversion circuit 103-II is connected to the input interface 101-II, gathers electrical energy of the battery pack 27-II, and transfers the electrical energy to the control circuit. Specifically, the DC energy storage module formed of two 60V battery packs is used as an example. The two 60V battery packs include six 20V secondary energy storage modules 73-II in total. The input interface 101-II correspondingly includes 6 groups of input terminals. Each group of input terminals includes a pair of positive and negative electrodes. The conversion circuit 103-II is connected to the 6 groups of input terminals, gathers electrical energy of the 6 groups of input terminals, and outputs the electrical energy into the control circuit 102-II via a pair of a positive terminal and a negative terminal. In this embodiment, the conversion circuit 103-II is a series circuit obtained by connecting the 6 groups of input terminals in series, to output 120V DC electrical energy.

The electrical energy output by the conversion circuit 103-IIhas two output paths. For one path, the electrical energy is output to the AC device interface through the DC driving unit and the output selection unit. The DC driving unit does not change an AC-DC form of electrical energy, and only regulates external output of DC electrical energy. For the other path, the electrical energy is output to the AC device interface through the AC driving unit and the output selection unit. The AC driving unit converts DC electrical energy into AC electrical energy for output. The AC driving unit may be a DC-AC inverter.

The output selection unit 116-II alternatively connects the DC driving unit 112 and the AC driving unit 114-II to the AC device interface 19-II, so that the AC device interface 19-II does not simultaneously output DC electrical energy and AC electrical energy. The detection unit 105-II detects a running parameter of the control circuit. The running parameter is, for example, a detection current or voltage.

The power-off unit 107-II is configured to turn off electrical energy output of the control circuit to the AC device interface 19-II.

The controller 110-II connects the various components and units, and is configured to control the functions of the control circuit 110. As shown in FIG. 23-II, the controller 110-II includes a test control unit 1101-II, a detection control unit 1102-II, a safety determining unit 1103-II, and an output control unit 1104-II. The test control unit 1101-II controls the output selection unit 116-II to enable the control circuit 110 to output test energy to the AC device interface 19-II. The detection control unit 1102-II receives a test running parameter measured by the detection unit 105-II under the test energy. The safety determining unit 1103-II determines, according to the test running parameter, whether the AC device connected to the AC device interface 19-II is suitable for being driven by DC electrical energy or AC electrical energy to work. An output control unit 116 receives a determining result of the safety determining unit 1103-II, and controls the output selection unit 116-II to correspondingly connect one of the DC driving unit 112 and the AC driving unit 114-II to the AC device interface 19-II, or controls the control circuit 110 to turn off electrical energy output to the AC device interface 19-II.

Specifically, when the safety determining unit determines that the AC device connected to the AC device interface is suitable for being driven by DC electrical energy, the output control unit controls the output selection unit to connect the DC driving unit to the AC device interface. When the safety determining unit determines that the AC device connected to the AC device interface is suitable for being driven by AC electrical energy, the output control unit controls the output selection unit to connect the AC driving unit to the AC device interface. When the safety determining unit determines that the AC device connected to the AC device interface is neither suitable for being driven by an AC circuit nor suitable for being driven by DC electrical energy, the output control unit controls the control circuit to turn off electrical energy output to the AC device interface.

Similar to the foregoing embodiment, the test energy includes DC test energy and AC test energy. Output duration and/or output powers of the DC test energy and the AC test energy are restricted by preset parameters. Correspondingly, the running parameter includes a DC running parameter under DC test energy and an AC running parameter under AC test energy. The safety determining unit determines, according to a relative relationship between the DC running parameter and the AC running parameter, whether the AC device is suitable for being driven by DC electrical energy or AC electrical energy to work. A specific relative relationship between the DC running parameter and the AC running parameter is similar to that in the foregoing embodiment, and is not repeatedly described.

The AC device interface 19-II in this embodiment may only have one AC device connection terminal. The AC device connection terminal is a single port, and may output both DC electrical energy and AC electrical energy. The AC device interface may also have two AC device connection terminals. One AC device connection terminal can output DC electrical energy, another the AC device connection terminal can output AC electrical energy, and more preferably, one AC device connection terminal can output only DC electrical energy. The other AC device connection terminal can output only AC electrical energy. The AC device connection terminal is a standard AC socket.

In this embodiment, a start switch 261-II of the electrical energy transmission apparatus is disposed in an output port, that is, the AC device connection terminal, of the AC device interface. The start switch 261-II controls the electrical energy transmission apparatus to be turned on or off. When a power supply connector of the AC device is connected to the output port, the start switch 261-II is triggered to be turned on. When the power supply connector is detached from the output port, the start switch 261-II is triggered to be turned off. Specifically, the start switch 261-II is a micro switch. In another embodiment, the start switch 261-II may alternatively be disposed in an output port at another position, for example, an output port of a DC device interface.

In this embodiment, when an electrical device connected to the AC device interface has not been working for a long time, the controller instructs the electrical energy transmission apparatus to be turned off to save electrical energy of a battery pack. Specifically, the detection unit 105-II detects a load condition of a connected electrical device. The power-off unit 107-II can be selectively turned off to stop electrical energy output of the electrical energy transmission apparatus to the electrical device. When the load condition meets a preset condition, the controller instructs the power-off unit to be turned off. The preset condition is that the load is less than a preset value and reaches preset duration. Specifically, the detection unit detects a current in a control point circuit to detect the load condition of the electrical device. In another embodiment, when an electrical device connected to another type of output port (for example, the output port of the DC device interface) has not been working for a long time, the controller also instructs the electrical energy transmission apparatus to be turned off to save electrical energy of a battery pack. Specific manners and logic are similar, and are no longer elaborated.

In a similar embodiment, the controller of the control circuit also includes a test control unit, a detection control unit, a safety determining unit, and an output control unit. A difference lies in that the safety determining unit determines, according to the test running parameter, whether the AC device connected to the AC device interface is suitable for being driven by AC electrical energy to work. The output control unit receives a determining result of the safety determining unit, controls the output selection unit to correspondingly connect the AC driving unit to the AC device interface, or controls the control circuit to turn off electrical energy output to the AC device interface.

In a similar embodiment, the control circuit also includes a controller 110-II, a conversion circuit 103-II, a detection unit 105-II, a power-off unit 107-II, a DC driving unit 112-II, an AC driving unit 114-II, and an output selection unit 116-II. A difference of this embodiment lies in that the AC driving unit 114-II does not include a DC-AC inverter, but instead, includes a bridge circuit. The bridge circuit converts DC electrical energy input by the conversion circuit 103-II into an alternating square wave current, and transmits the alternating square wave current to the AC device interface 19-II. A maximum output power of the AC driving unit 114-II is greater than 500 W, or furthermore, is greater than 1000 W, 1500 W or 2000 W. The frequency of the alternating square wave current is between 50 Hz and 200 Hz.

The inverter can provide a sinusoidal AC, but has high costs, a large volume, and high energy consumption in conversion. The bridge circuit can provide only a square wave AC, but has the advantages of low costs, a small volume and low energy consumption, and is also applicable to most AC appliances.

In a similar embodiment, the AC driving unit 114-II of the control circuit also does not include a DC-AC inverter, but instead, includes a bridge circuit. The bridge circuit converts DC electrical energy input by the conversion circuit 103-IIinto an alternating square wave current, and transmits the alternating square wave current to the AC device interface 19-II. A difference of this embodiment lies in that the control circuit no longer provides a DC electrical energy output, and correspondingly, does not include the DC driving unit and the output selection unit.

In a similar embodiment, the AC driving unit 114-II of the control circuit also does not include a DC-AC inverter, but instead, includes a bridge circuit. The bridge circuit converts DC electrical energy input by the conversion circuit 103-II into an alternating square wave current, and transmits the DC electrical energy to the AC device interface 19-II. Moreover, the electrical energy transmission apparatus further includes the DC device interface and a related circuit, and form an electrical energy transmission system with an adapter. The specific content of this embodiment is similar to a related structure in another embodiment, and are no longer repeatedly described.

The following describes a working system of the present disclosure with reference to FIG. 24-II.

As shown in FIG. 24-II, the working system includes an energy storage component, an electrical energy transmission apparatus 1-II, the adapter 61-II, and a DC tool 130-II. The energy storage component is specifically a battery pack 27-II. The electrical energy transmission apparatus 1-II is connected to the battery pack 27-II, has an input interface 101-II to connect the battery pack 27-II and receive an electrical energy input of the battery pack 27-II, and further has a DC device interface 17-IIto connect a DC device and supply power to the DC device. The adapter 61-II is connected between the DC device interface 17-II of the electrical energy transmission apparatus 1-II and a DC device 130-II, and transmits electrical energy of the electrical energy transmission apparatus 1-II to the DC device.

The electrical energy transmission apparatus 1-II and the adapter 61-IIform an electrical energy transmission system.

The energy storage component includes two 60V battery packs 27-II. Each 60V battery pack includes six 20V secondary energy storage modules 73-II. Each secondary energy storage module 72 has a group of power supply terminals. Each group of terminals includes a pair of positive and negative electrodes. Moreover, each battery pack further has at least one group of signal terminals. In this embodiment, each battery pack has one group of temperature terminals, for example, T+ and T- shown in the figure. In this way, 8 terminals in 4 groups are arranged on an output interface of each battery pack. Two battery packs have 16 terminals in 8 groups.

Corresponding multiple groups of terminals are arranged on the input interface 101-II of the electrical energy transmission apparatus 1-II, that is, 16 terminals in 8 groups are arranged to be joined one by one to terminals of two battery packs 27-II. Multiple groups of terminals are also correspondingly arranged on the DC device interface 17-II of the electrical energy transmission apparatus 1-II. Specifically, 16 terminals in 8 groups are arranged to be connected one by one to multiple groups of terminals on the input interface 101-II. In this way, the electrical energy transmission apparatus 1-II directly leads out terminals of the secondary energy storage module 72-II to a DC device interface 101. The adapter 61-II has an input interface, a series-parallel circuit, and an output interface. The input interface of the adapter 61-II may be detachably connected to the DC device interface 101-II, and terminals on the input interface correspond one by one to terminals on the DC device interface 101. The series-parallel circuit 30-II is connected to multiple groups of terminals of the input interface, and input electrical energy is converted into a preset voltage by configuring a series and/or parallel relationship between the multiple groups of terminals, and the preset voltage is transferred to the output interface of the adapter 61-II. The output interface of the adapter 61-II matches a corresponding DC device, and can be joined to the corresponding DC device, so as to supply electric energy to the DC device.

In a variant form of this embodiment, the electrical energy transmission apparatus has four 60V the battery pack interfaces, and correspondingly, 16 groups of terminals are arranged on the input interface to be joined one by one to terminals of the two battery packs 27-II. However, a difference lies in that, terminals of the input interface do not correspond one by one to the DC device interface, but instead, every two groups of power supply terminals are connected in parallel to form a group of power supply terminals. In this way, when two battery packs or 4 battery packs are inserted at four 60V battery pack receiving recesses, the electrical energy transmission apparatus may work normally, and the layout of terminals does not need to be changed for the adapter in the two scenarios.

In this embodiment, there are multiple adapters 61-II. The adapters 61-II are interchangeably connected to the DC device interface, and at least two output voltages are not the same as each other. It may be understood that different output voltages are implemented via different series-parallel circuits. For example, a series-parallel circuit of an adapter connects every two input terminals, other than a signal terminal, of the 6 groups of input terminals in parallel, and then connects the input terminals to the output terminals of the adapter in series, so as to externally provide a 60V output voltage. A series-parallel circuit of an adapter connects every three input terminals, other than a signal terminal, of the 6 groups of input terminals in parallel, and then connects the input terminals to the output terminals of the adapter in series, so as to externally provide a 40V output voltage. A series-parallel circuit of an adapter connects the 6 groups of input terminals other than a signal terminal to each other in parallel, and then connects the input terminals to the output terminals of the adapter in series, so as to externally provide a 20V output voltage. A series-parallel circuit of an adapter connects the 6 groups of input terminals other than a signal terminal to each other in series and then connects the input terminals to the output terminal of the adapter, so as to externally provide a 120V output voltage.

The adapter 61-II further includes a battery pack protection circuit 121-II, and specifically, includes at least one of a battery pack overcurrent protection circuit, an undervoltage protection circuit, and an overtemperature protection circuit. When the battery pack protection circuit is disposed in the adapter 61-II instead of being disposed in the electrical energy transmission apparatus 1-II, there are some specific advantages. For example, although same energy storage components, that is, two battery packs, are connected to each adapter, because the series and/or parallel relationships and eventual output voltages are different, the needed protection currents, undervoltage voltage values, and the like are different. However, these output parameters are fixed in each adapter. Therefore, when the battery packs are configured in an adapter, a battery pack can be protected in a more specified manner.

The adapter 61-II further includes a wake-up button. As discussed in the foregoing embodiment, the electrical energy transmission apparatus has a power-off function. When the load connected to the interface is low, the electrical energy output is cut off to save electrical energy of a battery pack. The use of the wake-up button is that after the electrical energy transmission apparatus is powered off, when a user needs to use a tool again, the user presses the button to restart the tool.

A status indicator is further disposed on the adapter 61-II, and is configured to indicate to a user whether the electrical energy transmission apparatus is in a working state or is in a powered-off state.

In this embodiment, the working system includes a series of exception indication apparatuses, for example, a power indication apparatus, an overcurrent indication apparatus or an overtemperature indication apparatus. The exception indication apparatuses may be arranged on an output interface of the adapter. In this way, the exception indication apparatuses are closed to a user and are easily noticeable.

In this embodiment, the DC device 130 is a DC power tool.

In some scenarios, the DC power tool is a high voltage handheld power tool, for example, a power tool that needs a voltage greater than 50 V, greater than 60 V or even greater than 100 V Specifically, a 120V handheld power tool is discussed here. In the scenario, because a battery pack is excessively heavy in a high voltage case, if the battery pack is mounted on the power tool, a user needs to expend more effort, resulting in poor use experience and a falling risk. Therefore, in the scenario, the handheld power tool does not have a battery pack support apparatus, but have only one electrical energy input interface. Correspondingly, the adapter 61-11 includes an input interface, an output interface, and a connecting electric wire located between the input interface and the output interface. The output interface and the connecting electric wire form a cable electrical energy output part.

That is, the battery pack 27-II is supported in the working system via the battery pack support apparatus. The electrical energy transmission apparatus is disposed separately from the DC tool. The electrical energy transmission apparatus outputs electrical energy to the DC tool via the cable electrical energy output part. The battery pack support apparatus is only arranged on the electrical energy transmission apparatus. The electrical energy input interface on the DC tool only includes a port for connecting the cable electrical energy output part.

In some scenarios, the DC power tool is a high Voltage push power tool. Most of the weight of the push power tool is supported on the ground, and has a push handle and a main body, so that a user pushes the push handle with hands to drive the main body to move and work on the ground. A typical example is a push lawn mower.

Because the weight of the push power tool does not need to be carried by a user, a high voltage and relatively heavy battery pack may also be mounted on the power tool. In this way, the power tool in the working system has 2 groups of input interfaces. One group of input interfaces are used to receive the weight and electrical energy of a battery pack, and the other group of input interfaces are used to receive the electrical energy of the electrical energy transmission apparatus. In this embodiment, a battery pack of the power tool the input interface includes two battery pack interfaces that separately receive one 60V battery pack and bear the weight of the 60V battery pack. The electrical energy interface of the electrical energy transmission apparatus is a cable electrical energy output part interface, and is used to connect the cable electrical energy output part.

The cable electrical energy output part is located on the push handle, and more specifically, is located at an upper portion of the push handle. In this way, the reason of such an arrangement is that in this embodiment, the electrical energy transmission apparatus may be a wearable device, for example, a back pack. The push handle is a component that is closest to the body of a user on the push power tool. A cable electrical energy output part that facilitates plugging and unplugging by a user is arranged at the position, and a cable is prevented from being excessively long, dropping on the ground or even tripping a user.

In this scenario, the push power tool can only be powered by one of the battery pack and the cable electrical energy output part, or can be powered by both the battery pack and the cable electrical energy output part. In this scenario, the battery pack interface and the cable electrical energy output part interface of the push power tool are connected in parallel.

The following describes another embodiment of the present disclosure.

Similar to the foregoing embodiment, an electrical energy transmission apparatus includes an input interface, a control circuit, and an output interface. The output interface includes multiple connection terminals for connecting an external device. An interlock mechanism is disposed between multiple connection terminals. The interlock mechanism enables only one of the multiple connection terminals to convey electrical energy to an external electrical device at a same moment. Specifically, the output interface includes a DC device interface and an AC device interface. The DC device interface and the AC device interface separately include at least one connection terminal.

In an embodiment, the interlock mechanism is a mechanical interlock mechanism. The mechanical interlock mechanism includes locking pieces disposed on the connection terminals and linkage pieces between the locking pieces. The locking piece moves between a locking position and an unlocking position. At the locking position, the locking piece forbids the connection terminals from being electrically connected to a power supply terminal of the electrical device. At the unlocking position, the locking piece allows the connection terminals to be electrically connected to the power supply terminal of the electrical device. When any connection terminal is electrically connected to the power supply terminal, the locking piece of the connection terminal is fixed at the unlocking position, and the locking piece drives the linkage piece to enable all other locking pieces to be fixed at the locking position.

Specifically, the connection terminal is a jack, there are two jacks. The mechanical interlock mechanism is one locking rod. The locking rod is located between the two jacks. Two ends of the locking rod movably extend into the two jacks separately to form two locking pieces. A part between the two ends forms the linkage piece.

In another embodiment, the interlock mechanism is an electronic interlock mechanism.

The following describe another embodiment of the present disclosure.

The working system in this embodiment further includes a charger in addition to an energy storage component, an electrical energy transmission apparatus, and an electrical device.

In this embodiment, the energy storage component includes two 60V battery packs. Each battery pack includes three 20V secondary energy storage modules. The charger has two battery pack interfaces, and can charge two battery packs simultaneously.

The charger includes a protection circuit, specifically, has an overcharging protection circuit and an overtemperature protection circuit. The overcharging protection circuit provides separate protection for each secondary energy storage module. The overtemperature protection circuit provides separate protection for each battery pack.

In this embodiment, the charger is integrated in the electrical energy transmission apparatus.

In this embodiment, two battery packs can only be charged simultaneously, but cannot be charged separately. In this way, it may be avoided that double packs have inconsistent voltages and charge each other during working.

In this embodiment, the electrical energy transmission apparatus may be a wearable device, for example, a back pack, a shoulder belt or a waist belt. However, optionally, the electrical energy transmission apparatus may alternatively be a portable case having a handle, or may further have wheels, a push handle or the like.

In an optional embodiment, the electrical energy transmission apparatus may alternatively be one base. A high-power inverter, for example, an inverter whose voltage is greater than 1000 W, is provided in the base, so as to provide high-power AC electrical energy.

In an optional embodiment, the working system further includes one storage box. The storage box has multiple compartments separately for placing the electrical energy transmission apparatus, multiple adapters, and a battery pack. In some embodiments, a small electrical device, for example, a DC power tool, can further be placed. It is convenient for a user to organize and carry the working system.

The following describes another embodiment of the present disclosure with reference to FIG. 25-II to 29-II. This embodiment is basically similar to the first embodiment. Major differences lie in the structures of adapter circuits and different selection manners for series and/or parallel configurations.

In this embodiment, multiple micro switches are arranged between the standard battery units. When the on-off combination of the multiple micro switches change, a series and/or parallel relationship between the standard battery units changes accordingly, further resulting in that combinations of the standard battery units output different voltages, for example, 20 V, 40 V, 60 V, and 120 V as discussed above. A mode selection operation piece 217-II, for example, a knob or a button, is disposed on the operation panel 200-II. The mode selection operation piece 217-II triggers the micro switches via mechanical manners to select different voltage outputs.

As shown in FIG. 25-II, the operation panel 200-II is disposed on an energy storage system, which is also referred to as a power supply system. A switch, the mode selection operation piece 217-II, several electrical energy output interfaces, a circuit input interface (that is, a charging interface 215-II), and several indicator lamps are arranged on the operation panel 200-II. The indicator lamp includes a mode indicator lamp 203-II, a mode indicator lamp 205-II, and an alarm lamp. The mode indicator lamp 203-II displays remaining power via a quantity of bars. The mode indicator lamp 205-II includes one group of lamps located at different positions. The lamps at different positions correspond to different working states. Some lamps indicate an electrical energy output type of the energy storage system, for example, a 12V DC output, a 20V DC output, a 40V DC output, a 60V DC output, a 120V output, or the like. Some lamps indicate that the energy storage system is in a charging mode. In this embodiment, the mode indicator lamps 205-II are correspondingly located near different output interfaces. For example, a 20V DC output indicator lamp is located near a 20V output interface, a charging indicator lamp is located near the charging interface 215-II, and the like. In this way, when a lamp near an interface is on, it represents that the interface is usable, which is intuitive and readily comprehensible. In this embodiment, a 12V DC output interface is a standard car power supply output interface. 20 V, 40 V, and 60 V share one lowVoltage DC output interface 211-II. A 120V AC and a 120V DC share one high voltage output interface 213-11. The low voltage DC output interface 211-II and the high voltage output interface 213-11 are compatible with different plugs. When different plugs are inserted, electrical energy of different types is output.

Several 5V USB output interfaces 207-II are further disposed on the operation panel 200-II.

Referring to FIG. 26-II, 6 standard battery units having a same rated voltage are connected to the series-parallel connection selection circuit of the energy storage system. One two-normally-open two-normally-closed micro switch is connected between every two standard battery units, and there are 5 micro switches in total, that is, K1 to K5 in FIG. 26-II. Each micro switch has a first subswitch and a second subswitch. The first subswitch and the second subswitch are synchronously closed (ON state) and opened (OFF state). When each first subswitch is opened, two positive electrodes of standard battery units at two ends of the first subswitch are connected. When each first subswitch is closed, the connection between the two positive electrodes is turned off. When each second subswitch is turned off, two negative electrodes of standard battery units at two ends of the second subswitch are connected. When each second switch is closed, a negative electrode of a standard battery unit on the left side of the second switch and a positive electrode of a standard battery unit on the right side of the second switch are connected. That is, when the micro switch is closed (ON state), two adjacent standard battery units are connected in series. When the micro switch is opened (OFF state), two adjacent standard battery units are connected in parallel. Via on-off combinations of the 5 micro switches, different series-parallel circuits can be configured, and the battery pack outputs different voltages. In this embodiment, the voltages are specifically 20 V, 40 V, 60 V, and 120 V

Continuing to refer to FIG. 26-II, the series-parallel connection selection circuit further has 4 positive electrode output terminals and relays separately connected to the 4 positive electrode output terminals. The 4 positive electrode output terminals separately output the 4 output voltages. The relays connected to positive electrode output terminals correspond to modes of the energy storage system. That is, when the energy storage system is in a 20V DC output mode, a relay corresponding to a 20V positive electrode output terminal is turned on, and the rest 3 relays are turned off; and the like. An on/off state of a relay is controlled by a controller in the energy storage system. In some embodiments, the controller detects an output voltage of a battery pack to correspondingly control the status of a relay. In some embodiments, the controller detects the status/position of the mode selection operation piece 217-II or the status/position of a micro switch to correspondingly control the status of the relay.

With reference to the following Table 1, FIG. 26-II to 29-II are respectively circuit forms when the series-parallel connection selection circuit outputs 20 V, 40 V, 60 V, and 120 V

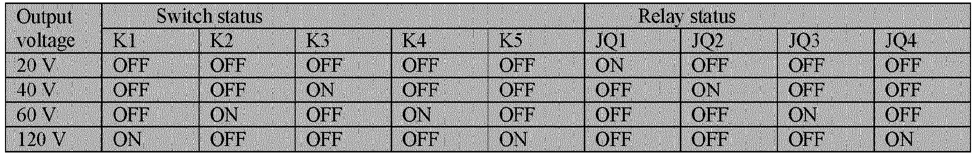

As shown in FIG. 26-II, the series-parallel connection selection circuit configures series and/or parallel relationships among 6 standard battery units, to enable the battery pack to output a 20V voltage. Specifically, the 5 micro switches k1 to K5 are all in an OFF state. The 6 standard battery units are connected to each other in parallel. Moreover, a relay JQ1 is turned on, and the rest relays are turned off. The energy storage system outputs a 20V voltage from a 20V port. As discussed above, the 20V, 40V, and 60V output interfaces are integrated into 1 output interface. After an input terminal of an external adapter is inserted, the input terminal is connected to a negative electrode and the 20V positive electrode output terminal, and receives 20V DC electrical energy.

As shown in FIG. 27-II, the series-parallel connection selection circuit configures series and/or parallel relationships among the 6 standard battery units, so that the battery pack outputs a 40V voltage. Specifically, K1, K2, K4, and K5 of the 5 micro switches are in an OFF state, and K3 is in an ON state. In this way, the first 3 standard battery units of the 6 standard battery units are connected to each other in parallel into one group, and the last three standard battery units are connected to each other in parallel into one group. The two groups are then connected to each other in series, so as to output a 40V voltage. Moreover, the relay JQ2 is turned on, and the rest relays are turned off. The energy storage system outputs a 40V voltage from a 40V port. As discussed above, the 20V, 40V, 60V output interfaces are integrated into one output interface. After an input terminal of an external adapter is inserted, the input terminal is connected to a negative electrode and a 40V positive electrode output terminal, and receives 40V DC electrical energy.

As shown in FIG. 28-II, the series-parallel connection selection circuit configures series and/or parallel relationships among the 6 standard battery units, so that the battery pack outputs a 60 V voltage. Specifically, K1, K3, and K5 of the 5 micro switches are in an OFF state, and K2 and K4 are in an ON state. In this way, every two of the 6 standard battery units are connected to each other in parallel into one group, and there are 3 groups in total. Then the three groups are connected to each other in series, so as to output a 60V voltage. Moreover, the relay JQ3 is turned on, and the rest other relays are turned off. The energy storage system outputs a 60V voltage from a 60V port. As discussed above, the 20V output interface, the 40V output interface, and the 60V output interface are integrated into is one output interface. After an input terminal of an external adapter is inserted, the input terminal is connected to a negative electrode and a 60V positive electrode output terminal, and receives 60V DC electrical energy.

As shown in FIG. 29-II, the series-parallel connection selection circuit configures series and/or parallel relationships among the 6 standard battery units, so that the battery pack outputs a 60V voltage. Specifically, K1 to K5 of the 5 micro switches are all in an ON state. The 6 standard battery units are connected to each other in series, so as to output a 120V voltage. Moreover, the relay JQ4 is turned on, and the rest relays are turned off. The energy storage system outputs a 120V voltage from a 120V port. As discussed above, the 120V DC output interface and the AC output interface are integrated into one output interface. After an external specific plug is inserted, the energy storage system is triggered to select different modes, and supplies power to a DC device or an AC device.

The following describes another embodiment of the present disclosure with reference to FIG. 30-II to FIG. 34-II.

This embodiment is similar to the previous embodiment. A difference lies in that a relay is used to replace a micro switch. The output interface detects a type of a connected plug to automatically output different values or different types of voltages, instead of selecting a working mode of an energy storage device by a using knob.

As shown in FIG. 30-II, in this embodiment, the 5 two-normally-open-two-normally-closed micro switches located between the 6 standard battery units in the previous embodiment are replaced with 5 two-normally-open-two-normally-closed relays JQ1 to JQ5. One driving circuit 270-II is configured on each relay. However, a circuit structure of a series-parallel circuit is not changed, and only components are replaced. After the micro switches are replaced with relays, configured switching of the series-parallel circuit no longer needs to be performed in a mechanical manner, and instead, may be implemented via an electrical control manner. A relationship between an output voltage of a battery pack and on-off of a relay is the same as that in the previous embodiment, and is no longer elaborated here.

In this embodiment, the energy storage system detects a type of a connected electrical device to automatically control on-off of the relays, to implement that a battery pack outputs a voltage value corresponding to the type of the electrical device. Continuing to refer to FIG. 30-II, the electrical device is a DC tool. The DC tool is connected to the energy storage system via an adapter. The adapter includes a tool end 23 1-II to which a DC tool is connected, an electrical energy input terminal 233-II connected to an output interface of the energy storage system, and a transmission cable 235-II connecting the tool end 231-II and the electrical energy input terminal 233-II.

As shown in FIG. 31-II to 34-II, adapters having different output voltages have different electrical energy input terminals 233-II. FIG. 31-11 to 34-II are schematic diagrams of electrical energy output of 20V, 40V, 60V, and 120V adapter terminals. It may be seen from the figures that all adapters have a positive terminal 241-II, a negative terminal, a trigger piece 245-II, and a switch pole 247-II. On the electrical energy input terminals 233-II, the position of the negative terminal is the same as the position of the switch pole 247-II. The positive terminal 241-II and the trigger piece 245-II have different positions.

A DC output interface of the energy storage system is compatible with the electrical energy output terminals. As shown in FIG. 30-II, a negative terminal, a 20V positive terminal 253-II, a 40V positive terminal 255-II, a 60V output terminal, a 120V output terminal, a 20V sensing component, a 40V sensing component, a 60V sensing component, a 120V sensing component, and a start switch 261-II are disposed on the DC output interface. The positions of the positive electrode terminals and sensing components correspond to the positions of the positive terminals 241-II and the trigger pieces 245-II on the electrical energy input terminals 233-II. Therefore, when an electrical energy input terminal 233-II of a 20V adapter is connected to the DC output interface, the 20V positive terminal 253-II is joined to the 20V positive electrode port. The trigger piece 245-II triggers the 20 V sensing component; and the like. Details are no longer elaborated. At a same moment, the DC output interface only can be connected to one electrical energy input terminal 233-II. In this embodiment, the trigger piece 245-II is magnetic steel, and the sensing component is a Hall sensor. Specifically, the magnetic steel on the electrical energy input terminal 233-II approaches the Hall sensor at a corresponding position, to enable the Hall sensor to generate a signal. After receiving the signal, the MCU sends an instruction to control the relays to be in a suitable on/off state, so as to enable the battery pack to output a voltage matching the adapter.

A start switch 261-II on the DC output interface is linked to a power-up switch correlation of the overall energy storage system. Therefore, when the start switch 261-II is turned on, the energy storage system is turned on and powered up. When the start switch 261-II is turned off, the energy storage system is not powered up, and basically does not consume electrically. The start switch 261-II corresponds to the position of the switch pole 247-II on the electrical energy input terminal 233-II. When the electrical energy input terminal 233-II is inserted in the DC output interface, the switch pole 247-II is held against the start switch 261-II to enable the start switch 261-II to be turned on. When the electrical energy input terminal 233-II is unplugged from the DC output interface, the start switch 261-II is reset and turned off, and the energy storage system is turned off.

After the start switch 261-II is turned on, by default, one standard battery unit is first enabled to supply power to a control circuit such as a controller. The control circuit determines the type of a connected adapter via a received signal of a sensing component, and correspondingly controls on-off states of the relays, to enable the battery pack to output a target voltage. After on/off states of the relays are switched, the entire battery pack supplies power to the control circuit.

A safety switch is further arranged between an overall output terminal and a DC output interface of a battery pack. The on/off of the safety switch is controlled by the control circuit. When detecting that the output voltage of the battery pack is consistent with a target voltage corresponding to the type of the adapter, the control circuit instructs the safety switch to be turned on. If not, the control circuit controls the safety switch to be turned off. Such a design may avoid that the output voltage of the battery pack is inconsistent with the target voltage needed by the adapter because one or more of the relays in the series-parallel circuit accidentally fail, and eventually prevent a DC electrical device from being accidentally damaged or even burning out. In this embodiment, the safety switch is a MOS transistor. The reliability of a MOS transistor switch is higher than that of a relay switch, so that the risk of an output voltage error is reduced.

For safety still, in this embodiment, when the relays configured by the series-parallel circuit are in a normally-open state, the series-parallel circuit enables the battery pack to output a 20V voltage. The benefit of this is that a relay fails usually for the reason that the relay cannot not close rather than the reason that the relay cannot be turned off. Therefore, in a circuit configuration in this embodiment, even if a relay fails, a voltage can only be excessively low, for example, is in a 20V state, and cannot cause severe damage to the electrical device.

In this embodiment, when the energy storage system is charged, the battery pack is configured to a completely parallel state also via the series-parallel circuit. That is, the rated voltage of the battery pack is 20 V In this way, during charging, the standard battery units are connected to each other in parallel, and automatic charging balance can be implemented during charging. Even if the standard battery units have inconsistent actual voltages, a consistent voltage can be automatically obtained during charging. The manner may be that a specific standard battery unit used when the system is powered up is used to perform compensatory charging.

The following describes another embodiment of the present disclosure with reference to FIG. 35-II. This embodiment is approximately the same as the previous embodiment. A difference between the embodiments lies in that two single switch relays are used to replace one dual normally-open/dual normally-closed relay in the previous embodiment. However, the structure of the series-parallel circuit is not changed. As shown in FIG. 35-II, in this embodiment, the series-parallel circuit includes 10 relays JQ1 to JQ10. Each relay is correspondingly equipped with one driving circuit 270-II. Similar to the previous embodiment, a DC output interface of the energy storage system detects a type of a connected electrical device, and correspondingly determines a target voltage that needs to be output to control on/off states of the relays, so as to obtain the target voltage and output the target voltage to the electrical device.

An advantage of replacing one dual normally-open/dual normally-closed relay with the two single switch relays lies in that, the technology of a single switch relay is mature and has a relatively large maximum current, which facilitates large-scale purchase and production.

The following describes another embodiment of the present disclosure with reference to FIG. 36-II. This embodiment is approximately the same as the embodiment corresponding to FIG. 35-II. Two single switch relays are also used to replace one dual normally-open/dual normally-closed relay. There are in total 10 relays JQ1 to JQ10. A difference between the embodiments lies in that, in this embodiment according to the present invention, an optical coupler 271-II is arranged between two paired single switch relays. A double-relay group formed of JQ1 and JQ2 is used as an example. The optical coupler 271-II is disposed between JQ1 and JQ2. The light emitting electrode of the optical coupler 271-II is disposed between a conduction electrode of the relay JQ1 and a negative electrode of a first standard battery unit. A light receiving electrode of the optical coupler 271-II is disposed in a driving circuit 270-II of the relay JQ2. When a relay first needs to be switched from a turned-off state to a turned-on state, a controller sends a turn-on instruction to a driving circuit 270-II of JQ1. A driver drives JQ1 to switch from a turned-off state to a turned-on state. After JQ1 is turned on, the light emitting electrode is triggered to be turned on and emit light, the light receiving electrode detects a light ray and is then turned on, so as to trigger the driving circuit 270-II of the relay JQ2 to working to enable the relay JQ2 to switch from a turned off state to a turned-on state. Other pairs of relays have a same configuration, and an optical coupler 271-II is disposed in all the other pairs of relays, so that a second relay is turned on only when a paired first relay is turned on first. In this way, the optical coupler 271-II is disposed to ensure that a second relay is not separately turned on when a first relay fail, and as a result, a battery is short circuited.

The following describes another embodiment of the present disclosure. The energy storage system in this embodiment also includes multiple standard battery units. The standard battery units have an equal voltage, and one battery pack includes multiple standard battery units. However, when a voltage needed by an electrical device connected to the energy storage system is equal to a voltage of a standard battery unit, the energy storage system directly uses one of the multiple standard battery units to supply power to the electrical device, but does not enable another standard battery unit. After the use of the electrical device is completed, the energy storage system directly uses other multiple standard battery units to charge a used standard battery unit. The energy storage system does not need to be connected to an external power supply for charging. The charging circuit may be disposed in a battery pack, or may alternatively be disposed in a body of the energy storage system. Similar to the foregoing embodiment, the energy storage system may detect the type of a connected electrical device to control on/off states of the relay to configure a series-parallel circuit, so as to implement that only one standard battery unit is powered by the electrical device. A knob or the like may also be configured to control a micro switch to implement the same function. Specific circuit connection forms are no longer elaborated.

The following describe another embodiment of the present disclosure.

The energy storage system in this embodiment is similar to the embodiment in FIG. 21-II. A detection procedure is provided to determine the type of a connected AC electrical device, and a DC power or an AC power is selectively output. Moreover, in this embodiment, the AC driving circuit 270-II includes a boost circuit. The boost circuit performs boost processing on a battery pack voltage, for example, boosts a 120V voltage to a 125V or 130V voltage. In this embodiment, the boost circuit raises an output voltage of a battery pack by only a small amplitude. For example, the amplitude of rise is within 20%. A specific form of the boost circuit is known to a person skilled in the art, and is not elaborated. In this embodiment, the inverter may be a conventional DC-AC inverter, and converts a DC power into a sinusoidal AC power, or may be a simplified H-bridge circuit, and converts a DC power into a square-wave AC power.

The following describe another embodiment of the present disclosure. The energy storage system in this embodiment is similar to the previous embodiment. A detection procedure is provided to determine the type of a connected AC electrical device, and a DC power or an AC power is selectively output. In this embodiment, the AC driving circuit 270-II includes a boost circuit. A difference lies in that, in this embodiment, the output DC power is an interruptive DC power.

Similar to the embodiment in FIG. 21-II, in this embodiment, during supply of power to an AC appliance, a detection unit of the AC driving circuit 270-II detects the load or power of the electrical device. When the power of the AC appliance is less than a first preset threshold, for example, 200 W, the AC driving circuit 270-II supplies power to an AC appliance via a DC-AC inverter. The DC-AC inverter converts a DC power input into a sinusoidal AC power and output the sinusoidal AC power. In addition, the boost circuit is started when an AC power is output, to enable that an eventual output AC power voltage is greater than an output DC power voltage of a battery pack. The boost circuit is optionally located at a front end or rear end of the DC-AC inverter. When the boost circuit is located at the front end of the DC-AC inverter, the boost circuit is a DC boost circuit, and boosts a DC power voltage of a battery pack and transfers the boosted DC power voltage to the DC-AC inverter. When the boost circuit is located at the rear end of the DC-AC inverter, the boost circuit is an AC boost circuit, and boosts an AC power voltage output by the DC-AC inverter and transfers the boosted AC power voltage to the output interface. In this embodiment, the detection of a load is implemented through detection of a current value. A specific detection manner is the same as above, and is no longer elaborated.

When the power of the AC appliance is greater than a first preset threshold and less than a second preset threshold, for example, is greater than 200 W and less than 2000W, the AC driving circuit 270-II provides an interruptive DC power to the AC appliance. That is, a current direction is unchanged, but a DC power is periodically interrupted within a preset time. The form is shown in FIG. 37-II. The DC power may prevent an arcing phenomenon from occurring on some switch devices because of continuous accumulation of current.

When the power of the AC appliance is greater than the second preset threshold, the AC driving circuit 270-II is interrupted.

Before a continuous DC power, the energy storage system determines whether the AC the electrical device is suitable for at a DC power. In addition to the determining algorithm in the embodiment in FIG. 21-II, in this embodiment, it is further detected whether a control power supply of an AC appliance has a transformer for voltage reduction. Usually, a detection circuit is disposed in an electric appliance with a control function, and detects one or more parameter values. The electric appliance is started only when the parameter value meets a preset condition. For example, a refrigerator has a temperature detection circuit. When the temperature is greater than a threshold, a compressor is started to perform refrigeration, instead of directly starting a compressor after the refrigerator is powered on. For these electric appliances, the processing logic in this embodiment is as follows:
In a first case, if the electrical device is in a working state, a main power consumption device is directly started. In this case, the DC-AC inverter first supplies power to a device, and a current value I1 is detected after a particular time. The output power of the DC-AC inverter is usually insufficient to support the electrical device to work. The value I1 is relatively large, representing that the load is greater than 200 W. As a response, then, the output of the energy storage device is switched to a DC power, and a current value I2 is detected after a particular time. In this case, the value I2 is less than the I1 value. After a DC power is connected, the primary of the transformer used as a power supply is controlled to short circuit, and the primary of the transformer has relatively large internal resistance. Therefore, the actual value I2 is relatively small. In conclusion, if I1 is much greater than I2, or the output power of the energy storage system exceeds the DC-AC the rated power of the inverter during output of the AC, during a DC output, the power significantly reduces or become even less than the DC-AC the rated power of the inverter. This represents that the electrical device includes a transformer for controlling a power supply, and the energy storage device stops an electrical energy output.

In another case, if the electrical device is in a standby state, when the electrical device is started, the DC-AC inverter can support standby of the electrical device, the I1 value is relatively small, and the energy storage system continues outputting an AC power. After a particular time, it is detected that the parameter value reaches the preset condition, the electrical device switches to a working state, the main power consumption device is started, and subsequent processing is the same as that in the first case.

The following describes another embodiment of the present disclosure.

In this embodiment, the energy storage system can supply power to an AC power network. Typically, during outage, an indoor emergency power is supplied to a home. Specifically, the energy storage system has one adapter joined to an AC power network. The adapter includes an input terminal, a transmission cable 235-II, and an output terminal. The input terminal matches an AC output interface of the energy storage system. The output terminal matches a socket of the AC power network. When the AC output interface of the energy storage system is also a standard AC socket, the input terminal and the output terminal of the adapter are both male AC plugs.

In this way, during outage, the adapter is used to connect the energy storage system to a receptacle in a power grid. AC electrical energy output by the energy storage system passes through the adapter and is transferred from the receptacle of the power grid to other receptacles in an indoor power grid. The other receptacles are live and can be normally used, so as to maintain normal indoor power supply.

In an embodiment of the present disclosure, the energy storage system includes the battery pack and a base. A projector is integrated on the base. The battery pack is one or more battery packs whose total voltages are 120 V (that is, six 20V standard battery units are built in one battery pack), or is 2 or more battery packs whose total voltages are 60 V (that is, three 20V standard battery units are built in one battery pack).

In an embodiment of the present disclosure, the energy storage system includes the battery pack and a base. A radio is integrated on the base. The battery pack is one or more battery packs whose total voltages are 120 V (that is, six 20V standard battery units are built in one battery pack), or 2 or more battery packs whose total voltages are 60 V (that is, three 20V standard battery units are built in one battery pack).

In an embodiment of the present disclosure, the energy storage system includes a battery pack and a back pack. The multiple standard battery units are built in the battery pack. The back pack only includes a configured series-parallel circuit and an output interface for outputting a DC voltage. Typically, the battery pack is one or more battery packs whose total voltages are 120 V (that is, six 20V standard battery units are built in one battery pack), or 2 or more battery packs whose total voltages are 60 V (that is, three 20V standard battery units are built in one battery pack). A series-parallel circuit of back pack configures multiple standard battery units to form a 120V output voltage, so as to supply power to a 120V DC tool or a tool that is compatible with an AC-DC input. The DC tool and the tool include, but are not limited to, various handheld or push power tools, gardening tools, and desktop tools.

In an embodiment of the present disclosure, the energy storage system includes a battery pack and a back pack. The multiple standard battery units are built in the battery pack. The back pack only includes a series-parallel circuit and a DC output interface. The series-parallel circuit optionally has various series-parallel connection forms to enable the battery pack in the standard battery unit form to optionally output various DC voltages. The implementation forms of the series-parallel circuit are already described in detail in the foregoing embodiments, and are no longer repeated.

Typically, the battery pack is one or more battery packs whose total voltages are 120 V (that is, six 20V standard battery units are built in one battery pack), or 2 or more battery packs whose total voltages are 60 V (that is, three 20V standard battery units are built in one battery pack). The series-parallel circuit of the back pack configures multiple standard battery units to form 20V, 40V, and 120V output voltages, so as to supply power to various tools having 20V, 40V, and 120V input interfaces. The tool type is the same as that in the previous embodiment.

In an embodiment of the present disclosure, the energy storage system includes a battery pack and a base. The multiple standard battery units are built in the battery pack. The base includes one of the AC driving circuits 270-II in the foregoing embodiments. Therefore, the output interface on the base includes an AC output interface, and can output 120V AC electrical energy. The AC electrical energy may be one or more of a sinusoidal AC power or a square wave or trapezoidal wave AC power. In some variant embodiments, the AC output interface can output 120V or higher-voltage DC electrical energy. In some variant embodiments, the base further includes the DC output interface, and outputs 12V electrical energy, USB 5V electrical energy, 20V, 40V, 60V or 120V electrical energy, or the like. The implementation manners are similar to those in the foregoing embodiments.

In the present invention, in different embodiments, different element names are used for element having a same function or effect, for example, an electrical energy supply apparatus in some embodiments and a power supply system in some embodiments, or for another example, an electrical energy transmission apparatus in some embodiments and a power supply platform in some embodiments. A person skilled in the art may understand that when a specific element name appears at any position in this application document, the meaning of the element name at least covers elements having a same function or effect in all the embodiments of the present invention.

In the present disclosure, a voltage value such as 20 V, 40 V, 60 V, 80 V or 120 V may be a nominal voltage or a full voltage. For a cell, the nominal voltage means a nominal voltage in a cell specification, for example, about 3.6 V The full voltage means a charging cut-off voltage in a standard charge, for example, about 4.0 V. When a specific voltage value is mentioned in the present disclosure, the value means the value itself and a value within a ± 15% range of the value. For example, 17 V to 23 V are all within the range of a voltage value of 20 V

The conversion circuit in the present disclosure may be any circuit that changes a value relationship between an input voltage and an output voltage, and is, for example, a transformer, a DC/DC circuit or a series-parallel circuit. The meaning of a recognition terminal in the present invention at least covers a recognition terminal and a sensing component in the embodiments.

## Claims

1. An electrical energy supply apparatus comprising:
a main body (1-I, 1-II, 1-III);
multiple cells disposed in the main body (1-I, 1-II, 1-III), where a product of a nominal voltage of each cell and a quantity of the cells is greater than or equal to 60 V;
an electrical energy output device (9-I, 61-II, 30-III) comprising a flexible connection apparatus, where an input end of the flexible connection apparatus is electrically connected to the cells, an electrical energy output interface (91-I, 65-II, 37-III) is disposed at an output end of the flexible connection apparatus and the electrical energy output interface (91-I, 65-II, 37-III) is connectable to an external power tool (50-I, 100-II, 200-III) to supply electrical energy to the external power tool (50-I, 100-II, 200-III); and
a conversion circuit, converting a voltage of a cell into an output voltage of the electrical energy output interface (91-I, 65-II, 37-III), where when the conversion circuit is in a first state, the electrical energy output interface (91-I, 65-II, 37-III) outputs a first voltage, when the conversion circuit is in a second state, the electrical energy output interface outputs a second voltage, and the first voltage is less than the second voltage;
the cells form at least two standard battery units;
the conversion circuit comprising a series-parallel circuit including a switch device, wherein a quantity of the switch devices is less than a quantity of the standard battery units by one, wherein the switch device is disposed between two adjoined standard battery units,
each switch device including two relays, separately forming the first subswitch and the second subswitch, wherein the first subswitch and the second subswitch are linked via an optical coupler, wherein when the first subswitch is turned on, the optical coupler is triggered to enable the second subswitch to be turned on.

2. The electrical energy supply apparatus according to claim 1, **characterized in that** the electrical energy output interface (9-I, 61-II, 30-III) matches a battery pack mounting interface of the external power tool.

3. The electrical energy supply apparatus according to claim 2, **characterized in that** the electrical energy output interface (9-I, 61-II, 30-III) is detachably connected to the flexible connection apparatus.

4. The electrical energy supply apparatus according to claim 1, **characterized in that** the electrical energy supply apparatus further comprises a wearable component connected to the main body (1-I, 1-II, 1-III) and the wearable component comprises a shoulder belt and/or a waist belt.

5. The electrical energy supply apparatus according to claim 1, **characterized in that** the electrical energy supply apparatus further comprises at least one battery pack housing, wherein the multiple cells are received in the at least one battery pack housing, wherein the battery pack housing comprises a battery pack interface (31-I) and the battery pack interface (31-I) matches the battery pack mounting interface of the external power tool (50-I, 100-II, 200-III), wherein at least one battery pack receiving recess (5-I) is disposed at the main body (1-I, 1-II, 1-III), wherein the battery pack receiving recess (5-I) comprises a receiving interface matching the battery pack interface (31-I) and the battery pack housing is detachably mounted at the battery pack receiving recess (5-I).

6. The electrical energy supply apparatus according to claim 5, comprising one battery pack housing and multiple standard battery units (51-III) located in the battery pack housing, wherein the standard battery units (51-III) are the same as each other, are electrically isolated from each other, and all have independent positive and negative electrodes (19-III), and a rated voltage of each standard battery unit 51-III is 20V.

7. The electrical energy supply apparatus according to claim 1, comprising an input component (11-II), an output component (13-II) and an adapter component located between the input component and the output component to convert electrical energy into a suitable form and to provide the electrical energy in the suitable form to the output component via series or parallel configuration to output different voltages to the output component in different scenarios.

8. The electrical energy supply apparatus according to claim 7 wherein the adaptor component enables six cells via series and/or parallel configuration to output voltages such as 20V, 40V, 60V, 80V, 100V and 120V.

9. The electrical energy supply apparatus according to claim 5, further comprising a conversion circuit to convert a voltage of a cell into an output voltage of the electrical energy output interface, wherein when the conversion circuit is in a first state, the electrical energy output interface outputs a first voltage, when the conversion circuit is in a second state, the electrical energy output interface outputs a second voltage, and the first voltage is less than the second voltage.

10. The electrical energy supply apparatus according to claim 8 further comprising monitoring apparatus to monitor a signal at the electrical energy output interface and to adjust the output voltage of the electrical energy output interface according to a signal detected by the monitoring apparatus.

11. The electrical energy supply apparatus according to claim 5, **characterized in that** the main body comprises a bag body (13-I) and a cover (11-I), wherein the battery pack receiving recess (5-I) is disposed in the bag body (13-I), the cover (11-I) operatively closes and opens the bag body (13-I), and the cover (11-I) comprises a waterproof layer.

12. The electrical energy supply apparatus according to claim 1, **characterized in that** the electrical energy supply apparatus further comprises a charger (73-III) for charging a received battery pack, wherein the charger (73-III) comprises a charging interface that can be connected to an external power supply.

## Patentansprüche

1. Elektrische Energieversorgungseinrichtung, umfassend:
einen Hauptkörper (1-I,1-II,1-III);
mehrere Zellen, die in dem Hauptkörper (1-I, 1-II, 1-III) angeordnet sind, wo ein Produkt einer Nennspannung jeder Zelle und einer Menge der Zellen größer als oder gleich 60 V ist;
eine elektrische Energieausgangsvorrichtung (9-I, 61-II, 30-III), die eine flexible Verbindungseinrichtung umfasst, wo ein Eingangsende der flexiblen Verbindungseinrichtung elektrisch mit den Zellen verbunden ist, ein elektrischer Energieausgangsanschluss (91-I, 65-II, 37-III) an einem Ausgangsende der flexiblen Verbindungseinrichtung angeordnet ist und der elektrische Energieausgangsanschluss (91-I, 65-II, 37-III) mit einem externen Elektrowerkzeug (50-I, 100-II, 200-III) verbunden werden kann, um das externe Elektrowerkzeug (50-I, 100-II, 200-III) mit elektrischer Energie zu versorgen; und
eine Wandlerschaltung, die eine Spannung einer Zelle in eine Ausgangsspannung des elektrischen Energieausgangsanschlusses (91-I, 65-II, 37-III) umwandelt, wo, wenn die Wandlerschaltung sich in einem ersten Zustand befindet, der elektrische Energieausgangsanschluss (91-I, 65-II, 37-III) eine erste Spannung ausgibt, wenn die Wandlerschaltung sich in einem zweiten Zustand befindet, der elektrische Energieausgangsanschluss eine zweite Spannung ausgibt, und die erste Spannung geringer als die zweite Spannung ist;
die Zellen zumindest zwei Standardbatterieeinheiten bilden;
die Wandlerschaltung eine seriell-parallele Schaltung umfasst, die eine Schaltvorrichtung beinhaltet, wobei eine Menge der Schaltvorrichtungen um eins geringer als eine Menge der Standardbatterieeinheiten ist, wobei die Schaltvorrichtung zwischen zwei angrenzenden Standardbatterieeinheiten angeordnet ist,
jede Schaltvorrichtung zwei Relais beinhaltet, die separat den ersten Unterschalter und den zweiten Unterschalter bilden, wobei der erste Unterschalter und der zweite Unterschalter mittels eines optischen Kopplers gekoppelt sind, wobei, wenn der erste Unterschalter eingeschaltet wird, der optische Koppler ausgelöst wird, um zu ermöglichen, dass der zweite Unterschalter eingeschaltet wird.

2. Elektrische Energieversorgungseinrichtung nach Anspruch 1, **dadurch gekennzeichnet, dass** der elektrische Energieausgangsanschluss (9-I, 61-II, 30-III) mit einem Batteriepackmontageanschluss des externen Elektrowerkzeugs zusammenpasst.

3. Elektrische Energieversorgungseinrichtung nach Anspruch 2, **dadurch gekennzeichnet, dass** der elektrische Energieausgangsanschluss (9-I, 61-II, 30-III) abnehmbar mit der flexiblen Verbindungseinrichtung verbunden ist.

4. Elektrische Energieversorgungseinrichtung nach Anspruch 1, **dadurch gekennzeichnet, dass** die elektrische Energieversorgungseinrichtung weiter eine tragbare Komponente umfasst, die mit dem Hauptkörper (1-I, 1-II, 1-III) verbunden ist, und die tragbare Komponente einen Schultergurt und/oder einen Hüftgurt umfasst.

5. Elektrische Energieversorgungseinrichtung nach Anspruch 1, **dadurch gekennzeichnet, dass** die elektrische Energieversorgungseinrichtung weiter zumindest ein Batteriepackgehäuse umfasst, wobei die mehreren Zellen in dem zumindest einen Batteriepackgehäuse aufgenommen werden, wobei das Batteriepackgehäuse einen Batteriepackanschluss (31-I) umfasst und der Batteriepackanschluss (31-I) mit dem Batteriepackmontageanschluss des externen Elektrowerkzeugs (50-I, 100-II, 200-III) zusammenpasst, wobei zumindest eine Batteriepackaufnahmevertiefung (5-I) an dem Hauptkörper (1-I, 1-II, 1-III) angeordnet ist, wobei die Batteriepackaufnahmevertiefung (5-I) einen Aufnahmeanschluss umfasst, der mit dem Batteriepackanschluss (31-I) zusammenpasst und das Batteriepackgehäuse abnehmbar an der Batteriepackaufnahmevertiefung (5-I) montiert ist.

6. Elektrische Energieversorgungseinrichtung nach Anspruch 5, die ein Batteriepackgehäuse und mehrere Standardbatterieeinheiten (51-III), die in dem Batteriepackgehäuse liegen, umfasst, wobei die Standardbatterieeinheiten (51-III) dieselben sind, elektrisch voneinander isoliert sind und alle unabhängig positive und negative Elektroden (19-III) aufweisen und eine Bemessungsspannung jeder Standardbatterieeinheit 51-III 20V beträgt.

7. Elektrische Energieversorgungseinrichtung nach Anspruch 1, umfassend eine Eingangskomponente (11-II), eine Ausgangskomponente (13-II) und eine Adapterkomponente, die zwischen der Eingangskomponente und der Ausgangskomponente liegt, um elektrische Energie in eine geeignete Form umzuwandeln, um die elektrische Energie in der geeigneten Form mittels serieller oder paralleler Konfiguration an die Ausgangskomponente bereitzustellen, um in unterschiedlichen Szenarien unterschiedliche Spannungen an die Ausgangskomponente auszugeben.

8. Elektrische Energieversorgungseinrichtung nach Anspruch 7, wobei die Adapterkomponente sechs Zellen ermöglicht, mittels serieller und/oder paralleler Konfiguration Spannungen, wie 20V, 40V, 60V, 80V, 100V und 120V, auszugeben.

9. Elektrische Energieversorgungseinrichtung nach Anspruch 5, weiter umfassend eine Wandlerschaltung, um eine Spannung einer Zelle in eine Ausgangsspannung des elektrischen Energieausgangsanschlusses umzuwandeln, wobei, wenn die Wandlerschaltung sich in einem ersten Zustand befindet, der elektrische Energieausgangsanschluss eine erste Spannung ausgibt, wenn die Wandlerschaltung sich in einem zweiten Zustand befindet, der elektrische Energieausgangsanschluss eine zweite Spannung ausgibt, und die erste Spannung geringer als die zweite Spannung ist.

10. Elektrische Energieversorgungseinrichtung nach Anspruch 8, weiter umfassend eine Überwachungseinrichtung, um ein Signal bei dem elektrischen Energieausgangsanschluss zu überwachen und die Ausgangsspannung des elektrischen Energieausgangsanschlusses gemäß einem Signal zu regeln, das von der Überwachungseinrichtung erfasst wird.

11. Elektrische Energieversorgungseinrichtung nach Anspruch 5, **dadurch gekennzeichnet, dass** der Hauptkörper einen Taschenkörper (13-I) und eine Abdeckung (11-I) umfasst, wobei die Batteriepackaufnahmevertiefung (5-I) in dem Taschenkörper (13-I) angeordnet ist, die Abdeckung (11-I) betriebsfähig den Taschenkörper (13-I) öffnet und schließt und die Abdeckung (11-I) eine wasserdichte Schicht umfasst.

12. Elektrische Energieversorgungseinrichtung nach Anspruch 1, **dadurch gekennzeichnet, dass** die elektrische Energieversorgungseinrichtung weiter ein Ladegerät (73-III) umfasst, um ein aufgenommenes Batteriepack zu laden, wobei das Ladegerät (73-III) einen Ladeanschluss umfasst, der mit einer externen Leistungsversorgung verbunden werden kann.

## Revendications

1. Appareil d'alimentation en énergie électrique comprenant :
un corps principal (1-I, 1-II, 1-III) ;
de multiples cellules disposées dans le corps principal (1-I, 1-II, 1-III), dans lequel un produit d'une tension nominale de chaque cellule et d'une quantité des cellules est supérieur ou égal à 60 V ;
un dispositif de sortie d'énergie électrique (9-I, 61-II, 30-III) comprenant un appareil de connexion flexible, dans lequel une extrémité d'entrée de l'appareil de connexion flexible est connectée électriquement aux cellules, une interface de sortie d'énergie électrique (91-I, 65-II, 37-III) est disposée au niveau d'une extrémité de sortie de l'appareil de connexion flexible et l'interface de sortie d'énergie électrique (91-I, 65-II, 37-III) peut être connectée à un outil électrique externe (50-I, 100-II, 200-III) pour alimenter en énergie électrique l'outil électrique externe (50-I, 100-II, 200-III) ; et
un circuit de conversion, convertissant une tension d'une cellule en une tension de sortie de l'interface de sortie d'énergie électrique (91-I, 65-II, 37-III), dans lequel lorsque le circuit de conversion est dans un premier état, l'interface de sortie d'énergie électrique (91-I, 65-II, 37-III) délivre une première tension, lorsque le circuit de conversion est dans un second état, l'interface de sortie d'énergie électrique délivre une seconde tension, et la première tension est inférieure à la seconde tension ;
les cellules forment au moins deux unités de batterie standard ;
le circuit de conversion comprenant un circuit série parallèle incluant un dispositif commutateur, dans lequel une quantité des dispositifs commutateurs est inférieure de un par rapport à une quantité des unités de batterie standard, dans lequel le dispositif commutateur est disposé entre deux unités de batterie standard attenantes,
chaque dispositif commutateur incluant deux relais, formant séparément le premier commutateur secondaire et le second commutateur secondaire, dans lequel le premier commutateur secondaire et le second commutateur secondaire sont liés via un coupleur optique, dans lequel lorsque le premier commutateur secondaire est activé, le coupleur optique est déclenché pour permettre au second commutateur secondaire d'être activé.

2. Appareil d'alimentation en énergie électrique selon la revendication 1, **caractérisé en ce que** l'interface de sortie d'énergie électrique (9-I, 61-II, 30-III) correspond à une interface de montage de bloc-batterie de l'outil électrique externe.

3. Appareil d'alimentation en énergie électrique selon la revendication 2, **caractérisé en ce que** l'interface de sortie d'énergie électrique (9-I, 61-II, 30-III) est connectée de manière détachable à l'appareil de connexion flexible.

4. Appareil d'alimentation en énergie électrique selon la revendication 1, **caractérisé en ce que** l'appareil d'alimentation en énergie électrique comprend en outre un composant à porter sur soi connecté au corps principal (1-I, 1-II, 1-III) et le composant à porter sur soi comprend une bandoulière et/ou une ceinture.

5. Appareil d'alimentation en énergie électrique selon la revendication 1, **caractérisé en ce que** l'appareil d'alimentation en énergie électrique comprend en outre au moins un boîtier de bloc-batterie, dans lequel les multiples cellules sont reçues dans le au moins un boîtier de bloc-batterie, dans lequel le boîtier de bloc-batterie comprend une interface de bloc-batterie (31-I) et l'interface de bloc-batterie (31-I) correspond à l'interface de montage de bloc-batterie de l'outil électrique externe (50-I, 100-II, 200-III), dans lequel au moins un évidement de réception de bloc-batterie (5-I) est disposé au niveau du corps principal (1-I, 1-II, 1-III), dans lequel l'évidement de réception de bloc-batterie (5-I) comprend une interface de réception correspondant à l'interface de bloc-batterie (31-I) et le boîtier de bloc-batterie est monté de manière détachable au niveau de l'évidement de réception de bloc-batterie (5-I).

6. Appareil d'alimentation en énergie électrique selon la revendication 5, comprenant un boîtier de bloc-batterie et de multiples unités de batterie standard (51-III) situées dans le boîtier de bloc-batterie, dans lequel les unités de batterie standard (51-III) sont identiques les unes aux autres, sont isolées électriquement les unes des autres et présentent toutes des électrodes positives et négatives indépendantes (19-III), et une tension nominale de chaque unité de batterie standard (51-III) est 20 V.

7. Appareil d'alimentation en énergie électrique selon la revendication 1, comprenant un composant d'entrée (11-II), un composant de sortie (13-II) et un composant adaptateur situé entre le composant d'entrée et le composant de sortie pour convertir l'énergie électrique sous une forme appropriée et pour fournir l'énergie électrique sous la forme appropriée au composant de sortie via une configuration en série ou parallèle pour délivrer différentes tensions au composant de sortie dans différents cas de figure.

8. Appareil d'alimentation en énergie électrique selon la revendication 7, dans lequel le composant adaptateur permet à six cellules via une configuration en série et/ou parallèle de délivrer des tensions telles que 20 V, 40 V, 60 V, 80 V, 100 V et 120 V.

9. Appareil d'alimentation en énergie électrique selon la revendication 5, comprenant en outre un circuit de conversion pour convertir une tension d'une cellule en une tension de sortie de l'interface de sortie d'énergie électrique, dans lequel lorsque le circuit de conversion est dans un premier état, l'interface de sortie d'énergie électrique délivre une première tension, lorsque le circuit de conversion est dans un second état, l'interface de sortie d'énergie électrique délivre une seconde tension, et la première tension est inférieure à la seconde tension.

10. Appareil d'alimentation en énergie électrique selon la revendication 8, comprenant en outre un appareil de surveillance pour surveiller un signal au niveau de l'interface de sortie d'énergie électrique et pour ajuster la tension de sortie de l'interface de sortie d'énergie électrique en fonction d'un signal détecté par l'appareil de surveillance.

11. Appareil d'alimentation en énergie électrique selon la revendication 5, **caractérisé en ce que** le corps principal comprend un corps de sac (13-I) et une housse (11-I), dans lequel l'évidement de réception de bloc-batterie (5-I) est disposé dans le corps de sac (13-1), la housse (11-I) ferme et ouvre de manière fonctionnelle le corps de sac (13-I), et la housse (11-I) comprend une couche imperméable à l'eau.

12. Appareil d'alimentation en énergie électrique selon la revendication 1, **caractérisé en ce que** l'appareil d'alimentation en énergie électrique comprend en outre un chargeur (73-III) pour charger un bloc-batterie reçu, dans lequel le chargeur (73-III) comprend une interface de charge qui peut être connectée à une alimentation électrique externe.
